# EUROPEAN PATENT APPLICATION

(11) **EP 4 537 971 A1**
(43) Date of publication of application: **16.04.2025**
(21) Application number: 22945821.1
(22) Date of filing: 09.06.2022
(51) Int. Cl.: B23K 26/342, B23K 26/00, B23K 26/34

(54) **PROCESSING SYSTEM AND PROCESSING METHOD**

(71) Applicant: NIKON CORPORATION, Tokyo 140-8601 (JP)
(72) Inventor: FUNATSU, Takayuki, Tokyo 140-8601 (JP); KITSUDA, Shin, Tokyo 140-8601 (JP)
(74) Representative: Hoffmann Eitle
(86) International application number: PCT/JP2022/023275
(87) International publication number: WO 2023/238319

(57) **Abstract**

A processing system includes: a processing apparatus for processing an object by irradiating the object with an energy beam to form a melt pool on the object and supplying a build material to the melt pool; an imaging apparatus for imaging the melt pool to generate a melt pool image; and a control apparatus for generating melt pool image information based on the melt pool image and for controlling the processing apparatus based on the melt pool image information so that a size of the melt pool is a target size, the melt pool image information is generated based on a plurality of melt pool images, the control apparatus changes, based on a processing condition of the object, an imaging condition for the imaging apparatus imaging the melt pool.

## Description

### Technical Field

The present invention relates to a technical field of a processing system and a processing method that are configured to process an object, for example.

### Background Art

A Patent literature 1 discloses one example of a processing system that processes an object. One technical problem of this processing system is to appropriately process the object.

### Citation List

### Patent Literature

Patent Literature 1: US2016/0311059A1

### Summary of Invention

A first aspect provides a processing system including: a processing apparatus that is configured to process an object by irradiating the object with an energy beam to form a melt pool on the object and supplying a build material to the melt pool; an imaging apparatus that is configured to generate a melt pool image by imaging the melt pool; and a control apparatus that is configured to generate melt pool image information based on the melt pool image generated by the imaging apparatus, and control the processing apparatus based on the melt pool image information so that a size of a melt pool area is a target size, wherein the melt pool image information is generated based on a plurality of melt pool images imaged by the imaging apparatus, and the control apparatus changes, based on a processing condition of the object by the processing apparatus, an imaging condition for the imaging apparatus imaging the melt pool.

A second aspect provides a processing system including: a processing apparatus that includes: a processing head that is configured to process an object by irradiating the object with an energy beam to form a melt pool on the object and supplying a build material to the melt pool; and a position change apparatus that is configured to change an irradiation position of the energy beam relative to the processing head; an imaging apparatus that is attached to the processing head and that is configured to generate a melt pool image by imaging the melt pool formed by the processing apparatus; and a control apparatus that is configured to generate melt pool image information based on the melt pool image generated by the imaging apparatus, and control the processing apparatus based on the melt pool image information so that a size of the melt pool area is a target size, wherein the melt pool image information is generated based on a plurality of melt pool images imaged by the imaging apparatus.

A third aspect provides a processing system including: a processing apparatus that is configured to process an object by irradiating the object with an energy beam to form a melt pool on the object and supplying a build material to the melt pool; an imaging apparatus that is configured to generate a melt pool image by imaging the melt pool; and a control apparatus that is configured to calculate a size of a melt pool area in the melt pool image based on a compared result of a signal value of the melt pool image and a predetermined threshold value, and control the processing apparatus so that the size of the melt pool area is a target size, wherein the control apparatus changes the predetermined threshold value based on a processing condition of the object by the processing apparatus.

A fourth aspect provides a processing system including: a processing apparatus that is configured to process an object by irradiating the object with an energy beam to form a melt pool on the object and supplying a build material to the melt pool; an imaging apparatus that is configured to generate a melt pool image by imaging the melt pool; and a control apparatus that is configured to generate melt pool image information based on the melt pool image generated by the imaging apparatus, and control the processing apparatus based on the melt pool image information so that a size of the melt pool area is a target size, wherein the control apparatus changes the target size based on a processing condition of the object by the processing apparatus.

A fifth aspect provides a processing system including: a processing apparatus that is configured to process an object by irradiating the object with an energy beam to form a melt pool on the object and supplying a build material to the melt pool; an imaging apparatus that is configured to generate a plurality of images by imaging an area including the melt pool a plurality of number of times; and a control apparatus that is configured to add signal values of the plurality of images by a unit of pixel, and detect at least one of a melt pool area in the image and a non-melt pool area in which at least one of emitted light and reflected light other than the melt pool is captured based on a compared result of a predetermined threshold value and an added result by a unit of pixel.

A sixth aspect provides a processing system including: a processing apparatus that is configured to process an object by irradiating the object with an energy beam to form a melt pool on the object and supplying a build material to the melt pool; an imaging apparatus that is configured to perform a multiple exposure of an area including the melt pool; and a control apparatus that is configured to detect at least one of a melt pool area in an image generated by the multiple exposure and a non-melt pool area in which at least one of emitted light and reflected light other than the melt pool is captured by comparing a result of the multiple exposure by the imaging apparatus and a predetermined threshold value.

A seventh aspect provides a processing system including: a processing apparatus that is configured to process an object by irradiating the object with an energy beam to form a melt pool on the object and supplying a build material to the melt pool; an imaging apparatus that is configured to generate a melt pool image by imaging the melt pool; a control apparatus that is configured to generate melt pool image information based on the melt pool image generated by the imaging apparatus, and control the processing apparatus based on the melt pool image information so that a size of a melt pool area is a target size; and a recording apparatus that is configured to record information related to the target size of the melt pool in association with a wobble condition of the energy beam, wherein the control apparatus controls the processing apparatus based on the target size of the melt pool acquired from the recording apparatus.

An eighth aspect provides a processing system including: a processing apparatus that is configured to process an object by irradiating the object with an energy beam to form a melt pool on the object and supplying a build material to the melt pool; an imaging apparatus that is configured to generate a melt pool image by imaging the melt pool; and a control apparatus, wherein the control apparatus is configured to acquire, based on the melt pool image generated by the imaging apparatus, shape information related to the melt pool that is successively formed at different positions by the energy beam, and controls the processing apparatus based on the shape information.

A ninth aspect provides a processing system including: a processing apparatus that is configured to process an object by irradiating the object with an energy beam to form a melt pool on the object and supplying a build material to the melt pool; an imaging apparatus that is configured to generate a melt pool image by imaging the melt pool; and a control apparatus, wherein the control apparatus is configured to acquire, based on the melt pool image generated by the imaging apparatus, center position information of the melt pool that is successively formed at different positions by the energy beam, and controls the processing apparatus based on the center position information.

A tenth aspect provides a processing system including: a processing apparatus that is configured to process an object by irradiating the object with an energy beam to form a melt pool on the object and supplying a build material to the melt pool; an imaging apparatus that is configured to generate a melt pool image by imaging the melt pool; and a control apparatus that is configured to generate melt pool image information based on the melt pool image generated by the imaging apparatus, and control the processing apparatus based on the melt pool image information so that a size of a melt pool area is a target size, wherein the melt pool image information is generated based on the melt pool image generated by a multiple exposure by the imaging apparatus, and the control apparatus changes, based on a processing condition of the object by the processing apparatus, a condition of the multiple exposure by the imaging apparatus.

A eleventh aspect provides a processing system including: a processing apparatus that includes: a processing head that is configured to process an object by irradiating the object with an energy beam to form a melt pool on the object and supplying a build material to the melt pool; and a position change apparatus that is configured to change an irradiation position of the energy beam relative to the processing head; an imaging apparatus that is attached to the processing head and that is configured to generate a melt pool image by imaging the melt pool formed by the processing apparatus; and a control apparatus that is configured to generate melt pool image information based on the melt pool image generated by the imaging apparatus, and control the processing apparatus based on the melt pool image information so that a size of the melt pool area is a target size, wherein the melt pool image information is generated based on a multiple exposure by the imaging apparatus.

A twelfth aspect provides a processing system including: a processing apparatus that is configured to irradiate an object with an energy beam to form a melt pool on the object; an imaging apparatus that is configured to generate a melt pool image by imaging the melt pool; and a control apparatus that is configured to generate melt pool image information based on the melt pool image generated by the imaging apparatus, and control the processing apparatus based on the melt pool image information, wherein the melt pool image information is generated based on a plurality of melt pool images imaged by the imaging apparatus, and the control apparatus changes, based on a processing condition of the object by the processing apparatus, an imaging condition for the imaging apparatus imaging the melt pool.

A thirteenth aspect provides a processing system including: a processing apparatus that includes: a processing head that is configured to process an object by irradiating the object with an energy beam to form a melt pool on the object; and a position change apparatus that is configured to change an irradiation position of the energy beam relative to the processing head; an imaging apparatus that is attached to the processing head and that is configured to generate a melt pool image by imaging the melt pool formed by the processing apparatus; and a control apparatus that is configured to generate melt pool image information based on the melt pool image generated by the imaging apparatus, and control the processing apparatus based on the melt pool image information.

A fourteenth aspect provides a processing system including: a processing apparatus that is configured to process an object by irradiating the object with an energy beam to form a melt pool on the object; an imaging apparatus that is configured to generate a melt pool image by imaging the melt pool; and a control apparatus that is configured to control the processing apparatus based on a compared result of a signal value of the melt pool image and a predetermined threshold value, wherein the control apparatus changes the predetermined threshold value based on a processing condition of the object by the processing apparatus.

A fifteenth aspect provides a processing system including: a processing apparatus that is configured to process an object by irradiating the object with an energy beam to form a melt pool on the object; an imaging apparatus that is configured to generate a melt pool image by imaging the melt pool; and a control apparatus that is configured to generate melt pool image information based on the melt pool image generated by the imaging apparatus, and control the processing apparatus based on the melt pool image information so that a size of the melt pool area is a target size, wherein the control apparatus changes the target size based on a processing condition of the object by the processing apparatus.

A sixteenth aspect provides a processing system including: a processing apparatus that is configured to process an object by irradiating the object with an energy beam to form a melt pool on the object; an imaging apparatus that is configured to generate a plurality of images by imaging an area including the melt pool a plurality of number of times; and a control apparatus that is configured to detect at least one of a melt pool area in the image and a non-melt pool area in which at least one of emitted light and reflected light other than the melt pool is captured based on an added result of signal values of the plurality of images by a unit of pixel.

A seventeenth aspect provides a processing system including: a processing apparatus that is configured to process an object by irradiating the object with an energy beam to form a melt pool on the object; an imaging apparatus that is configured to perform a multiple exposure of an area including the melt pool; and a control apparatus that is configured to detect at least one of a melt pool area in an image generated by the multiple exposure and a non-melt pool area in which at least one of emitted light and reflected light other than the melt pool is captured based on a compared result of a result of the multiple exposure by the imaging apparatus and a predetermined threshold value.

A eighteenth aspect provides a processing system including: a processing apparatus that is configured to process an object by irradiating the object with an energy beam to form a melt pool on the object; an imaging apparatus that is configured to generate a melt pool image by imaging the melt pool; a control apparatus that is configured to generate melt pool image information based on the melt pool image generated by the imaging apparatus, and control the processing apparatus based on the melt pool image information; and a recording apparatus that is configured to record information related to a target size of the melt pool in association with a wobble condition of the energy beam, wherein the control apparatus controls the processing apparatus based on the target size of the melt pool acquired from the recording apparatus.

A nineteenth aspect provides a processing system including: a processing apparatus that is configured to process an object by irradiating the object with an energy beam to form a melt pool on the object; an imaging apparatus that is configured to generate a melt pool image by imaging the melt pool; and a control apparatus, wherein the control apparatus is configured to acquire, based on the melt pool image generated by the imaging apparatus, shape information related to the melt pool that is successively formed at different positions by the energy beam, and controls the processing apparatus based on the shape information.

A twentieth aspect provides a processing system including: a processing apparatus that is configured to process an object by irradiating the object with an energy beam to form a melt pool on the object; an imaging apparatus that is configured to generate a melt pool image by imaging the melt pool; and a control apparatus, wherein the control apparatus is configured to acquire, based on the melt pool image generated by the imaging apparatus, center position information of the melt pool that is successively formed at different positions by the energy beam, and controls the processing apparatus based on the center position information.

A twenty-first aspect provides a processing system including: a processing apparatus that is configured to process an object by irradiating the object with an energy beam to form a melt pool on the object; an imaging apparatus that is configured to generate a melt pool image by imaging the melt pool; and a control apparatus that is configured to generate melt pool image information based on the melt pool image generated by the imaging apparatus, and control the processing apparatus based on the melt pool image information, wherein the melt pool image information is generated based on the melt pool image generated by a multiple exposure by the imaging apparatus, and the control apparatus changes, based on a processing condition of the object by the processing apparatus, a condition of the multiple exposure by the imaging apparatus.

A twenty-second aspect provides a processing system including: a processing apparatus that includes: a processing head that is configured to process an object by irradiating the object with an energy beam to form a melt pool on the object; and a position change apparatus that is configured to change an irradiation position of the energy beam relative to the processing head; an imaging apparatus that is attached to the processing head and that is configured to generate a melt pool image by imaging the melt pool formed by the processing apparatus; and a control apparatus that is configured to generate melt pool image information based on the melt pool image generated by the imaging apparatus, and control the processing apparatus based on the melt pool image information, wherein the melt pool image information is generated based on a multiple exposure by the imaging apparatus.

A twenty-third aspect provides a processing system including: a processing apparatus that is configured to irradiate an object with an energy beam to form a melt pool on the object, and thereby form a build object on the object along a target trajectory; an imaging apparatus that is configured to generate a melt pool image by imaging the melt pool; and a control apparatus that is configured to control the processing apparatus based on the melt pool image generated by the imaging apparatus, wherein forming the build object on the object along the target trajectory includes moving an irradiation position of the energy beam on a surface of the object along a scanning direction intersecting the target trajectory, the control apparatus controls the processing apparatus based on a plurality of melt pool images imaged by the imaging apparatus.

A twenty-fourth aspect provides a processing system including: a processing apparatus that is configured to irradiate an object with an energy beam to form a melt pool on the object; and an imaging apparatus that is configured to generate a melt pool image by imaging the melt pool, wherein the imaging apparatus is configured to image the melt pool existing on a first position at a first time and the melt pool existing on a second position different from the first position at a second time different from the first time.

An operation and another advantage of the present invention will be apparent from an example embodiment described below.

### Brief Description of Drawings

[FIG. 1] FIG. 1 is a cross-sectional view that illustrates a configuration of a processing system in a present example embodiment.
[FIG. 2] FIG. 2 is a block diagram that illustrates a configuration of the processing system in the present example embodiment.
[FIG. 3] FIG. 3 is a cross-sectional view that illustrates a configuration of an irradiation optical system.
[FIG. 4] FIG. 4(a) is a plan view that illustrates a movement trajectory of a target irradiation area in a processing unit area, and FIG. 4(b) is a plan view that illustrates a movement trajectory of the target irradiation area on a build surface.
[FIG. 5] Each of FIG. 5(a) and FIG. 5(b) is a plan view that illustrates a movement trajectory of the target irradiation area in the processing unit area, and FIG. 5(c) is a plan view that illustrates a movement trajectory of the target irradiation area on the build surface.
[FIG. 6] Each of FIG. 6(a) to FIG. 6(e) is a cross-sectional view that illustrates an aspect in which a certain area on a workpiece is irradiated with processing light and a build material is supplied thereto.
[FIG. 7] FIG. 7(a) is a plan view that illustrate a target movement trajectory of the processing unit area, and FIG. 7(b) is a plan view that illustrates a liner build object that is built on the build surface in a case where the processing unit area moves along the target movement trajectory illustrated in FIG. 7(a).
[FIG. 8] Each of FIG. 8(a) to FIG. 8(c) is a cross-sectional view that illustrates a process for building a three-dimensional structural object.
[FIG. 9] FIG. 9 is a flowchart that illustrates a flow of a melt pool feedback control operation based on a melt pool image.
[FIG. 10] FIG. 10 illustrates the melt pool image.
[FIG. 11] FIG. 11 illustrates an addition image that is generated by adding (namely, merging) a plurality of melt pool images.
[FIG. 12] FIG. 12 is a timing chart that illustrates a relationship between a size of a melt pool area and a target size.
[FIG. 13] FIG. 13 illustrates the melt pool image in which the melt pool area and non-melt pool area are captured.
[FIG. 14] FIG. 14 illustrates the plurality of melt pool images.
[FIG. 15] FIG. 15 illustrates the addition image that is generated by adding (namely, merging) the plurality of melt pool images illustrated in FIG. 14.
[FIG. 16] FIG. 16(a) is a timing chart that illustrates an imaging timing by an imaging unit, FIG. 16(b) is a timing chart that illustrates an exposure time by the imaging unit, and FIG. 16(c) is a timing chart that illustrates an imaging cycle and an imaging rate by the imaging unit.
[FIG. 17] FIG. 17 illustrates a histogram of a luminance value of the melt pool image in a case where an intensity of the processing light is a first intensity and a histogram of the luminance value of the melt pool image in a case where the intensity of the processing light is a second intensity.
[FIG. 18] FIG. 18 illustrates a histogram of the luminance value of the melt pool image in a case where the intensity of the processing light is the first intensity and a histogram of the luminance value of the melt pool image in a case where the intensity of the processing light is the second intensity.
[FIG. 19] FIG. 19 illustrates a histogram of the luminance value of the melt pool image in a case where a movement speed of the target irradiation area is a first speed and a histogram of the luminance value of the melt pool image in a case where the movement speed of the target irradiation area is a second speed.
[FIG. 20] FIG. 20 illustrates a histogram of the luminance value of the melt pool image in a case where the movement speed of the target irradiation area is the first speed and a histogram of the luminance value of the melt pool image in a case where the movement speed of the target irradiation area is the second speed.
[FIG. 21] FIG. 21(a) illustrates a histogram of the luminance value of the melt pool image in a case where the intensity of the processing light is the first intensity, FIG. 21(b) illustrates a histogram of the luminance value of the melt pool image in a case where the intensity of the processing light is the second intensity and the addition frame number is not changed, and FIG. 21(c) illustrates a histogram of the luminance value of the melt pool image in a case where the intensity of the processing light is the second intensity and the addition frame number is changed.
[FIG. 22] FIG. 22(a) illustrates a histogram of the luminance value of the melt pool image in a case where the intensity of the processing light is the first intensity, FIG. 22(b) illustrates a histogram of the luminance value of the melt pool image in a case where the intensity of the processing light is the second intensity and the addition frame number is not changed, and FIG. 22(c) illustrates a histogram of the luminance value of the melt pool image in a case where the intensity of the processing light is the second intensity and the addition frame number is changed.

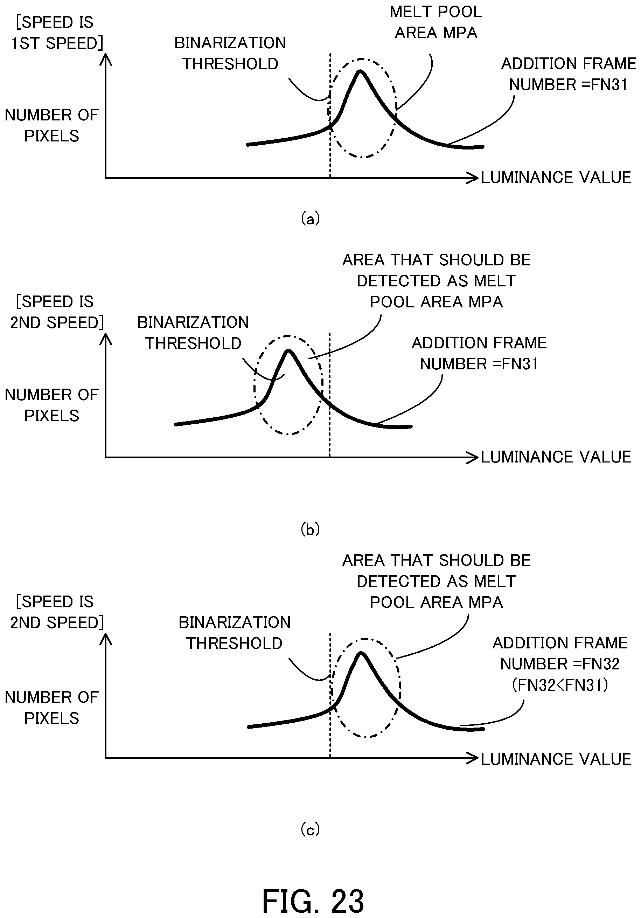

[FIG. 23] FIG. 23(a) illustrates a histogram of the luminance value of the melt pool image in a case where the movement speed of the target irradiation area is the first speed, FIG. 23(b) illustrates a histogram of the luminance value of the melt pool image in a case where the movement speed of the target irradiation area is the second speed and the addition frame number is not changed, and FIG. 23(c) illustrates a histogram of the luminance value of the melt pool image in a case where in a case where the movement speed of the target irradiation area is the second speed and the addition frame number is changed.

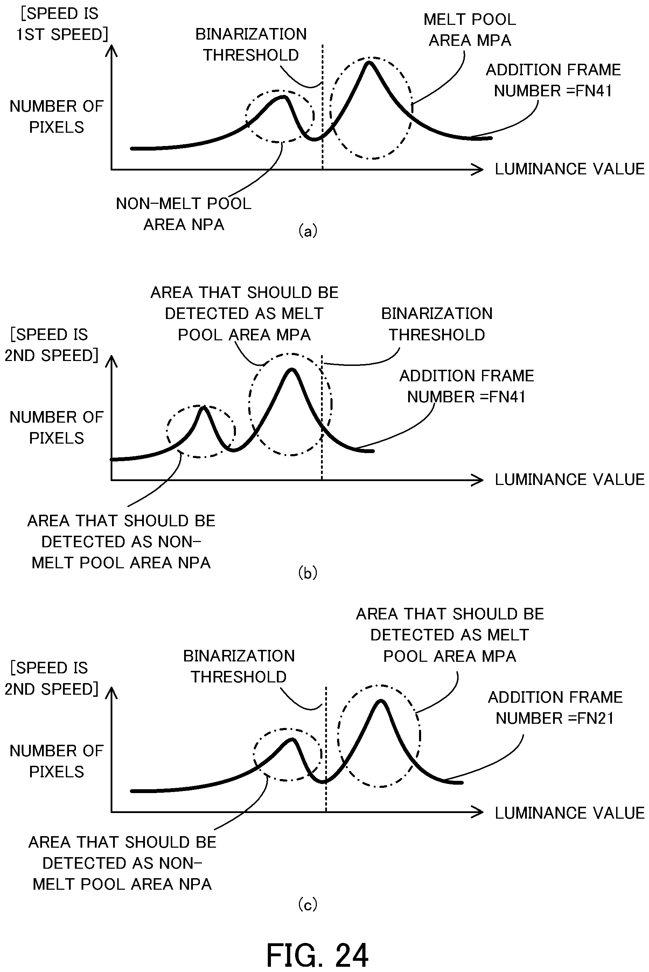

[FIG. 24] FIG. 24(a) illustrates a histogram of the luminance value of the melt pool image in a case where the movement speed of the target irradiation area is the first speed, FIG. 24(b) illustrates a histogram of the luminance value of the melt pool image in a case where the movement speed of the target irradiation area is the second speed and the addition frame number is not changed, and FIG. 24(c) illustrates a histogram of the luminance value of the melt pool image in a case where in a case where the movement speed of the target irradiation area is the second speed and the addition frame number is changed.
[FIG. 25] FIG. 25 is a timing chart that illustrates the relationship between the size of the melt pool area and the target size.
[FIG. 26] Each of FIG. 26(a) and FIG. 26(b) illustrates a shape of the melt pool area.
[FIG. 27] Each of FIG. 27(a) to FIG. 27(b) is a cross-sectional view that illustrates the liner build object that is built in a case where the melt pool area illustrated in FIG. 26(a) is detected, and Each of FIG. 27(c) to FIG. 27(d) is a cross-sectional view that illustrates the liner build object that is built in a case where the melt pool area illustrated in FIG. 26(b) is detected.
[FIG. 28] FIG. 28(a) illustrates a movement trajectory of the melt pool area, FIG. 28(b) is a cross-sectional view that illustrates the liner build object that is built in a case where the melt pool area illustrated in FIG. 28(a) is detected, FIG. 28(c) illustrates the movement trajectory of the melt pool area, FIG. 28(d) is a cross-sectional view that illustrates the liner build object that is built in a case where the melt pool area illustrated in FIG. 28(c) is detected, and FIG. 28(e) illustrates the movement trajectory of the melt pool area.
[FIG. 29] FIG. 29 is a cross-sectional view that illustrates a center position of the melt pool area in the process of stacking a plurality of liner build objects.

### Description of Example embodiments

Next, with reference to drawings, an example embodiment of a processing system and a processing method will be described. In the below-described description, the example embodiment of the processing system and the processing method will be described by using a processing system SYS that is configured to process a workpiece W that is one example of an object. Especially, in the below-described description, the example embodiment of the processing system and the processing method will be described by using the processing system SYS that is configured to perform an additive manufacturing based on a Laser Metal Deposition (LMD). The additive manufacturing based on the Laser Metal Deposition is an additive manufacturing for building a build object that is integrated with the workpiece W or separatable from the workpiece W by melting a build material M supplied to the workpiece W with processing light EL (namely, an energy beam in a form of light).

Moreover, in the below-described description, a positional relationship of various components included in the processing system SYS will be described by using an XYZ rectangular coordinate system that is defined by an X-axis, a Y-axis and a Z-axis that are orthogonal to one another. Note that each of an X-axis direction and a Y-axis direction is assumed to be a horizontal direction (namely, a predetermined direction in a horizontal plane) and a Z-axis direction is assumed to be a vertical direction (namely, a direction that is orthogonal to the horizontal plane, and substantially a vertical direction) in the below-described description, for convenience of the description. Moreover, rotational directions (in other words, inclination directions) around the X-axis, the Y-axis and the Z-axis are referred to as a θX direction, a θY direction and a θZ direction, respectively. Here, the Z-axis direction may be a gravity direction. Moreover, an XY plane may be a horizontal direction.

### (1) Configuration of Processing System SYS

### (1-1) Entire Configuration of Processing System SYS

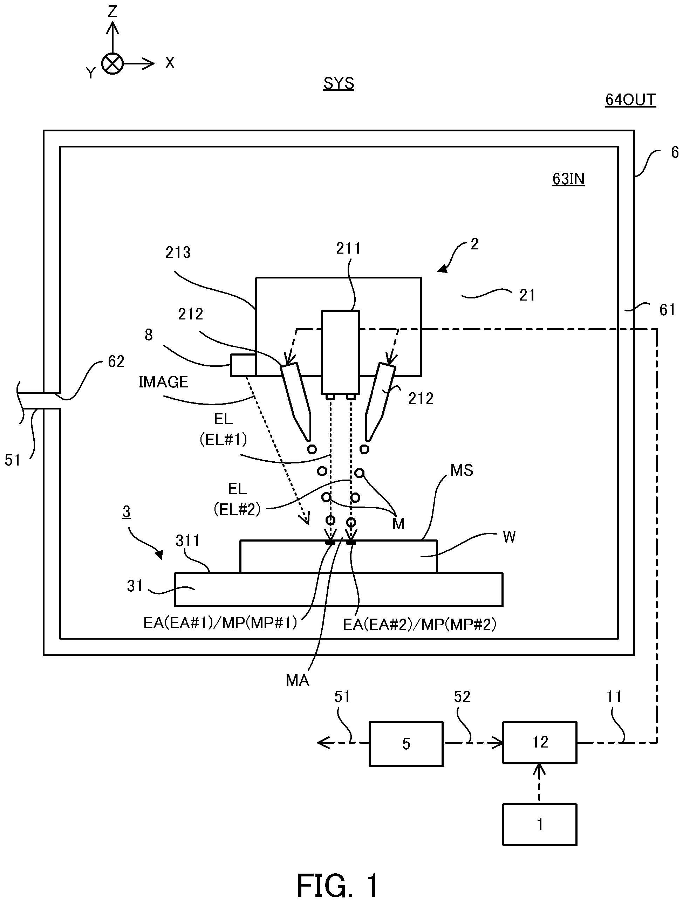

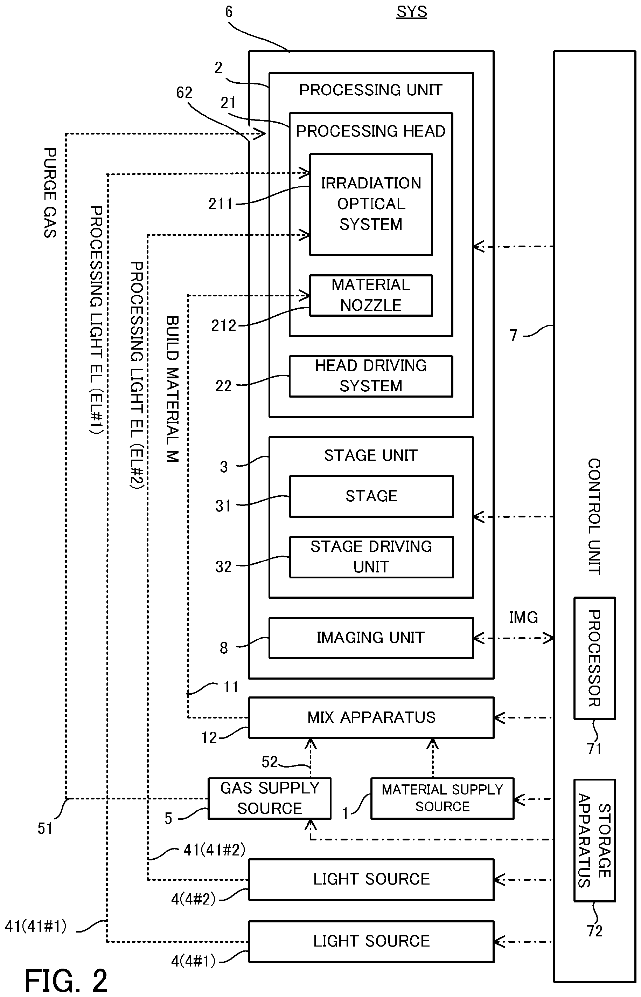

First, with reference to FIG. 1 to FIG. 2, a configuration of the processing system SYS in the present example embodiment will be described. FIG. 1 is a cross-sectional view that schematically illustrates the configuration of the processing system SYS in the present example embodiment. FIG. 2 is a system configuration diagram that illustrates a system configuration of the processing system SYS in the present example embodiment.

The processing system SYS is configured to perform the additive manufacturing on the workpiece W. The processing system SYS is configured to build the build object integrated with (alternatively, separatable from) the workpiece W by performing the additive manufacturing on the workpiece W. In this case, the additive manufacturing performed on the workpiece W corresponds to a processing for adding, to the workpiece W, the build object integrated with (alternatively, separatable from) the workpiece W. Note that the build object in the present example embodiment may mean any object built by the processing system SYS. For example, the processing system SYS is configured to build a three-dimensional structural object ST (namely, a three-dimensional object having a size in each of three-dimensional directions, a solid object, in other words, an object having a size in the X-axis direction, the Y-axis direction, and the Z-axis direction) as one example of the build object.

In a case where the workpiece W is a below-described stage 31, the processing system SYS is configured to perform the additive manufacturing on the stage 31. In a case where the workpiece W is a placed object that is an object placed on the stage 31, the processing system SYS is configured to perform the additive manufacturing on the placed object. The placed object placed on the stage 31 may be another three-dimensional structural object ST built by the processing system SYS (namely, an existing structural object). Note that FIG. 1 illustrates an example in which the workpiece W is the existing structural object placed on the stage 31. Moreover, in the below-described description, the example in which the workpiece W is the existing structural object placed on the stage 31 will be described.

The workpiece W may be an item that needs to be repaired having a missing part. In this case, the processing system SYS may perform a repair processing for repairing the item that needs to be repaired by performing the additive manufacturing for building the build object for filling in the missing part. Namely, the additive manufacturing performed by the processing system SYS may include the additive manufacturing for adding, to the workpiece W, the build object for filling in the missing part.

As described above, the processing system SYS is configured to perform the additive manufacturing based on the Laser Metal Deposition. Namely, it can be said that the processing system SYS is a 3D printer that builds an object by using an Additive Layer Manufacturing technique. Note that the Additive Layer Manufacturing technique may be referred to as a Rapid Prototyping, a Rapid Manufacturing, or an Additive Manufacturing. Note that the Laser Metal Deposition (LMD) may be referred to as a DED (Directed Energy Deposition).

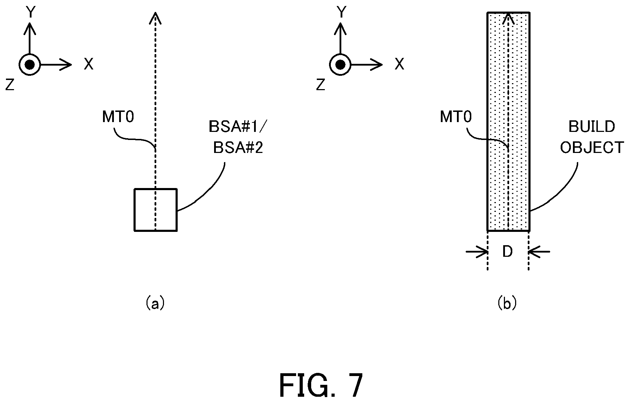

A processing system SYS that uses the Additive Layer Manufacturing technique builds the three-dimensional structural object ST in which a plurality of structural layers SL (see FIG. 7 below) are stacked by forming the plurality of structural layers SL in sequence. In this case, the processing system SYS first sets a surface of the workpiece W to be a build surface MS on which the build object is actually built, and builds a first structural layer SL on the build surface MS. Then, the processing system SYS sets a surface of the first structural layer SL to be a new build surface MS, and builds a second structural layer SL on the build surface MS. Then, the processing system SYS repeats the same operation to build the three-dimensional structural object ST in which the plurality of structural layers SL are stacked.

The processing system SYS performs the additive manufacturing by processing the build material M with the processing light EL that is an energy beam. The build material M is a material that is molten by an irradiation with the processing light EL having a predetermined intensity or more intensity. At least one of a metal material and a resin material is usable as the build material M, for example. At least one of a material including copper, a material including tungsten, and a material including stainless steel is one example of the metal material. However, another material that is different from the metal material and the resin material may be used as the build material M. The build material M is a powder-like material. Namely, the build material M is a powdery material. However, the build material M may not be the powdery material. For example, at least one of a wired-like build material and a gas-like build material may be used as the build material M.

The workpiece W may be also an object including a material that is molten by an irradiation with the processing light EL having a predetermined intensity or more intensity. The material of the workpiece W may be the same as or may be different from the build material M. At least one of a metal material and a resin material is usable as the material of the workpiece W, for example. At least one of a material including copper, a material including tungsten, and a material including stainless steel is one example of the metal material. However, another material that is different from the metal material and the resin material may be used as the material of the workpiece W.

In order to perform the additive manufacturing, the processing system SYS includes a material supply source 1, a processing unit 2, a stage unit 3, a light source 4, a gas supply source 5, a control unit 7, and an imaging unit 8 as illustrated in FIG. 1 to FIG. 2. The processing unit 2 and the stage unit 3 may be contained in a chamber space 63IN in a housing 6. In this case, the processing system SYS may perform the additive manufacturing in the chamber space 63IN. Note that at least one of the processing unit 2 and the stage unit 3 may not be contained in the chamber space 63IN in the housing 6.

Incidentally, the processing unit 2 may be referred to as a processing apparatus. An apparatus including the processing unit 2 and at least one of the material supply source 1, the stage unit 3, the light source 4, and the gas supply source 5 may be referred to as a processing apparatus. The control unit 7 may be referred to as a control apparatus. The imaging unit 8 may be referred to as an imaging apparatus.

The material supply source 1 is configured to supply the build material M to the processing unit 2. The material supply source 1 supplies, to the processing unit 2, the build material M the amount of which is necessary for performing the additive manufacturing per unit time by supplying the build material M the amount of which is based on the necessary amount.

The processing unit 2 builds the build object by processing the build material M supplied from the material supply source 1. In order to build the build object, the processing unit 2 includes a processing head 21, and a head driving system 22. Furthermore, the processing head 21 includes an irradiation optical system 211, and a plurality of material nozzles 212. However, the processing head 21 may include a plurality of irradiation optical systems 211. The processing head 21 may include a single material nozzle 212.

The irradiation optical system 211 is an optical system for emitting the processing light EL. Specifically, the irradiation optical system 211 is optically connected to the light source 4 that emits (generates) the processing light EL through a light transmitting member 41. At least one of an optical fiber and a light pipe is one example of the light transmitting member 41.

In the example illustrated in FIG. 1 to FIG. 2, the processing system SYS includes two light sources 4 (specifically, light sources 4#1 and 4#2), and the irradiation optical system 211 are optically connected to the light sources 4#1 and 4#2 through the light transmitting members 41#1 and 41#2, respectively. The irradiation optical systems 211 emits both of the processing light EL transmitted from the light source 4#1 through the light transmitting member 41#1 and the processing light EL transmitted from the light source 4#2 through the light transmitting member 41#2. Incidentally, in the below-described description, in a case where it is necessary to distinguish the two processing lights EL emitted from the two irradiation optical systems 211, the processing light EL generated by the light source 4#1 is referred to as "processing light EL#1", and the processing light EL generated by the light source 4#2 is referred to as "processing light EL#2", as necessary.

However, the processing system SYS may include a single light source 4 instead of the plurality of light sources 4. The irradiation optical system 211 may emit single processing light EL instead of emitting the plurality of processing lights EL.

The irradiation optical system 211 emits the processing lights EL in a downward direction (namely, toward a -Z side) from the irradiation optical system 211. The stage 31 is positioned below the irradiation optical system 211. In a case where the workpiece W is placed on the stage 31, the irradiation optical system 211 irradiates the build surface MS with the emitted processing lights EL. Specifically, the irradiation optical system 211 is configured to irradiate a target irradiation area (a target irradiation position) EA, which is set on the build surface MS as an area that is irradiated with the processing lights EL (typically, in which the lights are condensed), with the processing lights EL. Incidentally, in the below-described description, in a case where it is necessary to distinguish two target irradiation areas EA that are irradiated with the two processing lights EL by the irradiation optical system 211, respectively, the target irradiation area EA that is irradiated with the processing light EL#1 by the irradiation optical system 211 is referred to as a "target irradiation area EA#1" and the target irradiation area EA that is irradiated with the processing light EL#2 by the irradiation optical system 211 is referred to as a "target irradiation area EA#2", as necessary. Furthermore, a state of the irradiation optical system 211 is switchable between a state where the target irradiation areas EA are irradiated with the processing lights EL and a state where the target irradiation areas EA are not irradiated with the processing lights EL under the control of the control unit 7. Note that a direction of the processing lights EL emitted from the irradiation optical system 211 is not limited to a direct downward direction (namely, coincident with the -Z-axis direction), and may be a direction that is inclined with respect to the Z-axis by a predetermined angle, for example. Namely, a third optical system 216 described below (alternatively, a fθ lens 2162 described below) is not limited to an optical system that is telecentric on the object side, but may be an optical system that is non-telecentric on the object side.

The irradiation optical system 211 may form a melt pool MP on the build surface MS by irradiating the build surface MS with the processing light EL. For example, the irradiation optical system 211 may form a melt pool MP#1 on the build surface MS by irradiating the build surface MS with the processing light EL#1. For example, the irradiation optical system 211 may form a melt pool MP#2 on the build surface MS by irradiating the build surface MS with the processing light EL#2. The melt pool MP#1 and the melt pool MP#2 may be integrated. Alternatively, the melt pool MP#1 and the melt pool MP#2 may be separated from each other. However, the melt pool MP#1 may not be formed on the build surface MS by the irradiation with the processing light EL#1. The melt pool MP#2 may not be formed on the build surface MS by the irradiation with the processing light EL#2.

The material nozzle 212 supplies (for example, injects, jets, blows out or sprays) the build material M. The material nozzle 212 is physically connected to the material supply source 1, which is a supply source of the build material M, through a supply pipe 11 and a mix apparatus 12. The material nozzle 212 supplies the build material M supplied from the material supply source 1 through the supply pipe 11 and the mix apparatus 12. The material nozzle 212 may pressure-feed the build material M supplied from the material supply source 1 through the supply pipe 11. Namely, the build material M from the material supply source 1 and gas for feeding (namely, pressure-feed gas, and inert gas such as Nitrogen or Argon, for example) may be mixed by the mix apparatus 12 and then pressure-fed to the material nozzle 212 through the supply pipe 11. As a result, the material nozzle 212 supplies the build material M together with the gas for feeding. Purge gas supplied from the gas supply source 5 is used as the gas for feeding, for example. However, gas supplied from a gas supply source that is different from the gas supply source 5 may be used as the gas for feeding. Note that the material nozzle 212 is illustrated to have a tube-like shape in FIG. 1, however, a shape of the material nozzle 212 is not limited to this shape. The material nozzle 212 supplies the build material M in a downward direction (namely, toward the -Z side) from the material nozzle 212. The stage 31 is positioned below the material nozzle 212. In a case where the workpiece W is placed on the stage 31, the material nozzle 212 supplies the build material M toward the build surface MS. Note that a supply direction of the build material M supplied from the material nozzle 212 is a direction that is inclined with respect to the Z-axis by a predetermined angle (as one example, an acute angle), however, it may be the -Z-axis direction (namely, a direct downward direction).

In the present example embodiment, the material nozzle 212 supplies the build material M to a position that is irradiated with at least one of the processing lights EL#1 and EL#2 (namely, at least one of the target irradiation areas EA#1 and EA#2). Therefore, the material nozzle 212 and the irradiation optical system 211#1 and 211#2 are aligned so that a target supply area MA, which is set on the build surface MS as an area to which the material nozzle 212 supplies the build material M, overlaps with at least one of the target irradiation areas EA#1 and EA#2 at least partially. A size of the target supply area MA may be larger than, may be smaller than, or may be the same as a size of at least one of the target irradiation areas EA#1 and EA#2.

The material nozzle 212 may supply the build material M to the melt pool MP. Specifically, the material nozzle 212 may supply the build material M to at least one of the melt pool MP#1 and the melt pool MP#2. However, the material nozzle 212 may not supply the build material M to the melt pool MP. For example, the processing system SYS may melt the build material M by the processing light EL emitted from the irradiation optical system 211 before the build material M from the material nozzle 212 reaches the workpiece W, and make the molten build material M adhere to the workpiece W.

The irradiation optical system 211 and the material nozzle 212 may be contained in a head housing 213 of the processing head 21. The head housing 213 is a housing in which a containing space for containing the irradiation optical system 211 and the material nozzle 212 is formed. In this case, the irradiation optical system 211 and the material nozzles 212 may be contained in the housing space in the head housing 213.

The head driving system 22 moves the processing head 21 under the control of the control unit 7. Namely, the head driving system 22 moves the irradiation optical system 211 and the material nozzle 212 under the control of the control unit 7. The head driving system 22 moves the processing head 21 along at least one of the X-axis direction, the Y-axis direction, the Z-axis direction, the θX direction, the θY direction, and the θZ direction, for example. Incidentally, an operation for moving the processing head 21 along at least one of the θX direction, the θY direction, and the θZ direction may be considered to be equivalent to an operation for rotating the processing head 21 around at least one of a rotational axis along the X-axis, a rotational axis along the Y-axis, and a rotational axis along the Z-axis.

When the head driving system 22 moves the processing head 21, a relative positional relationship between the processing head 21 and each of the stage 31 and the workpiece W placed on the stage 31 changes. As a result, a positional relationship between the irradiation optical system 211 of the processing head 21 and each of the stage 31 and the workpiece W changes. Therefore, the head driving system 22 may be considered to serve as a position change apparatus that is configured to change the positional relationship between the irradiation optical system 211 and each of the stage 31 and the workpiece W. Furthermore, when the positional relationship between the processing head 21 and each of the stage 31 and the workpiece W changes, a relative positional relationship between the workpiece W and each of the target irradiation areas EA#1 and EA#2 and the target supply area MA also changes. Namely, each of the target irradiation areas EA#1 and EA#2 and the target supply area MA moves along at least one of the X-axis direction, the Y-axis direction, the Z-axis direction, the θX direction, the θY direction, and the θZ direction on the surface of the workpiece W (more specifically, the build surface MS on which the additive manufacturing is performed). In this case, the head driving system 22 may be considered to move the processing head 21 so that each of the target irradiation areas EA#1 and EA#2 and the target supply area MA moves on the build surface MS.

The stage unit 3 includes the bed 30, the stage 31, and a stage driving system 32.

The workpiece W is placed on the stage 31. Specifically, the workpiece W is placed on a stage placement surface 311 that is one surface (for example, a surface facing toward the +Z side) of the stage 31. The stage 31 is configured to support the workpiece W placed on the stage 31. The stage 31 may be configured to hold the workpiece W placed on the stage 31. In this case, the stage 31 may include at least one of a mechanical chuck, an electro-static chuck, and a vacuum chuck to hold the workpiece W. Alternatively, the stage 31 may not be configured to hold the workpiece W placed on the stage 31. In this case, the workpiece W may be placed on the stage 31 without a clamp. Moreover, the workpiece W may be attached to a holding member, and the holding member to which the workpiece W is attached may be placed on the stage 31. The above-described irradiation optical system 211 emits each of the processing lights EL#1 and EL#2 in at least a part of a period during which the workpiece W is placed on the stage 31. Furthermore, the above-described material nozzle 212 supplies the build material M in at least a part of the period during which the workpiece W is placed on the stage 31.

The stage driving system 32 moves the stage 31. For example, the stage driving system 32 moves the stage 31 along at least one of the X-axis direction, the Y-axis direction, the Z-axis direction, the θX direction, the θY direction, and the θZ direction. Incidentally, an operation for moving the stage 31 along at least one of the θX direction, the θY direction, and the θZ direction may be considered to be equivalent to an operation for rotating the stage 31 around at least one of a rotational axis along the X-axis (namely, an A-axis), a rotational axis along the Y-axis (namely, a B-axis), and a rotational axis along the Z-axis (namely, a C-axis).

When the stage driving system 32 moves the stage 31, the relative positional relationship between the processing head 21 and each of the stage 31 and the workpieces W changes. As a result, the positional relationship between the irradiation optical system 211 of the processing head 21 and each of the stage 31 and the workpiece W changes. Therefore, the stage driving system 32 may be considered to serve as a position change apparatus that is configured to change the positional relationship between the irradiation optical system 211 and each of the stage 31 and the workpiece W, as with the head driving system 22. Furthermore, when the positional relationship between the processing head 21 and each of the stage 31 and the workpiece W changes, the relative positional relationship between the workpiece W and each of the target irradiation areas EA#1 and EA#2 and the target supply area MA also changes. Namely, each of the target irradiation areas EA#1 and EA#2 and the target supply area MA moves along at least one of the X-axis direction, the Y-axis direction, the Z-axis direction, the θX direction, the θY direction, and the θZ direction on the surface of the workpiece W (more specifically, the build surface MS). In this case, the stage driving system 32 may be considered to move the stage 31 so that each of the target irradiation areas EA#1 and EA#2 and the target supply area MA moves on the build surface MS.

The light source 4 emits at least one of infrared light, visible light, and ultraviolet light as the processing light EL, for example. However, other type of light may be used as the processing light EL. The processing light EL may include a plurality of pulsed lights (namely, a plurality of pulsed beams). The processing light EL may be a laser light. In this case, the light source 4 may include a semiconductor laser such as a laser light source (for example, a Laser Diode (LD)). At least one of a fiber laser, a CO₂ laser, a YAG laser, an Excimer laser and the like may be used as the laser light source. However, the processing light EL may not be the laser light. The light source 4 may include any light source (for example, at least one of a LED (Light Emitting Diode), a discharge lamp and the like).

As described above, the processing system SYS includes the plurality of light sources 4 (specifically, the light sources 4#1 and 4#2). In this case, a characteristic of the processing light EL#1 emitted by the light source 4#1 may be the same as a characteristic of the processing light EL#2 emitted by the light source 4#2. For example, a wavelength of the processing light EL#1 (typically, a peak wavelength that is a wavelength at which an intensity is maximum in a wavelength band of the processing light EL#1) may be the same as the wavelength (typically, a peak wavelength) of the processing light EL#2. For example, the wavelength band (typically, a range of wavelengths at which the intensity is equal to or higher than a certain value) of the processing light EL#1 may be the same as the wavelength band of the processing light EL#2. For example, the intensity of the processing light EL#1 may be the same as the intensity of the processing light EL#2. For example, an absorption rate of the workpiece W (alternatively, an object whose surface is the build surface MS, the same is applied in the below-described description) to the processing light EL#1 may be the same as an absorption rate of the workpiece W to the processing light EL#2. Especially, the absorption rate of the workpiece W to the peak wavelength of the processing light EL#1 may be the same as the absorption rate of the workpiece W to the peak wavelength of the processing light EL#2. Alternatively, the characteristic of the processing light EL#1 emitted by the light source 4#1 may be different from the characteristic of the processing light EL#2 emitted by the light source 4#2. For example, the wavelength (typically, the peak wavelength) of the processing light EL#1 may be different from the wavelength (typically, the peak wavelength) of the processing light EL#2. For example, the wavelength band of the processing light EL#1 may be different from the wavelength band of the processing light EL#2. For example, the intensity of the processing light EL#1 may be different from the intensity of the processing light EL#2. For example, the absorption rate of the workpiece W to the processing light EL#1 may be different from the absorption rate of the workpiece W to the processing light EL#2. Especially, the absorption rate of the workpiece W to the peak wavelength of the processing light EL#1 may be different from the absorption rate of the workpiece W to the peak wavelength of the processing light EL#2.

Incidentally, in the present example embodiment, an example in which the processing system SYS includes the plurality of light sources 4 is described. However, the processing system SYS may not include the plurality of light sources 4. The processing system SYS may not include a single light source 4. As one example, the processing system may include, as the single light source, a light source that emits (supplies) a wide wavelength band or a plurality of wavelengths of light. In this case, the processing system SYS may generate the processing light EL#1 and the processing light EL#2 whose wavelengths are different from each other by performing a wavelength division on the light emitted from this light source.

The gas supply source 5 is a source of the purge gas for purging the chamber space 63IN in the housing 6. The purge gas includes inert gas. At least one of Nitrogen gas and Argon gas is one example of the inert gas. The gas supply source 5 is connected to the chamber space 63IN through a supply port 62 formed in a wall member 61 of the housing 6 and a supply pipe 51 connecting the gas supply source 5 to the supply port 62. The gas supply source 5 supplies the purge gas to the chamber space 63IN through the supply pipe 51 and the supply port 62. As a result, the chamber space 63IN becomes a space purged by the purge gas. The purge gas supplied to the chamber space 63IN may be discharged from a non-illustrated outlet port formed in the wall member 61. Note that the gas supply source 5 may be a tank that stores the inert gas. In a case where the purge gas is the Nitrogen gas, the gas supply source 5 may be a Nitrogen gas generation apparatus that generates the Nitrogen gas by using air as material.

In a case where the material nozzle 212 supplies the build material M together with the purge gas as described above, the gas supply source 5 may supply the purge gas to the mix apparatus 12 to which the build material M is supplied from the material supply source 1. Specifically, the gas supply source 5 may be connected to the mix apparatus 12 through a supply pipe 52 that connects the gas supply source 5 and the mix apparatus 12. As a result, the gas supply source 5 supplies the purge gas to the mix apparatus 12 through the supply pipe 52. In this case, the build material M from the material supply source 1 may be supplied (specifically, pressure-fed) to the material nozzle 212 through the supply pipe 11 by the purge gas supplied from the gas supply source 5 through the supply pipe 52. Namely, the gas supply source 5 may be connected to the material nozzle 212 through the supply pipe 52, the mix apparatus 12 and the supply pipe 11. In this case, the material nozzle 212 supplies the build material M together with the purge gas for pressure-feeding the build material M.

The control unit 7 is configured to control an operation of the processing system SYS. For example, the control unit 7 may control the processing unit 2 (for example, at least one of the processing head 21 and the head driving system 22) of the processing system SYS to perform the additive manufacturing on the workpiece W. For example, the control unit 7 may control the stage unit 3 (for example, stage driving system 32) of the processing system SYS to perform the additive manufacturing on the workpiece W. For example, the control unit 7 may control the material supply source 1 of the processing system SYS to perform the additive manufacturing on the workpiece W. For example, the control unit 7 may control the light source 4 of the processing system SYS to perform the additive manufacturing on the workpiece W. For example, the control unit 7 may control the gas supply source 5 of the processing system SYS to perform the additive manufacturing on the workpiece W.

The control unit 7 may include a processor 71 and a storage apparatus 72. The processor 71 may include at least one of a CPU (Central Processing unit) and a GPU (Graphic Processing unit), for example. The storage apparatus 72 may include a memory. The control unit 7 serves as an apparatus for controlling the operation of the processing system SYS by means of the processor 71 executing a computer program. The computer program is a computer program that allows the processor 71 to execute (namely, to perform) a below-described operation that should be executed by the control unit 7. Namely, the computer program is a computer program that allows the control unit 7 to function so as to make the processing system SYS execute the below-described operation. The computer program executed by the processor 71 may be recorded in the storage apparatus 72 (namely, a recording medium) of the control unit 7, or may be recorded in any recording medium (for example, a hard disk or a semiconductor memory) that is built in the control unit 7 or that is attachable to the control unit 7. Alternatively, the processor 71 may download the computer program that should be executed from an apparatus positioned at an outside of the control unit 7 through a network interface. Incidentally, the storage apparatus 72 may be referred to as a recording apparatus.

The control unit 7 may control an emitting aspect of the processing light EL by the irradiation optical system 211. The emitting aspect may include at least one of the intensity of the processing light EL and emitting timing of the processing light EL, for example. In a case where the processing light EL includes the plurality of pulsed lights, the emitting aspect may include at least one of an ON time of the pulsed light, an emission cycle of the pulsed light and a ratio (what we call a duty ratio) of a length of the ON time of the pulsed light and a length of the emission cycle of the pulsed light, for example. Furthermore, the control unit 7 may control a movement aspect of the processing head 21 by the head driving system 22. The control unit 7 may control a movement aspect of the stage 31 by the stage driving system 32. The movement aspect may include at least one of a movement distance, a movement speed, a movement direction, and a movement timing (a movement period), for example. Moreover, the control unit 7 may control a supply aspect of the build material M by the material nozzle 212. The supply aspect may include at least one of the supplied amount (especially, the supplied amount per unit time) and a supply timing (a supply period).

The control unit 7 may not be positioned in the processing system SYS. For example, the control unit 7 may be positioned at the outside of the processing system SYS as a server or the like. In this case, the control unit 7 may be connected to the processing system SYS through a wired and / or wireless network (alternatively, a data bus and / or a communication line). A network using a serial-bus-type interface such as at least one of IEEE1394, RS-232x, RS-422, RS-423, RS-485, and USB may be used as the wired network. A network using a parallel-bus-type interface may be used as the wired network. A network using an interface that is compatible to Ethernet such as at least one of 10-BASE-T, 100BASE-TX or 1000BASE-T may be used as the wired network. A network using an electrical wave may be used as the wireless network. A network that is compatible to IEEE802.1x (for example, at least one of a wireless LAN and Bluetooth (registered trademark)) is one example of the network using the electrical wave. A network using an infrared ray may be used as the wireless network. A network using an optical communication may be used as the wireless network. In this case, the control unit 7 and the processing system SYS may be configured to transmit and receive various information through the network. Moreover, the control unit 7 may be configured to transmit information such as a command and a control parameter to the processing system SYS through the network. The processing system SYS may include a reception apparatus that is configured to receive the information such as the command and the control parameter from the control unit 7 through the network. The processing system SYS may include a transmission apparatus that is configured to transmit the information such as the command and the control parameter to the control unit 7 through the network (namely, an output apparatus that is configured to output information to the control unit 7). Alternatively, a first control apparatus that is configured to perform a part of the arithmetic processing performed by the control unit 7 may be positioned in the processing system SYS and a second control apparatus that is configured to perform another part of the arithmetic processing performed by the control unit 7 may be positioned at the outside of the processing system SYS.

An arithmetic model that is buildable by machine learning may be implemented in the control unit 7 by the processor 71 executing the computer program. One example of the arithmetic model that is buildable by the machine learning is an arithmetic model including a neural network (so-called Artificial Intelligence (AI)), for example. In this case, the learning of the arithmetic model may include learning of parameters of the neural network (for example, at least one of weights and biases). The control unit 7 may control the operation of the processing system SYS by using the arithmetic model. Namely, the operation for controlling the operation of the processing system SYS may include an operation for controlling the operation of the processing system SYS by using the arithmetic model. Note that the arithmetic model that has been built by off-line machine learning using training data may be implemented in the control unit 7. Moreover, the arithmetic model implemented in the control unit 7 may be updated by online machine learning on the control unit 7. Alternatively, the control unit 7 may control the operation of the processing system SYS by using the arithmetic model implemented in an apparatus positioned at an outside of the control unit 7 (namely, an apparatus positioned at an outside of the processing system SYS), in addition to or instead of the arithmetic model implemented on the control unit 7.

Note that at least one of an optical disc such as a CD-ROM, a CD-R, a CD-RW, a flexible disc, a MO, a DVD-ROM, a DVD-RAM, a DVD-R, a DVD+R, a DVD-RW, a DVD+RW and a Blu-ray (registered trademark), a magnetic disc such as a magnetic tape, an optical-magnetic disc, a semiconductor memory such as a USB memory, and another medium that is configured to store the program may be used as the recording medium recording therein the computer program that should be executed by the control unit 7. The recording medium may include a device that is configured to record the computer program (for example, a device for a universal use or a device for an exclusive use in which the computer program is embedded to be executable in a form of at least one of a software, a firmware, and the like). Moreover, various arithmetic processing or functions included in the computer program may be realized by a logical processing block that is realized in the control unit 7 by means of the control unit 7 (namely, a computer) executing the computer program, may be realized by a hardware such as a predetermined gate array (a FPGA, an ASIC) of the control unit 7, or may be realized in a form in which the logical process block and a partial hardware module that realizes a partial element of the hardware are combined.

The imaging unit 8 is an imaging apparatus that is configured to image an imaging target object under the control of the control unit 7. Therefore, the imaging unit 8 may include a camera that is configured to image the imaging target object. The camera may include an imaging element. The imaging element may include a CCD (Charged Coupled Device) sensor. The imaging element may include a CMOS (Complementary Metal Oxide Semiconductor) sensor. In this case, the imaging unit 8 may image the imaging target object by optically receiving light from the imaging target object with the imaging element. Namely, the imaging unit 8 may image the imaging target object by exposing the imaging element with the light from the imaging target object. Incidentally, an "exposure of the imaging element with the light from the imaging target object" may be referred to as an "exposure (exposure of the imaging target object) by the imaging element (namely, by the imaging unit 8)".

The imaging target object may include at least a part of the workpiece W. The imaging target object may include at least a part of the build object built by the processing system SYS. Especially, the imaging target object may include at least a part of the object on which the build surface MS is set. As described above, the build surface MS is set on the surface of the workpiece W or the structural layer SL. Therefore, the imaging target object may include at least a part of the workpiece W or the structural layer SL.

As described above, the melt pool MP is formed on the build surface MS by the processing light EL. In this case, the imaging unit 8 may be configured to image the melt pool MP. Namely, the imaging unit 8 may be configured to image an area that includes the melt pool MP (namely, an area on the build surface MS that includes the melt pool MP). In the below-described description, an example in which the imaging unit 8 images the melt pool MP will be described. Namely, in the below-described description, an example in which the imaging unit 8 images the area that includes the melt pool MP (namely, the area on the build surface MS that includes the melt pool MP) will be described.

The imaging unit 8 may be attached to the processing head 21. For example, as illustrated in FIG. 1, the imaging unit 8 may be attached to the head housing 213 of the processing head 21. In this case, when the processing head 21 moves by the head driving system 22, the imaging unit 8 attached to the processing head 21 also moves together with the processing head 21. In this case, a relative positional relationship between the processing head 21 and the imaging unit 8 is fixed. However, the imaging unit 8 may not to be attached to the processing head 21. The imaging unit 8 may be attached to an object different from the processing head 21.

The imaging unit 8 generates an image in which the imaging target object is captured by imaging the imaging target object. In the present example embodiment, the imaging unit 8 generates the image in which the melt pool MP is captured because the imaging unit 8 images the melt pool MP as described above. In the below-described description, the image generated by the imaging unit 8 (namely, the image in which the melt pool MP is captured) is referred to as a "melt pool image IMG".

The imaging unit 8 may output the generated melt pool image IMG to the control unit 7. The control unit 7 may control the processing system SYS based on the melt pool image IMG. For example, the control unit 7 may control the processing unit 2 (for example, at least one of the processing head 21 and the head driving system 22) to perform the additive manufacturing on the workpiece W based on the melt pool image IMG. For example, the control unit 7 may control the stage unit 3 (for example, the stage driving system 32) to perform the additive manufacturing on the workpiece W based on the melt pool image IMG. For example, the control unit 7 may control the material supply source 1 to perform the additive manufacturing on the workpiece W based on the melt pool image IMG. For example, the control unit 7 may control the light source 4 to perform the additive manufacturing on the workpiece W based on the melt pool image IMG. For example, the control unit 7 may control the gas supply source 5 to perform the additive manufacturing on the workpiece W based on the melt pool image IMG.

### (1-2) Configuration of Irradiation Optical System 211

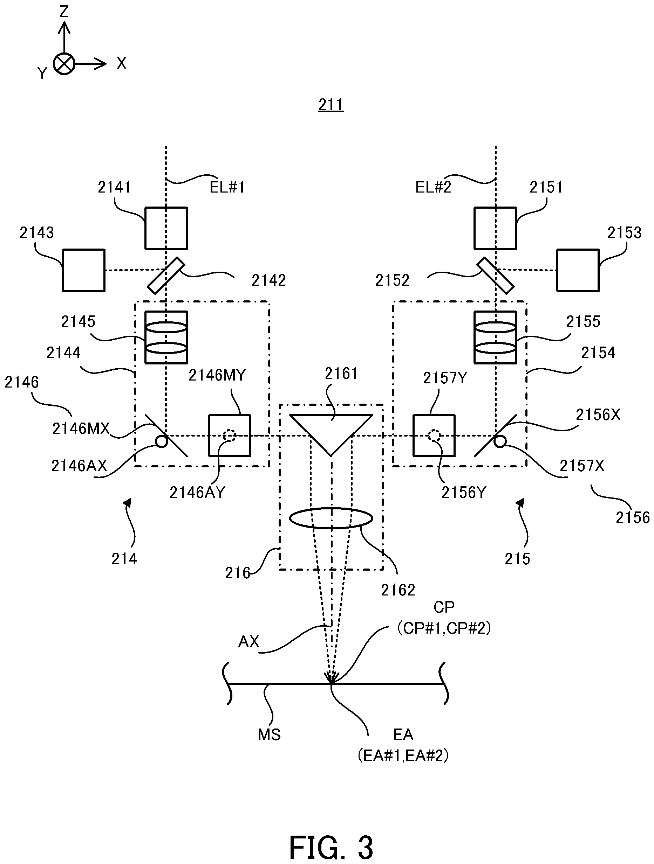

Next, with reference to FIG. 3, a configuration of the irradiation optical system 211 will be described. FIG. 3 is a cross-sectional view that illustrates the configuration of the irradiation optical system 211.

As illustrated in FIG. 3, the irradiation optical system 211 includes a first optical system 214, a second optical system 215, and the third optical system 216. The first optical system 214 is an optical system into which the processing light EL#1 emitted from the light source 4#1 enters. The first optical system 214 is an optical system that emits the processing light EL#1 emitted from the light source 4#1 toward the third optical system 216. The second optical system 215 is an optical system into which the processing light EL#2 emitted from the light source 4#2 enters. The second optical system 215 is an optical system that emits the processing light EL#2 emitted from the light source 4#2 toward the third optical system 216. The third optical system 216 is an optical system into which the processing light EL#1 emitted from the first optical system 214 and the processing light EL#2 emitted from the second optical system 215 enter. The third optical system 216 is an optical system that emits the processing light EL#1 emitted from the first optical system 214 and the processing light EL#2 emitted from the second optical system 215 toward the build surface MS. Next, the first optical system 214, the second optical system 215, and the third optical system 216 will be described in sequence.

The first optical system 214 includes a collimator lens 2141, a parallel plate 2142, a power meter 2143, and a Galvano scanner 2144. The Galvano scanner 2144 includes a focus control optical system 2145 and a Galvano mirror 2146. However, the first optical system 214 may not include at least one of the collimator lens 2141, the parallel plate 2142, the power meter 2143, and the Galvano scanner 2144. The Galvano scanner 2144 may not include at least one of the focus control optical system 2145 and the Galvano mirror 2146.

The processing light EL#1 emitted from the light source 4#1 enters the collimator lens 2141. The collimator lens 2141 converts the processing light EL#1 that has entered the collimator lens 2141 into collimated light. Incidentally, in a case where the processing light EL#1 emitted from the light source 4#1 is collimated light (namely, the processing light EL#1 that is the collimated light enters the first optical system 214), the first optical system 214 may not include the collimator lens 2141. The processing light EL#1 that has been converted to the collimated light by the collimator lens 2141 enters the parallel plate 2142. A part of the processing light EL#1 that has entered the parallel plate 2142 passes through the parallel plate 2142. Another part of the processing light EL#1 that has entered the parallel plate 2142 is reflected by the parallel plate 2142.

The processing light EL#1 that has passed through the parallel plate 2142 enters the Galvano scanner 2144. Specifically, the processing light EL#1 that has passed through the parallel plate 2142 enters the focus control optical system 2145 of the Galvano scanner 2144.

The focus control optical system 2145 is an optical member that is configured to change a condensed position CP of the processing light EL#1 (in the below-described description, it is referred to as a "condensed position CP#1"). Specifically, the focus control optical system 2145 is configured to change the condensed position CP#1 of the processing light EL#1 along an irradiation direction of the processing light EL#1 with which the build surface MS is irradiated. In the example illustrated in FIG. 3, the irradiation direction of the processing light EL#1 with which the build surface MS is irradiated is a direction whose main component is the Z-axis direction. In this case, the focus control optical system 2145 is configured to change the condensed position CP#1 of the processing light EL#1 along the Z-axis direction. Moreover, since the irradiation optical system 211 irradiates the build surface MS with the processing light EL from a position above the workpiece W, the irradiation direction of the processing light EL#1 is a direction that intersects the build surface MS (for example, the surface of the workpiece W or the structural layer SL). Therefore, the focus control optical system 2145 may be considered to be configured to change the condensed position CP#1 of the processing light EL#1 along the direction that intersects the build surface MS (for example, the surface of the workpiece W or the structural layer SL). The focus control optical system 2145 may be considered to be configured to change the condensed position CP#1 of the processing light EL#1 along a direction of an optical axis AX of the irradiation optical system 211 (typically, the third optical system 216).

Incidentally, the irradiation direction of the processing light EL#1 may mean an irradiation direction of the processing light EL#1 emitted from the third optical system 216. In this case, the irradiation direction of the processing light EL#1 may be the same as a direction along an optical axis of the third optical system 216. The irradiation direction of the processing light EL#1 may be the same as a direction along an optical axis of a terminal optical member, which is positioned at a position closest to the build surface MS, among optical members of the third optical system 216. The terminal optical member may be the fθ lens 2162 described below. Moreover, in a case where the below-described fθ lens 2162 includes a plurality of optical members, the terminal optical member may be an optical member, which is positioned at a position closest to the build surface MS, among the plurality of optical members of the fθ lens 2162.

The focus control optical system 2145 may include a plurality of lenses that are aligned along the irradiation direction of the processing light EL#1, for example. In this case, the focus control optical system 2145 may change the condensed position CP#1 of the processing light EL#1 by moving at least one of the plurality of lenses along its optical axis direction.

When the focus control optical system 2145 changes the condensed position CP#1 of the processing light EL#1, a positional relationship between the condensed position CP#1 of the processing light EL#1 and the build surface MS changes. Especially, a positional relationship between the condensed position CP#1 of the processing light EL#1 and the build surface MS in the irradiation direction of the processing light EL#1 changes. Therefore, the focus control optical system 2145 may be considered to change the positional relationship between the condensed position CP#1 of the processing light EL#1 and the build surface MS by changing the condensed position CP#1 of the processing light EL#1 by the focus control optical system 2145.

Incidentally, as described above, the Galvano scanner 2144 may not include the focus control optical system 2145. Even in this case, when the positional relationship between the irradiation optical system 211 and the build surface MS in the irradiation direction of the processing light EL#1 changes, the positional relationship between the condensed position CP#1 of the processing light EL#1 and the build surface MS in the irradiation direction of the processing light EL#1 changes. Therefore, even in a case where the Galvano scanner 2144 does not include the focus control optical system 2145, the processing system SYS may change the positional relationship between the condensed position CP#1 of the processing light EL#1 and the build surface MS in the irradiation direction of the processing light EL#1. For example, the processing system SYS may change the positional relationship between the condensed position CP#1 of the processing light EL#1 and the build surface MS in the irradiation direction of the processing light EL#1 by using the head driving system 22 to move the processing head 21 along the irradiation direction of the processing light EL#1. For example, the processing system SYS may change the positional relationship between the condensed position CP#1 of the processing light EL#1 and the build surface MS in the irradiation direction of the processing light EL#1 by using the stage driving system 32 to move the stage 31 along the irradiation direction of the processing light EL#1.

The processing light EL#1 that has been emitted from the focus control optical system 2145 enters the Galvano mirror 2146. The Galvano mirror 2146 changes an emitting direction of the processing light EL#1 emitted from the Galvano mirror 2146 by deflecting the processing light EL#1. Therefore, the Galvano mirror 2146 may be referred to as a deflection optical system. When the emitting direction of the processing light EL#1 emitted from the Galvano mirror 2146 is changed, a position from which the processing head 21 emits the processing light EL#1 is changed. When the position from which the processing head 21 emits the processing light EL#1 is changed, the target irradiation area EA#1 that is irradiated with the processing light EL#1 on the build surface MS moves. Namely, an irradiation position that is irradiated with the processing light EL#1 on the build surface MS moves. Therefore, the Galvano mirror 2146 may be considered to serve as an irradiation position movement apparatus that is configured to move the irradiation position of the processing light EL#1 on the build surface MS.

Especially, when the emitting direction of the processing light EL#1 emitted from the Galvano mirror 2146 is changed, the irradiation position of the processing light EL#1 relative to the processing head 21 that includes the Galvano mirror 2146 is changed. Therefore, the Galvano mirror 2146 may be considered to serve as a position change apparatus that is configured to change the irradiation position of the processing light EL#1 relative to the processing head 21.

The Galvano mirror 2146 includes an X scanning mirror 2146MX, an X scanning motor 2146AX, a Y scanning mirror 2146MY, and a Y scanning motor 2146AY, for example. The processing light EL#1 that has been emitted from the focus control optical system 2145 enters the X scanning mirror 2146MX. The X scanning mirror 2146MX reflects the processing light EL#1 that has entered the X scanning mirror 2146MX toward the Y scanning mirror 2146MY. The Y scanning mirror 2146MY reflects the processing light EL#1 that has entered the Y scanning mirror 2146MY toward the third optical system 216. Incidentally, each of the X scanning mirror 2146MX and the Y scanning mirror 2146MY may be referred to as a Galvano mirror.

The X scanning motor 2146AX swings or rotates the X scanning mirror 2146MX around a rotational axis along the Y-axis. As a result, an angle of the X scanning mirror 2146MX relative to an optical path of the processing light EL#1 entering the X scanning mirror 2146MX is changed. In this case, the build surface MS is scanned with the processing light EL#1 along the X-axis direction due to the swing or the rotation of the X scanning mirror 2146MX. Namely, the target irradiation area EA#1 (namely, the irradiation position of the processing light EL#1) moves along the X-axis direction on the build surface MS.

The Y scanning motor 2146AY swings or rotates the Y scanning mirror 2146MY around a rotational axis along the X-axis. As a result, an angle of the Y scanning mirror 2146MY relative to an optical path of the processing light EL#1 entering the Y scanning mirror 2146MY is changed. In this case, the build surface MS is scanned with the processing light EL#1 along the Y-axis direction due to the swing or the rotation of the Y scanning mirror 2146MY. Namely, the target irradiation area EA#1 (namely, the irradiation position of the processing light EL#1) moves along the Y-axis direction on the build surface MS.

In the present example embodiment, a virtual area in which the Galvano mirror 2146 moves the target irradiation area EA#1 on the build surface MS is referred to as a processing unit area BSA (especially, the processing unit area BSA#1). In this case, the target irradiation area EA#1 may be considered to move on a surface (a first surface) of the build surface MS that overlaps with the processing unit area BSA#1. Specifically, the virtual area in which the Galvano mirror 2146 moves the target irradiation area EA#1 on the build surface MS in a state where a positional relationship between the irradiation optical system 211 and the build surface MS is fixed (namely, is not changed) is referred to as the processing unit area BSA (especially, the processing unit area BSA#1). The processing unit area BSA#1 indicates a virtual area (in other words, a range) in which the processing head 21 actually performs the additive manufacturing by using the processing light EL#1 in a state where the positional relationship between the irradiation optical system 211 and the build surface MS is fixed. The processing unit area BSA#1 indicates a virtual area (in other words, a range) that is actually scanned by the processing head 21 with the processing light EL#1 in a state where the positional relationship between the irradiation optical system 211 and the build surface MS is fixed. The processing unit area BSA#1 indicates an area (in other words, a range) in which the target irradiation area EA#1 actually moves in a state where the positional relationship between the irradiation optical system 211 and the build surface MS is fixed. Therefore, the processing unit area BSA#1 may be regarded as a virtual area that is determined with respect to the processing head 21 (especially, the irradiation optical system 211). Namely, the processing unit area BSA#1 may be regarded as a virtual area positioned at a position that is determined with respect to the processing head 21 (especially, the irradiation optical system 211) on the build surface MS. Incidentally, a maximum area in which the Galvano mirror 2146 is allowed to move the target irradiation area EA#1 on the build surface MS in a state where the positional relationship between the irradiation optical system 211 and the build surface MS is fixed may be referred to as the processing unit area BSA#1.

In this case, the processing system SYS may move the target irradiation area EA#1 in the processing unit area BSA#1 by using the Galvano mirror 2146. Therefore, an operation for deflecting the processing light EL#1 by using the Galvano mirror 2146 may be considered to be equivalent to an operation for moving the target irradiation area EA#1 in the processing unit area BSA#1. Furthermore, as described above, the melt pool MP#1 is formed by irradiating the target irradiation area EA#1 with the processing light EL#1. In this case, the processing system SYS may be considered to move the melt pool MP#1 in the processing unit area BSA#1 by using the Galvano mirror 2146. Therefore, the operation for deflecting the processing light EL#1 by using the Galvano mirror 2146 may be considered to be equivalent to an operation for moving the melt pool MP#1 in the processing unit area BSA#1. Namely, the operation for moving the target irradiation area EA#1 in the processing unit area BSA#1 may be considered to be equivalent to the operation for moving the melt pool MP#1 in the processing unit area BSA#1.

Incidentally, as described above, even when at least one of the processing head 21 and the stage 31 moves, the target irradiation area EA#1 moves on the build surface MS. However, when at least one of the processing head 21 and the stage 31 moves, the relative positional relationship between the Galvano mirror 2146 and the build surface MS changes. As a result, the processing unit area BSA#1 that is determined with respect to the processing head 21 (namely, the processing unit area BSA#1 in which the Galvano mirror 2146 moves the target irradiation area EA#1 on the build surface MS) moves on the build surface MS. Therefore, in the present example embodiment, an operation for moving at least one of the processing head 21 and the stage 31 may be considered to be equivalent to an operation for moving the processing unit area BSA#1 relative to the build surface MS.

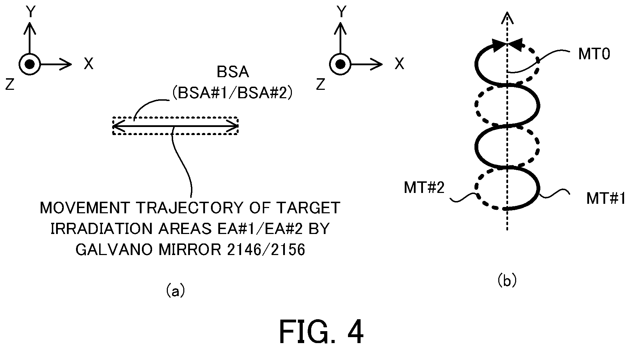

As one example of the operation for moving the target irradiation area EA#1 in the processing unit area BSA#1, as illustrated in FIG. 4(a), the Galvano mirror 2146 may deflect the processing light EL#1 so that the target irradiation area EA#1 moves along a single direction, which is along the build surface MS, in the processing unit area BSA#1 under the assumption that the processing unit area BSA#1 is stationary (namely, does not move) on the build surface MS. Namely, the Galvano mirror 2146 may deflect the processing light EL#1 so that the target irradiation area EA#1 moves along a single scanning direction in a coordinate system that is determined with respect to the processing unit area BSA#1. Especially, the Galvano mirror 2146 may deflect the processing light EL#1 so that the target irradiation area EA#1 periodically moves back and forth along the single scanning direction in the processing unit area BSA#1. Namely, the Galvano mirror 2146 may deflect the processing light EL#1 so that the target irradiation area EA#1 periodically moves back and forth along an axis, which is along the single scanning direction, in the processing unit area BSA#1. In this case, a shape of the processing unit area BSA#1 in which the target irradiation area EA#1 moves may be a rectangular shape whose longitudinal direction is a movement direction of the target irradiation area EA#1.

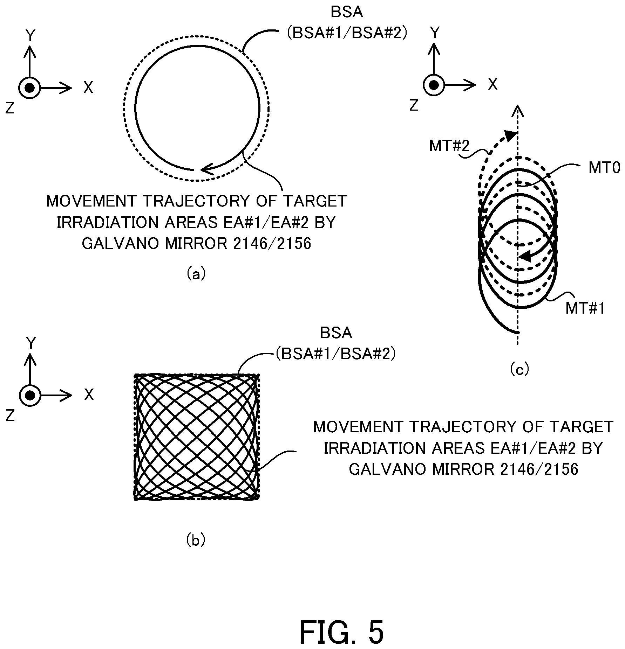

As another example of the operation for moving the target irradiation area EA#1 in the processing unit area BSA#1, as illustrated in FIG. 5(a) and FIG. 5(b), the Galvano mirror 2146 may deflect the processing light EL#1 so that the target irradiation area EA#1 moves along a plurality of directions, each of which is along the build surface BSA#1, in the processing unit area BSA#1 under the assumption that the processing unit area BSA#1 is stationary (namely, does not move) on the build surface MS. Namely, the Galvano mirror 2146 may deflect the processing light EL#1 so that the target irradiation area EA#1 moves along a plurality of directions in the coordinate system that is determined with respect to the processing unit area BSA#1. Especially, the Galvano mirror 2146 may deflect the processing light EL#1 so that the target irradiation area EA#1 periodically moves back and forth along each of a plurality of scanning directions in the processing unit area BSA#1. Namely, the Galvano mirror 2146 may deflect the processing light EL#1 so that the target irradiation area EA#1 periodically moves back and forth along an axis, which is along each of the plurality of scanning directions, in the processing unit area BSA#1. FIG. 5(a) illustrates an example in which the target irradiation area EA#1 moves back and forth along each of the X-axis direction and the Y-axis direction in the processing unit area BSA#1 so that a movement trajectory of the target irradiation area EA#1 in the processing unit area BSA#1 is a circular shape. In this case, the shape of the processing unit area BSA#1 in which the target irradiation area EA#1 moves may be a circular shape. FIG. 5(b) illustrates an example in which the target irradiation area EA#1 moves back and forth along each of the X-axis direction and the Y-axis direction in the processing unit area BSA#1 so that the movement trajectory of the target irradiation area EA#1 in the processing unit area BSA#1 is a net-like shape. In this case, the shape of the processing unit area BSA#1 in which the target irradiation area EA#1 moves may be a rectangular shape.

Incidentally, an operation for periodically moving the target irradiation area EA#1 on the build surface MS as illustrated in each of FIG. 4(a), FIG. 5(a) and FIG. 5(b) may be referred to as a wobbling operation. In other words, an operation for periodically moving (in other words, deflecting) the processing light EL#1 so that the target irradiation area EA#1 periodically moves on the build surface MS may be referred to as the wobbling operation.

The control unit 7 may move at least one of the processing head 21 and the stage 31 so that the processing unit area BSA#1 moves on the build surface MS in a period during which the target irradiation area EA#1 is moved in the processing unit area BSA#1 by using the Galvano mirror 2146. Namely, the control unit 7 may control at least one of the head driving system 22 and the stage driving system 32 so that the processing unit area BSA#1 moves on the build surface MS in the period during which the target irradiation area EA#1 is moved in the processing unit area BSA#1 by using the Galvano mirror 2146.

For example, in the example illustrated in FIG. 4(a), the control unit 7 may control at least one of the head driving system 22 and the stage driving system 32 so that the processing unit area BSA#1 moves along a target movement trajectory MT0 that intersects (is orthogonal to, in some cases) the movement direction (namely, the scanning direction) of the target irradiation area EA#1 in the processing unit area BSA#1. Conversely, the control unit 7 may control the Galvano mirror 2146 so that the target irradiation area EA#1 periodically moves along a scanning direction that intersects (is orthogonal to, in some cases) the target movement trajectory MT0 of the processing unit area BSA#1 on the build surface MS. As a result, the target irradiation area EA#1 may move on the build surface MS along a movement trajectory MT#1 illustrated in FIG. 4(b). Specifically, the target irradiation area EA#1 may move along the scanning direction intersecting the target movement trajectory MT0 while moving along target movement trajectory MT0 of the processing unit area BSA#1. Namely, the target irradiation area EA#1 may move along the wave-shaped (for example, sinusoidal wave-shaped) movement trajectory MT#1 that oscillates around the target movement trajectory MT0.

For example, in the example illustrated in FIG. 5(a) or FIG. 5(b), the control unit 7 may control at least one of the head driving system 22 and the stage driving system 32 so that the processing unit area BSA#1 moves along the target movement trajectory MT0 that extends along at least one of a direction that is along the movement direction (namely, the scanning direction) of the target irradiation area EA#1 in the processing unit area BSA#1 and a direction that intersects (is orthogonal to, in some cases) the movement direction of the target irradiation area EA#1 in the processing unit area BSA#1. Conversely, the control unit 7 may control the Galvano mirror 2146 so that the target irradiation area EA#1 periodically moves along each of a scanning direction that is along the target movement trajectory MT0 of the processing unit area BSA#1 on the build surface MS and a scanning direction that intersects (is orthogonal to, in some cases) the target movement trajectory MT0. Incidentally, FIG. 5(c) illustrates the movement trajectory MT#1 of the target irradiation area EA#1 on the build surface MS in a case where the processing unit area BSA#1 illustrated in FIG. 5(a) moves along the target movement trajectory MT0 on the build surface MS.

In a case where the build surface MS is irradiated with the processing light EL#1 in a unit of the processing unit area BSA#1, the melt pool MP#1 is formed in at least a part of the processing unit area BSA#1. As a result, the build object is built in the processing unit area BSA#1. Here, as described above, the processing unit area BSA#1 is the area that has a width along a direction that intersects the movement direction of the processing unit area BSA#1 on the build surface MS (specifically, a direction along which the target movement trajectory MT0 extends). In this case, the build object that has a width along the direction intersecting the target movement trajectory MT0 of the processing unit area BSA#1 is built on the build surface MS. For example, in the example illustrated in FIG. 4(a) and FIG. 4(b), the build object that has a width along the X-axis direction and that extends along the Y-axis direction is built. For example, in the example illustrated in FIG. 5(a) and FIG. 5(c), the build object that has a width along the X-axis direction and that extends along the Y-axis direction is built.

In a case where the build surface MS is irradiated with the processing light EL#1 in a unit of the processing unit area BSA#1, the Galvano mirror 2146 scans the processing unit area BSA#1 with the processing light EL#1. Therefore, there is a lower possibility that an amount of the energy transferred from the processing light EL#1 to the processing unit area BSA#1 varies in the processing unit area BSA#1, compared to a case where the build surface MS is irradiated with the processing light EL#1 without using the Galvano mirror 2146. Namely, it is possible to uniform the amount of the energy transferred from the processing light EL#1 to the processing unit area BSA#1. As a result, the processing system SYS can build the build object on the build surface MS with relatively high build accuracy.

However, the processing system SYS may not irradiate the build surface MS with the processing light EL#1 in a unit of the processing unit area BSA#1. The processing system SYS may irradiate the build surface MS with the processing light EL#1 without using the Galvano \mirror 2146. In this case, the target irradiation area EA#1 may move on the build surface MS due to the movement of at least one of the processing head 21 and the stage 31.

Again in FIG. 3, the processing light EL#1 that has been reflected by the parallel plate 2142 enters the power meter 2143. The power meter 2143 is configured to detect the intensity of the processing light EL#1 that has entered the power meter 2143. For example, the power meter 2143 may include a light receiving element that detects the processing light EL#1 as light. Alternatively, the amount of the energy generated by the processing light EL#1 is larger as the intensity of the processing light EL#1 is higher. As a result, the amount of heat generated by the processing light EL#1 is larger. Therefore, the power meter 2143 may detect the intensity of the processing light EL#1 by detecting the processing light EL#1 as heat. In this case, the power meter 2143 may include a heat detection element that detects the heat of the processing light EL#1.

As described above, the processing light EL#1 that has been reflected by the parallel plate 2142 enters the power meter 2143. Therefore, the power meter 2143 detects the intensity of the processing light EL#1 that has been reflected by the parallel plate 2142. Since the parallel plate 2142 is positioned on the optical path of the processing light EL#1 between the light source 4#1 and the Galvano mirror 2146, the power meter 2143 may be considered to detect the intensity of the processing light EL#1 propagating in the optical path between the light source 4#1 and the Galvano mirror 2146. In this case, the power meter 2143 can stably detect the intensity of the processing light EL#1 without being affected by the deflection of the processing light EL#1 by the Galvano mirror 2146. However, the position of the power meter 2143 is not limited to the example illustrated in FIG. 3. For example, the power meter 2143 may detect the intensity of the processing light EL#1 propagating in the optical path between the Galvano mirror 2146 and the build surface MS. The power meter 2143 may detect the intensity of the processing light EL#1 propagating in the optical path in the Galvano mirror 2146.

A detected result by the power meter 2143 is output to the control unit 7. The control unit 7 may control (in other words, change) the intensity of the processing light EL#1 based on the detected result by the power meter 2143 (namely, the detected result of the intensity of the processing light EL#1). For example, the control unit 7 may control the intensity of the processing light EL#1 so that the intensity of the processing light EL#1 on the build surface MS is a desired intensity. In order to control the intensity of the processing light EL#1, the control unit 7 may control the light source 4#1 to change the intensity of the processing light EL#1 emitted from the light source 4#1 based on the detected result by the power meter 2143, for example. As a result, the processing system SYS can appropriately build the build object on the build surface MS by irradiating the build surface MS with the processing light EL#1 having an appropriate intensity.

As described above, the processing light EL#1 has an intensity that is capable of melting the build material M. Therefore, there is a possibility that the processing light EL#1 entering the power meter 2143 has an intensity that is capable of melting the build material M. However, if the processing light EL#1 that has an intensity that is capable of melting the build material M enters the power meter 2143, there is a possibility that the power meter 2143 is damaged by the processing light EL#1. Therefore, the processing light EL#1 having an intensity that is not high enough to damage the power meter 2143 may enter the power meter 2143. In other words, the first optical system 214 may reduce the intensity of the processing light EL#1 entering the power meter 2143 so that the processing light EL#1 having an intensity that is not high enough to damage the power meter 2143 enters the power meter 2143.

For example, in order to reduce the intensity of the processing light EL#1 entering the power meter 2143, a reflectance of the parallel plate 2142 relative to the processing light EL#1 may be set to be an appropriate value. Specifically, the intensity of the processing light EL#1 entering the power meter 2143 is lower as the reflectance of the parallel plate 2142 relative to the processing light EL#1 is lower. Therefore, the reflectance of the parallel plate 2142 may be set to a value that is low enough to realize a state where the processing light EL#1 has an intensity that is not high enough to damage the power meter 2143 enters the power meter 2143. For example, the reflectance of the parallel plate 2142 may be lower than 10%. For example, the reflectance of the parallel plate 2142 may be lower than a few percent. As the parallel plate 2142 having such a low reflectance, bare glass may be used.

For example, in order to reduce the intensity of the processing light EL#1 entering the power meter 2143, the first optical system 214 may allow the processing light EL#1 to enter the power meter 2143 through a plurality of parallel plates 2142. Specifically, the processing light EL#1, which has been reflected a plurality of times by the plurality of parallel plates 2142, respectively, may enter the power meter 2143. In this case, the intensity of the processing light EL#1 reflected a plurality of times by the plurality of parallel plates 2142, respectively, is lower than the intensity of the processing light EL#1 reflected once by a single parallel plate 2142. Therefore, there is a higher possibility that the processing light EL#1 having an intensity that is not high enough to damage the power meter 2143 enters the power meter 2143.

A desired coating processing may be performed on a surface of the parallel plate 2142 (especially, at least one of an incident surface which the processing light EL#1 enters and a reflective surface that reflects the processing light EL#1). For example, an anti-reflection coating processing (AR: Anti Reflection Coating) may be performed on the surface of the parallel plate 2142.

The second optical system 215 includes a collimator lens 2151, a parallel plate 2152, a power meter 2153, and a Galvano scanner 2154. The Galvano scanner 2154 includes a focus control optical system 2155 and a Galvano mirror 2156. However, the second optical system 215 may not include at least one of the collimator lens 2151, the parallel plate 2152, the power meter 2153, and the Galvano scanner 2154. The Galvano scanner 2154 may not include at least one of the focus control optical system 2155 and the Galvano mirror 2156.

The processing light EL#2 emitted from the light source 4#2 enters the collimator lens 2151. The collimator lens 2151 converts the processing light EL#2 that has entered the collimator lens 2151 into collimated light. Incidentally, in a case where the processing light EL#2 emitted from the light source 4#2 is collimated light (namely, the processing light EL#2 that is the collimated light enters the second optical system 215), the second optical system 215 may not include the collimator lens 2151. The processing light EL#2 that has been converted to the collimated light by the collimator lens 2151 enters the parallel plate 2152. A part of the processing light EL#2 that has entered the parallel plate 2152 passes through the parallel plate 2152. Another part of the processing light EL#2 that has entered the parallel plate 2152 is reflected by the parallel plate 2152.

The processing light EL#2 that has passed through the parallel plate 2152 enters the Galvano scanner 2154. Specifically, the processing light EL#2 that has passed through the parallel plate 2152 enters the focus control optical system 2155 of the Galvano scanner 2154.

The focus control optical system 2155 is an optical member that is configured to change a condensed position CP of the processing light EL#2 (in the below-described description, it is referred to as a "condensed position CP#2"). Specifically, the focus control optical system 2155 is configured to change the condensed position CP#2 of the processing light EL#2 along an irradiation direction of the processing light EL#2 with which the build surface MS is irradiated. In the example illustrated in FIG. 3, the irradiation direction of the processing light EL#2 with which the build surface MS is irradiated is a direction whose main component is the Z-axis direction. In this case, the focus control optical system 2155 is configured to change the condensed position CP#2 of the processing light EL#2 along the Z-axis direction. Moreover, since the irradiation optical system 211 irradiates the build surface MS with the processing light EL from a position above the workpiece W, the irradiation direction of the processing light EL#2 is a direction that intersects the build surface MS (for example, the surface of the workpiece W or the structural layer SL). Therefore, the focus control optical system 2155 may be considered to be configured to change the condensed position CP#2 of the processing light EL#2 along the direction that intersects the build surface MS (for example, the surface of the workpiece W or the structural layer SL). The focus control optical system 2155 may be considered to be configured to change the condensed position CP#2 of the processing light EL#2 along a direction of the optical axis AX of the irradiation optical system 211 (typically, the third optical system 216).

Incidentally, the irradiation direction of the processing light EL#2 may mean an irradiation direction of the processing light EL#2 emitted from the third optical system 216. In this case, the irradiation direction of the processing light EL#2 may be the same as a direction along the optical axis of the third optical system 216. The irradiation direction of the processing light EL#2 may be the same as a direction along the optical axis of the terminal optical member, which is positioned at the position closest to the build surface MS, among the optical members of the third optical system 216. The terminal optical member may be the fθ lens 2162 described below. Moreover, in a case where the below-described fθ lens 2162 includes the plurality of optical members, the terminal optical member may be the optical member, which is positioned at the position closest to the build surface MS, among the plurality of optical members of the fθ lens 2162.

The focus control optical system 2155 may include a plurality of lenses that are aligned along the irradiation direction of the processing light EL#2, for example. In this case, the focus control optical system 2155 may change the condensed position CP of the processing light EL#2 by moving at least one of the plurality of lenses along its optical axis direction.

When the focus control optical system 2155 changes the condensed position CP#2 of the processing light EL#2, a positional relationship between the condensed position CP#2 of the processing light EL#2 and the build surface MS changes. Especially, a positional relationship between the condensed position CP#2 of the processing light EL#2 and the build surface MS in the irradiation direction of the processing light EL#2 changes. Therefore, the focus control optical system 2155 may be considered to change the positional relationship between the condensed position CP#2 of the processing light EL#2 and the build surface MS by changing the condensed position CP#2 of the processing light EL#2 by the focus control optical system 2155.

Incidentally, as described above, the Galvano scanner 2154 may not include the focus control optical system 2155. Even in this case, when the positional relationship between the irradiation optical system 211 and the build surface MS in the irradiation direction of the processing light EL#2 changes, the positional relationship between the condensed position CP#2 of the processing light EL#2 and the build surface MS in the irradiation direction of the processing light EL#2 changes. Therefore, even in a case where the Galvano scanner 2154 does not include the focus control optical system 2155, the processing system SYS may change the positional relationship between the condensed position CP#2 of the processing light EL#2 and the build surface MS in the irradiation direction of the processing light EL#2. For example, the processing system SYS may change the positional relationship between the condensed position CP#2 of the processing light EL#2 and the build surface MS in the irradiation direction of the processing light EL#2 by using the head driving system 22 to move the processing head 21 along the irradiation direction of the processing light EL#2. For example, the processing system SYS may change the positional relationship between the condensed position CP#2 of the processing light EL#2 and the build surface MS in the irradiation direction of the processing light EL#2 by using the stage driving system 32 to move the stage 31 along the irradiation direction of the processing light EL#2.

The processing light EL#2 that has been emitted from the focus control optical system 2155 enters the Galvano mirror 2156. The Galvano mirror 2156 changes an emitting direction of the processing light EL#2 emitted from the Galvano mirror 2156 by deflecting the processing light EL#2. Therefore, the Galvano mirror 2156 may be referred to as a deflection optical system. When the emitting direction of the processing light EL#2 emitted from the Galvano mirror 2156 is changed, a position from which the processing head 21 emits the processing light EL#2 is changed. When the position from which the processing head 21 emits the processing light EL#2 is changed, the target irradiation area EA#2 that is irradiated with the processing light EL#2 on the build surface MS moves. Namely, an irradiation position that is irradiated with the processing light EL#2 on the build surface MS moves. Therefore, the Galvano mirror 2156 may be considered to serve as an irradiation position movement apparatus that is configured to move the irradiation position of the processing light EL#2 on the build surface MS.

Especially, when the emitting direction of the processing light EL#2 emitted from the Galvano mirror 2156 is changed, the irradiation position of the processing light EL#2 relative to the processing head 21 that includes the Galvano mirror 2156 is changed. Therefore, the Galvano mirror 2156 may be considered to serve as a position change apparatus that is configured to change the irradiation position of the processing light EL#2 relative to the processing head 21.

The Galvano mirror 2156 includes an X scanning mirror 2156MX, an X scanning motor 2156AX, a Y scanning mirror 2156MY, and a Y scanning motor 2156AY, for example. The processing light EL#2 that has been emitted from the focus control optical system 2155 enters the X scanning mirror 2156MX. The X scanning mirror 2156MX reflects the processing light EL#2 that has entered the X scanning mirror 2156MX toward the Y scanning mirror 2156MY. The Y scanning mirror 2156MY reflects the processing light EL#2 that has entered the Y scanning mirror 2156MY toward the third optical system 216. Incidentally, each of the X scanning mirror 2156MX and the Y scanning mirror 2156MY may be referred to as a Galvano mirror.

The X scanning motor 2156AX swings or rotates the X scanning mirror 2156MX around a rotational axis along the Y-axis. As a result, an angle of the X scanning mirror 2156MX relative to an optical path of the processing light EL#2 entering the X scanning mirror 2156MX is changed. In this case, the build surface MS is scanned with the processing light EL#2 along the X-axis direction due to the swing or the rotation of the X scanning mirror 2156MX. Namely, the target irradiation area EA#2 (namely, the irradiation position of the processing light EL#2) moves along the X-axis direction on the build surface MS.

The Y scanning motor 2156AY swings or rotates the Y scanning mirror 2156MY around a rotational axis along the X-axis. As a result, an angle of the Y scanning mirror 2156MY relative to an optical path of the processing light EL#2 entering the Y scanning mirror 2156MY is changed. In this case, the build surface MS is scanned with the processing light EL#2 along the Y-axis direction due to the swing or the rotation of the Y scanning mirror 2156MY. Namely, the target irradiation area EA#2 (namely, the irradiation position of the processing light EL#2) moves along the Y-axis direction on the build surface MS.

In the present example embodiment, a virtual area in which the Galvano mirror 2156 moves the target irradiation area EA#2 on the build surface MS is referred to as a processing unit area BSA (especially, the processing unit area BSA#2). In this case, the target irradiation area EA#2 may be considered to move on a surface (a first surface) of the build surface MS that overlaps with the processing unit area BSA#2. Specifically, the virtual area in which the Galvano mirror 2156 moves the target irradiation area EA#2 on the build surface MS in a state where the positional relationship between the irradiation optical system 211 and the build surface MS is fixed (namely, is not changed) is referred to as the processing unit area BSA (especially, the processing unit area BSA#2). The processing unit area BSA#2 indicates a virtual area (in other words, a range) in which the processing head 21 actually performs the additive manufacturing by using the processing light EL#2 in a state where the positional relationship between the irradiation optical system 211 and the build surface MS is fixed. The processing unit area BSA#2 indicates a virtual area (in other words, a range) that is actually scanned by the processing head 21 with the processing light EL#2 in a state where the positional relationship between the irradiation optical system 211 and the build surface MS is fixed. The processing unit area BSA#2 indicates an area (in other words, a range) in which the target irradiation area EA#2 actually moves in a state where the positional relationship between the irradiation optical system 211 and the build surface MS is fixed. Therefore, the processing unit area BSA#2 may be regarded as a virtual area that is determined with respect to the processing head 21 (especially, the irradiation optical system 211). Namely, the processing unit area BSA#2 may be regarded as a virtual area positioned at a position that is determined with respect to the processing head 21 (especially, the irradiation optical system 211) on the build surface MS. Incidentally, a maximum area in which the Galvano mirror 2156 is allowed to move the target irradiation area EA#2 on the build surface MS in a state where the positional relationship between the irradiation optical system 211 and the build surface MS is fixed may be referred to as the processing unit area BSA#2.

In this case, the processing system SYS may move the target irradiation area EA#2 in the processing unit area BSA#2 by using the Galvano mirror 2156. Therefore, an operation for deflecting the processing light EL#2 by using the Galvano mirror 2156 may be considered to be equivalent to an operation for moving the target irradiation area EA#2 in the processing unit area BSA#2. Furthermore, as described above, the melt pool MP#2 is formed by irradiating the target irradiation area EA#2 with the processing light EL#2. In this case, the processing system SYS may be considered to move the melt pool MP#2 in the processing unit area BSA#2 by using the Galvano mirror 2156. Therefore, the operation for deflecting the processing light EL#2 by using the Galvano mirror 2156 may be considered to be equivalent to an operation for moving the melt pool MP#2 in the processing unit area BSA#2. Namely, the operation for moving the target irradiation area EA#2 in the processing unit area BSA#2 may be considered to be equivalent to the operation for moving the melt pool MP#2 in the processing unit area BSA#2.

Incidentally, as described above, even when at least one of the processing head 21 and the stage 31 moves, the target irradiation area EA#2 moves on the build surface MS. However, when at least one of the processing head 21 and the stage 31 moves, the relative positional relationship between the Galvano mirror 2156 and the build surface MS changes. As a result, the processing unit area BSA#2 that is determined with respect to the processing head 21 (namely, the processing unit area BSA#2 in which the Galvano mirror 2156 moves the target irradiation area EA#2 on the build surface MS) moves on the build surface MS. Therefore, in the present example embodiment, the operation for moving at least one of the processing head 21 and the stage 31 may be considered to be equivalent to an operation for moving the processing unit area BSA#2 relative to the build surface MS.

A characteristic (for example, the shape, a movement aspect, and so on) of the processing unit area BSA#2 may be the same as a characteristic of the above-described processing unit area BSA#1. A movement aspect (for example, a movement trajectory and so on) of the target irradiation area EA#2 in the processing unit area BSA#2 may be the same as a movement aspect of the target irradiation area EA#1 in the above-described processing unit area BSA#1. Therefore, a detailed description of the characteristic of the processing unit area BSA#2 and the movement aspect (for example, the movement trajectory and so on) of the target irradiation area EA#2 in the processing unit area BSA#2 is omitted, however, one example thereof will be briefly described below. As illustrated in FIG. 4(a), the Galvano mirror 2156 may deflect the processing light EL#2 so that the target irradiation area EA#2 moves along a single scanning direction in the processing unit area BSA#2 under the assumption that the processing unit area BSA#2 is stationary (namely, does not move) on the build surface MS. The processing unit area BSA#2, which is illustrated in FIG. 4(a), may move on the build surface MS along the target movement trajectory MT0, thereby, the target irradiation area EA#2 may move on the build surface MS along a movement trajectory MT#2 illustrated in FIG. 4(b) (for example, a wave-shaped movement trajectory MT#2 that oscillates around the target movement trajectory MT0). As illustrated in FIG. 5(a) and FIG. 5(b), the Galvano mirror 2156 may deflect the processing light EL#2 so that the target irradiation area EA#2 moves along a plurality of scanning directions in the processing unit area BSA#2 under the assumption that the processing unit area BSA#2 is stationary (namely, does not move) on the build surface MS.

Incidentally, an operation for periodically moving the target irradiation area EA#2 on the build surface MS as illustrated in each of FIG. 4(a), FIG. 5(a) and FIG. 5(b) may be referred to as a wobbling operation. In other words, an operation for periodically moving (in other words, deflecting) the processing light EL#2 so that the target irradiation area EA#2 periodically moves on the build surface MS may be referred to as the wobbling operation.

Typically, the processing unit area BSA#1 coincides with the processing unit area BSA#2. Namely, the processing unit area BSA#1 is the same as the processing unit area BSA#2. Therefore, the Galvano mirror 2156 may be considered to deflect the processing light EL#2 so that the target irradiation area EA#2 moves in the processing unit area BSA#1. The Galvano mirror 2146 may be considered to deflect the processing light EL#1 so that the target irradiation area EA#1 moves in the processing unit area BSA#2. However, the processing unit area BSA#1 and the processing unit area BSA#2 may be partially different from each other.

In a case where the build surface MS is irradiated with the processing light EL#2 in a unit of the processing unit area BSA#2, the melt pool MP#2 is formed in at least a part of the processing unit area BSA#2. As a result, the build object is built in the processing unit area BSA#2. Here, as described above, the processing unit area BSA#2 is the area that has a width along a direction that intersects the movement direction of the processing unit area BSA#2 on the build surface MS (specifically, a direction along which the target movement trajectory MT0 extends). In this case, the build object that has a width along the direction intersecting the target movement trajectory MT0 of the processing unit area BSA#2 is built on the build surface MS. For example, in the examples illustrated in FIG. 4(a) and FIG. 4(b), the build object that has a width along the X-axis direction and that extends along the Y-axis direction is built. For example, in the examples illustrated in FIG. 5(a) and FIG. 5(c), the build object that has a width along the X-axis direction and that extends along the Y-axis direction is built.

In a case where the build surface MS is irradiated with the processing light EL#2 in a unit of the processing unit area BSA#2, the Galvano mirror 2156 scans the processing unit area BSA#2 with the processing light EL#2. Therefore, there is a lower possibility that an amount of the energy transferred from the processing light EL#2 to the processing unit area BSA#2 varies in the processing unit area BSA#2, compared to a case where the build surface MS is irradiated with the processing light EL#2 without using the Galvano mirror 2156. Namely, it is possible to uniform the amount of the energy transferred from the processing light EL#2 to the processing unit area BSA#2. As a result, the processing system SYS can build the build object on the build surface MS with relatively high build accuracy.

However, the processing system SYS may not irradiate the build surface MS with the processing light EL#2 in a unit of the processing unit area BSA#2. The processing system SYS may irradiate the build surface MS with the processing light EL#2 without using the Galvano mirror 2156. In this case, the target irradiation area EA#2 may move on the build surface MS due to the movement of at least one of the processing head 21 and the stage 31.

Again in FIG. 3, the processing light EL#2 that has been reflected by the parallel plate 2152 enters the power meter 2153. The power meter 2153 is one specific example of an electrical component that is used to control the processing light EL#2. Specifically, the power meter 2153 is configured to detect the intensity of the processing light EL#2 that has entered the power meter 2153. For example, the power meter 2153 may include a light receiving element that detects the processing light EL#2 as light. Alternatively, the amount of the energy generated by the processing light EL#2 is larger as the intensity of the processing light EL#2 is higher. As a result, the amount of heat generated by the processing light EL#2 is larger. Therefore, the power meter 2153 may detect the intensity of the processing light EL#2 by detecting the processing light EL#2 as heat. In this case, the power meter 2153 may include a heat detection element that detects the heat of the processing light EL#2.

As described above, the processing light EL#2 that has been reflected by the parallel plate 2152 enters the power meter 2153. Therefore, the power meter 2153 detects the intensity of the processing light EL#2 that has been reflected by the parallel plate 2152. Since the parallel plate 2152 is positioned on the optical path of the processing light EL#2 between the light source 4#2 and the Galvano mirror 2156, the power meter 2153 may be considered to detect the intensity of the processing light EL#2 propagating in the optical path between the light source 4#2 and the Galvano mirror 2156. In this case, the power meter 2153 can stably detect the intensity of the processing light EL#2 without being affected by the deflection of the processing light EL#2 by the Galvano mirror 2156. However, the position of the power meter 2153 is not limited to the example illustrated in FIG. 3. For example, the power meter 2153 may detect the intensity of the processing light EL#2 propagating in the optical path between the Galvano mirror 2156 and the build surface MS. The power meter 2153 may detect the intensity of the processing light EL#2 propagating in the optical path in the Galvano mirror 2156.

A detected result by the power meter 2153 is output to the control unit 7. The control unit 7 may control (in other words, change) the intensity of the processing light EL#2 based on the detected result by the power meter 2153 (namely, the detected result of the intensity of the processing light EL#2). For example, the control unit 7 may control the intensity of the processing light EL#2 so that the intensity of the processing light EL#2 on the build surface MS is a desired intensity. In order to control the intensity of the processing light EL#2, the control unit 7 may control the light source 4#2 to change the intensity of the processing light EL#2 emitted from the light source 4#2 based on the detected result by the power meter 2153, for example. As a result, the processing system SYS can appropriately build the build object on the build surface MS by irradiating the build surface MS with the processing light EL#2 having an appropriate intensity.

As described above, the processing light EL#2 has an intensity that is capable of melting the build material M. Therefore, there is a possibility that the processing light EL#2 entering the power meter 2153 has an intensity that is capable of melting the build material M. However, if the processing light EL#2 that has an intensity that is capable of melting the build material M enters the power meter 2153, there is a possibility that the power meter 2153 is damaged by the processing light EL#2. Therefore, the processing light EL#2 having an intensity that is not high enough to damage the power meter 2153 may enter the power meter 2153. In other words, the second optical system 215 may reduce the intensity of the processing light EL#2 entering the power meter 2153 so that the processing light EL#2 having an intensity that is not high enough to damage the power meter 2153 enters the power meter 2153.

For example, in order to reduce the intensity of the processing light EL#2 entering the power meter 2153, a reflectance of the parallel plate 2152 relative to the processing light EL#2 may be set to be an appropriate value. Specifically, the intensity of the processing light EL#2 entering the power meter 2153 is lower as the reflectance of the parallel plate 2152 relative to the processing light EL#2 is lower. Therefore, the reflectance of the parallel plate 2152 may be set to a value that is low enough to realize a state where the processing light EL#2 has an intensity that is not high enough to damage the power meter 2153 enters the power meter 2153. For example, the reflectance of the parallel plate 2152 may be lower than 10%. For example, the reflectance of the parallel plate 2152 may be lower than a few percent. As the parallel plate 2152 having such a low reflectance, bare glass may be used.

For example, in order to reduce the intensity of the processing light EL#2 entering the power meter 2153, the second optical system 215 may allow the processing light EL#2 to enter the power meter 2153 through a plurality of parallel plates 2152. Specifically, the processing light EL#2, which has been reflected a plurality of times by the plurality of parallel plates 2152, respectively, may enter the power meter 2153. In this case, the intensity of the processing light EL#2 reflected a plurality of times by the plurality of parallel plates 2152, respectively, is lower than the intensity of the processing light EL#2 reflected once by a single parallel plate 2152. Therefore, there is a higher possibility that the processing light EL#2 having an intensity that is not high enough to damage the power meter 2153 enters the power meter 2153.

A desired coating processing may be performed on a surface of the parallel plate 2152 (especially, at least one of an incident surface which the processing light EL#2 enters and a reflective surface that reflects the processing light EL#2). For example, an anti-reflection coating processing (AR: Anti Reflection Coating) may be performed on the surface of the parallel plate 2152.

The third optical system 216 includes a prism mirror 2161 and the fθ lens 2162.

Each of the processing light EL#1 emitted from the first optical system 214 and the processing light EL#2 emitted from the second optical system 215 enters the prism mirror 2161. The prism mirror 2161 reflects each of the processing lights EL#1 and EL#2 toward the fθ lens 2162. The prism mirror 2161 reflects, toward the same direction (specifically, toward the fθ lens 2162), the processing lights EL#1 and EL#2 that enters the prism mirror 2161 from different directions, respectively.

Incidentally, in a case where each of the processing light EL#1 emitted from the first optical system 214 and the processing light EL#2 emitted from the second optical system 215 can directly enter the fθ lens 2162, the third optical system 216 may not include the prism mirror 2161.

The fθ lens 2162 is an optical system for emitting each of the processing lights EL#1 and EL#2, which have been reflected by the prism mirror 2161, toward the build surface MS. Namely, the fθ lens 2162 is an optical system for irradiating the build surface MS with each of the processing lights EL#1 and EL#2 that have been reflected by the prism mirror 2161. As a result, the build surface MS is irradiated with the processing lights EL#1 and EL#2 that have passed through the fθ lens 2162.

The fθ lens 2162 may be an optical element that is configured to condense each of the processing lights EL#1 and EL#2 on a condensed plane. In this case, the fθ lens 2162 may be referred to as a condensing optical system. The condensed plane of the fθ lens 2162 may be set on the build surface MS, for example. In this case, the third optical system 216 may be considered to include a condensing optical system whose projection characteristic is fθ. However, the third optical system 216 may include a condensing optical system whose projection characteristic is different from fθ. For example, the third optical system 216 may include a condensing optical system whose projection characteristic is f×tanθ. For example, the third optical system 216 may include a condensing optical system whose projection characteristic is f×sinθ.

An optical axis AX of the fθ lens 2162 is an axis along the Z-axis. Therefore, the fθ lens 2162 emits each of the processing lights EL#1 and EL#2 along the Z-axis direction. In this case, the irradiation direction of the processing light EL#1 and the irradiation direction of the processing light EL#2 may be the same direction. Both of the irradiation direction of the processing light EL#1 and the irradiation direction of the processing light EL#2 may be the Z-axis direction. Both of the irradiation direction of the processing light EL#1 and the irradiation direction of the processing light EL#2 may be directions along the optical axis AX of the fθ lens 2162. However, the irradiation direction of the processing light EL#1 and the irradiation direction of the processing light EL#2 may not be the same direction. The irradiation direction of the processing light EL#1 and the irradiation direction of the processing light EL#2 may be directions that are different from each other.

### (2) Operation of Processing System SYS

Next, an operation of the processing system SYS will be described.

### (2-1) Additive Manufacturing Operation performed by Processing System SYS

First, the additive manufacturing (an additive manufacturing operation) performed by the processing system SYS on the workpiece W will be described. The additive manufacturing performed on the workpiece W corresponds to an operation for building the build object so as to add, to the workpiece W, the build object that is integrated with (alternatively, separable from) the workpiece W. In the below-described description, the additive manufacturing for building the three-dimensional structural object ST that is the build object having a desired shape will be described, for convenience of description. As described above, the processing system SYS builds the three-dimensional structural object ST by performing the additive manufacturing based on the Laser Metal Deposition. Therefore, the processing system SYS may build the three-dimensional structural object ST by performing the existing additive manufacturing based on the Laser Metal Deposition. Next, one example of the operation for building the three-dimensional structural object ST by using the Laser Metal Deposition will be briefly described.

The processing system SYS builds the three-dimensional structural object ST on the workpiece W based on three-dimensional model data (in other words, three-dimensional model information) and the like of the three-dimensional structural object ST that should be built. Measured data of the solid object measured by at least one of a non-illustrated measurement apparatus mounted in the processing system SYS and a three-dimensional shape measurement device mounted separately from the processing system SYS may be used as the three-dimensional model data. The processing system SYS successively builds a plurality of layered partial structural objects (it is referred to as the "structural layer" in the below-described description) SL that are arranged along the Z-axis direction in order to build the three-dimensional structural object ST, for example. For example, the processing system SYS builds, one by one in sequence, the plurality of structural layers SL based on data related to a plurality of layers that are obtained by slicing the three-dimensional model of the three-dimensional structural object ST along the Z-axis direction. As a result, the three-dimensional structural object ST that is a layered structural body in which the plurality of structural layers SL are stacked is built. Note that the structural layer SL may not be the build object having a layered shape. Next, a flow of an operation for forming the three-dimensional structural object ST by forming the plurality of structural layers SL one by one in sequence will be described.

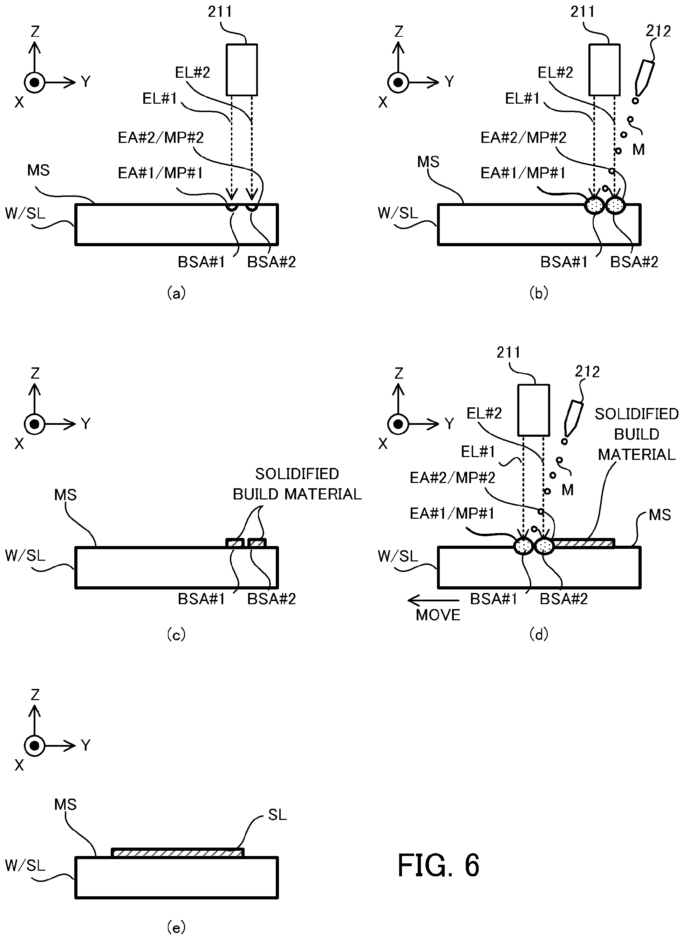

First, with reference to FIG. 6(a) to FIG. 6(e), an operation for building each structural layer SL will be described. The processing system SYS moves at least one of the processing head 21 and the stage 31 under the control of the control unit 7 so that the processing unit areas BSA#1 and BSA#2 are set in a desired area on the build surface MS that corresponds to the surface of the workpiece W or the surface of the already built structural layer SL. Then, the irradiation optical system 211 irradiates the processing unit areas BSA#1 and BSA#2 with the processing lights EL#1 and EL#2, respectively. In this case, the condensed positions CP#1 and CP#2 on which the processing lights EL#1#1 and EL#2 are condensed in the Z-axis direction, respectively, may be positioned on the build surface MS. Alternatively, the condensed positions CP#1 and CP#2 on which the processing lights EL#1#1 and EL#2 are condensed in the Z-axis direction, respectively, may be away from the build surface MS. As a result, as illustrated in FIG. 6(a), the melt pools MP#1 and MP#2 are formed on the build surface MS that is irradiated with the processing lights EL#1 and EL#2, respectively. Furthermore, as illustrated in FIG. 6(b), the processing system SYS supplies the build material M from the material nozzle 212 under the control of the control unit 7. As a result, the build material M is supplied to each of the melt pools MP#1 and MP#2. The build material M supplied to the melt pool MP#1 is molten by the processing light EL#1 with which the melt pool MP#1 is irradiated. Similarly, the build material M supplied to the melt pool MP#2 is molten by the processing light EL#2 with which the melt pool MP#2 is irradiated.

Furthermore, the irradiation optical system 211 moves the target irradiation areas EA#1 and EA#2 in the processing unit areas BSA#1 and BSA#2, respectively, by using the Galvano mirrors 2146 and 2156. Namely, the irradiation optical system 211 scans the processing unit areas BSA#1 and BSA#2 with the processing lights EL#1 and EL#2, respectively, by using the Galvano mirrors 2146 and 2156. After the melt pool MP#1 is no longer irradiated with the processing light EL#1 due to the movement of the target irradiation area EA#1, the build material M molten in the melt pool MP#1 is cooled and solidified (namely, coagulated). Similarly, after the melt pool MP#2 is no longer irradiated with the processing light EL#2 due to the movement of the target irradiation area EA#2, the build material M molten in the melt pool MP#2 is cooled and solidified (namely, coagulated). Furthermore, the melt pools MP#1 and MP#2 move due to the movement of the target irradiation areas EA#1 and EA#2. As a result, as illustrated in FIG. 6(c), the build objects including the solidified build material M are deposited on the build surface MS in the processing unit areas BSA#1 and BSA#2 in which the melt pools MP#1 and MP#2 move.

Incidentally, in FIG. 6(c), for convenience of description, the build object including the build material M solidified in the processing unit area BSA#1 is physically separated from the build object including the build material M solidified in the processing unit area BSA#2. However, the build object including the build material M solidified in the processing unit area BSA#1 may be integrated with the build object including the build material M solidified in the processing unit area BSA#2. Especially in a case where the processing unit areas BSA#1 and BSA#2 coincide with each other (alternatively, partially overlap with each other), the build object including the build material M solidified in the processing unit area BSA#1 may be integrated with the build object including the build material M solidified in the processing unit area BSA#2.

In a period during which the target irradiation areas EA#1 and EA#2 move in the processing unit areas BSA#1 and BSA#2, respectively, the processing system SYS may move at least one of the processing head 21 and the stage 31 so that the processing unit areas BSA#1 and BSA#2 move on the build surface MS. Namely, the processing system SYS may move each of the target irradiation areas EA#1 and EA#2 in the processing unit areas BSA#1 and BSA#2 and move the processing unit areas BSA#1 and BSA#2 on the build surface MS in parallel.

Alternatively, in the period during which the target irradiation areas EA#1 and EA#2 move in the processing unit areas BSA#1 and BSA#2, respectively, the processing system SYS may not move the processing head 21 and the stage 31 to prevent the processing unit areas BSA#1 and BSA#2 from moving on the build surface MS. In this case, after the additive manufacturing (namely, the building) in the processing unit areas BSA#1 and BSA#2 is completed, the processing system SYS may move at least one of the processing head 21 and the stage 31 so that the processing unit areas BSA#1 and BSA#2 are set in another area on the build surface MS . Namely, the processing system SYS may move at least one of the processing head 21 and the stage 31 so that the processing unit areas BSA#1 and BSA#2 move on the build surface MS after the additive manufacturing (namely, the building) in the processing unit areas BSA#1 and BSA#2 is completed. In this case, the processing system SYS may move at least one of the processing head 21 and the stage 31 so that an area on which the processing unit areas BSA#1 and BSA#2 have already been set (namely, an area in which the additive manufacturing has already been performed) on the build surface MS is adjacent to an area on which the processing unit areas BSA#1 and BSA#2 are newly set (namely, an area in which the additive manufacturing is performed next) on the build surface MS. Especially, the processing system SYS may move at least one of the processing head 21 and the stage 31 so that the area on which the processing unit areas BSA#1 and BSA#2 have already been set on the build surface MS does not overlap with the area on which the processing unit areas BSA#1 and BSA#2 are newly set on the build surface MS. However, the processing system SYS may move at least one of the processing head 21 and the stage 31 so that the area on which the processing unit areas BSA#1 and BSA#2 have already been set on the build surface MS partially overlaps with the area on which the processing unit areas BSA#1 and BSA#2 are newly set on the build surface MS.

The processing system SYS repeats a series of build process including the formation of the melt pool MP#1 by the irradiation with the processing light EL#1 in the processing unit area BSA#1, the formation of the melt pool MP#2 by the irradiation with the processing light EL#2 in the processing unit area BSA#2, the supply of the build material M to the melt pools MP#1 and MP#2, the melting of the supplied build material M, and the solidification of the molten build material M while moving the processing unit areas BSA#1 and BSA#2 along the target movement trajectory MT0, as illustrated in FIG. 6(d). In this case, the build object that has the width along the direction intersecting the target movement trajectory MT0 is built on the build surface MS due to the movement of each of the processing unit areas BSA#1 and BSA#2. For example, in a case where each of the processing unit areas BSA#1 and BSA#2 moves as illustrated in FIG. 4(a) and FIG. 4(b), the build object that has a width along the X-axis direction and that extends along the Y-axis direction is built. For example, in a case where each of the processing unit areas BSA#1 and BSA#2 moves as illustrated in FIG. 5(a) and FIG. 5(c), the build object that has a width along the X-axis direction and that extends along the Y-axis direction is built.

As a result, as illustrated in FIG. 6(e), the structural layer SL corresponding to the build object that is an aggregation of the build material M, which has been solidified after being molten, is built on the build surface MS. Namely, the structural layer SL, which corresponds to an aggregation of the build object that has been built on the build surface MS in a pattern based on the target movement trajectory MT0 of the processing unit areas BSA#1 and BSA#2, is built. Namely, the structural layer SL having a shape based on the target movement trajectory MT0 of the processing unit areas BSA#1 and BSA#2 in a planar view is built.

Incidentally, in a case where the target irradiation area EA#1 is set at the area on which the build object should not be built, the processing system SYS may not irradiate the target irradiation areas EA#1 with the processing light EL#1. Alternatively, the processing system SYS may irradiate the target irradiation areas EA#1 with the processing light EL#1 and stop the supply of the build material M. Alternatively, the processing system SYS may supply the build material M to the target irradiation areas EA#1 and irradiate the target irradiation areas EA#1 with the processing light EL#1 having an intensity by which the melt pool MP is not formed. The same may be applied to a case where the target irradiation area EA#2 is set at the area on which the build object should not be built.

The target movement trajectory MT0 of each of the processing unit areas BSA#1 and BSA#2 may be referred to as a processing path (in other words, a tool path). In this case, the control unit 7 may move at least one of the processing head 21 and the stage 31 based on path information indicating the target movement trajectory MT0 (namely, path information indicating the processing path) so that each of the processing unit areas BSA#1 and BSA#2 moves along the target movement trajectory MT0 on the build surface MS.

The path information may include information related to a target value of the width of the build object (in the below-described description, it is referred to as a "target width"), in addition to indicating the target movement trajectory MT0. The target width may be referred to as a line width or a bead width. Specifically, as described above, the build object having the width along the direction intersecting the target movement trajectory MT0 is built on the build surface MS due to the movement of each of the processing unit areas BSA#1 and BSA#2 along the target movement trajectory MT0. For example, in a case where each of the processing unit areas BSA#1 and BSA#2 moves along the Y-axis direction as illustrated in FIG. 7(a), a linear build object that has a width along the X-axis direction and that extends along the Y-axis direction is built on the build surface MS as illustrated in FIG. 7(b). Incidentally, the above-described structural layer SL corresponds to an aggregation of the linear build object illustrated in FIG. 7(b). In this case, the path information may include the information related to the target value (namely, the target width) of the width D of the linear build object, as illustrated in FIG. 7(b). Namely, the path information may include the information related to the width of the linear build object (namely, a line) that should be built on the build surface MS. Incidentally, the information related to the target width of the linear build object (namely, the information related to the width of the line that should be built) may be referred to as line width information.

In this case, the control unit 7 may control the Galvano mirrors 2146 and 2156 based on the line width information so that the target irradiation areas EA#1 and EA#2 move in the processing unit areas BSA#1 and BSA#2, respectively. For example, the control unit 7 may control the Galvano mirrors 2146 and 2156 so that the target irradiation areas EA#1 and EA#2 periodically move inside the width of the line indicated by the line width information, respectively. Namely, the control unit 7 may control the Galvano mirrors 2146 and 2156 so that the target irradiation areas EA#1 and EA#2 do not deviate toward an outside of the width of the line indicated by the line width information, respectively. In other words, the control unit 7 may control the Galvano mirrors 2146 and 2156 so that the target irradiation areas EA#1 and EA#2 periodically move inside the target width of the build object indicated by the line width information, respectively. Namely, the control unit 7 may control the Galvano mirrors 2146 and 2156 so that the target irradiation areas EA#1 and EA#2 do not deviate toward an outside of the target width of the build object indicated by the line width information, respectively.

As a result, the melt pools MP#1 and MP#2 also periodically move inside the width of the line indicated by the line width information. Namely, the melt pools MP#1 and MP#2 do not deviate toward the outside of the width of the line indicated by the line width information. In other words, the melt pools MP#1 and MP#2 periodically move inside the target width of the build object indicated by the line width information. In other words, the melt pools MP#1 and MP#2 do not deviate toward the outside of the target width of the build object indicated by the line width information. Therefore, the processing system SYS can appropriately build the linear build object having the target width indicated by the line width information.

The width of the line (namely, the target width of the build object) indicated by the line width information may be the same as the width of each of the processing unit areas BSA#1 and BSA#2. Alternatively, the width of the line (namely, the target width of the build object) indicated by the line width information may be smaller than the width of each of the processing unit areas BSA#1 and BSA#2. Incidentally, each of a size in the X-axis direction and a size along the Y-axis direction of each of the processing unit areas BSA#1 and BSA#2 may be several millimeters. However, the size of each of the processing unit areas BSA#1 and BSA#2 is not limited to several millimeters.

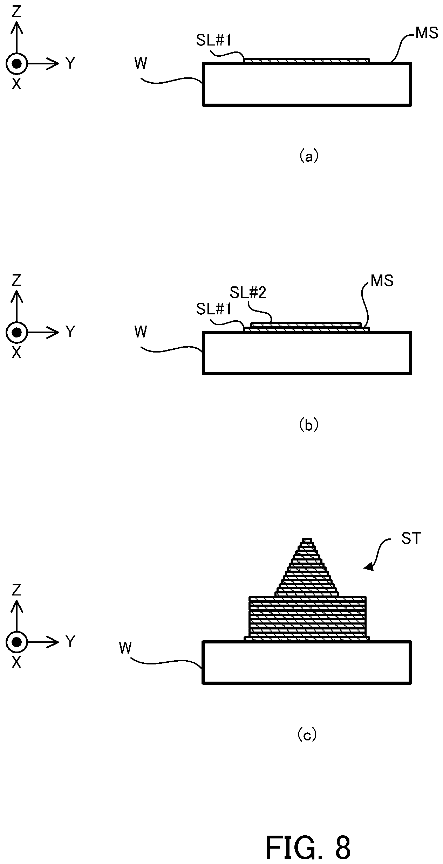

The processing system SYS repeats the operation for building the structural layer SL based on the three-dimensional model data under the control of the control unit 7. Specifically, the control unit 7 first generates slice data by performing a slicing process on the three-dimensional model data by a layer pitch before performing the operation for building the structural layer SL. The processing system SYS performs an operation for building a first structural layer SL#1 on the build surface MS that corresponds to the surface of the workpiece W based on the slice data corresponding to the structural layer SL#1. Specifically, the control unit 7 acquires the path information that is for building the first structural layer SL#1 and that is generated based on the slice data corresponding to the structural layer SL#1. Incidentally, the control unit 7 may generate the path information after or before the processing system SYS starts the additive manufacturing. Then, the control unit 7 controls the processing unit 2 and the stage unit 3 to build the first structural layer SL#1 based on the path information. As a result, as illustrated in FIG. 8(a), the structural layer SL#1 is built on the build surface MS. Then, the processing system SYS sets a surface (namely, an upper surface) of the structural layer SL#1 to be a new build surface MS and builds a second structural layer SL#2 on the new build surface MS. In order to build the structural layer SL#2, first, the control unit 7 controls at least one of the head driving system 22 and the stage driving system 32 so that the processing head 21 moves along the Z-axis direction relative to the stage 31. Specifically, the control unit 7 controls at least one of the head driving system 22 and the stage driving system 32 to move the processing head 21 toward the +Z-axis side and / or to move the stage 31 toward the -Z-axis direction so that the processing unit areas BSA#1 and BSA#2 are set on the surface of the structural layer SL#1 (namely, the new build surface MS). Then, the processing system SYS builds the structural layer SL#2 on the structural layer SL#1 based on the slice data corresponding to the structural layer SL#2, by performing an operation that is the same as the operation for building the structural layer SL#1 under the control of the control unit 7. As a result, as illustrated in FIG. 8(b), the structural layer SL#2 is built. Then, the same operation is repeated until all structural layers SL constituting the three-dimensional structural object ST that should be built on the workpiece W are built. As a result, the three-dimensional structural object ST is built by a layered structural object in which the plurality of structural layers SL are stacked, as illustrated in FIG. 8(c).

### (2-2) Melt Pool Feedback Control Operation based on Melt Pool Image IMG

The processing system SYS may perform a melt pool feedback control operation based on the melt pool image IMG generated by the imaging unit 8, in parallel with the above-described additive manufacturing operation. Namely, the processing system SYS may perform the melt pool feedback control operation in at least a part of a period during which the above-described additive manufacturing operation is performed. The melt pool feedback control operation is an operation for controlling the processing unit 2 based on the melt pool image IMG so that a size of a melt pool area MPA in the melt pool image IMG is a target size TS. Incidentally, the melt pool area MPA will be described in detail later.

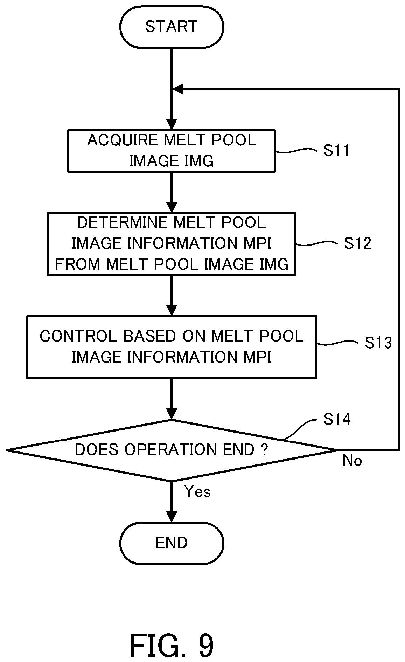

Next, with reference to FIG. 9, a flow of the melt pool feedback control operation will be described. FIG. 9 is a flowchart that illustrates the flow of the melt pool feedback control operation.

As illustrated in FIG. 9, the control unit 7 acquires the melt pool image IMG from the imaging unit 8 (a step S11). Specifically, the imaging unit 8 images the workpiece W or the structural layer SL on which the melt pools MP#1 and MP#2 are formed. Namely, the imaging unit 8 images the melt pools MP#1 and MP#2. As a result, the imaging unit 8 generates the melt pool image IMG in which the melt pools MP#1 and MP#2 are captured. The imaging unit 8 outputs the generated melt pool image IMG to the control unit 7. As a result, the control unit 7 acquires the melt pool image IMG.

The imaging unit 8 images the melt pools MP#1 and MP#2 so that the melt pools MP#1 and MP#2 are included in an imaging range of the imaging unit 8. Specifically, the imaging unit 8 may be aligned with the workpiece W or the structural layer SL on which the melt pools MP#1 and MP#2 are formed so that the melt pools MP#1 and MP#2 are included in the imaging range of the imaging unit 8. The imaging unit 8 may be aligned with the processing head 21 so that the melt pools MP#1 and MP#2 formed on the build surface MS by the processing head 21 are included in the imaging range of the imaging unit 8. As a result, the imaging unit 8 can appropriately image the melt pools MP#1 and MP#2.

As described above, the melt pools MP#1 and MP#2 move in the processing unit areas BSA#1 and BSA#2 by the Galvano mirrors 2146 and 2156, respectively. **In** this case, the imaging unit 8 may image the melt pools MP so that a movement range of the melt pool MP#1 and MP#2 is included in the imaging range of the imaging unit 8. Namely, the imaging unit 8 may image the melt pools MP so that the processing unit areas BSA#1 and BSA#2 are included in the imaging range of the imaging unit 8. Specifically, the imaging unit 8 may be aligned with the workpiece W or the structural layer SL on which the melt pools MP are formed so that the movement range of the melt pools MP#1 and MP#2 (namely, the processing unit areas BSA#1 and BSA#2) is included in the imaging range of the imaging unit 8. The imaging unit 8 may be aligned with the processing head 21 so that the movement range of the melt pools MP#1 and MP#2 formed on the build surface MS by the processing head 21 (namely, the processing unit areas BSA#1 and BSA#2) is included in the imaging range of the imaging unit 8. As a result, the imaging unit 8 can appropriately image the melt pools MP#1 and MP#2 that move in the processing unit areas BSA#1 and BSA#2, respectively.

The imaging unit 8 may repeatedly image the workpiece W or the structural layer SL on which the melt pools MP are formed at a predetermined imaging rate. Namely, the imaging unit 8 may successively image the workpiece W or the structural layer SL on which the melt pools MP are formed at the predetermined imaging rate the plurality of times. Incidentally, the imaging rate may be an index value that indicates the number of times the imaging unit 8 images the workpiece W or the structural layer SL per unit time (for example, per second). **In** other words, the imaging unit 8 may repeatedly image the workpiece W or the structural layer SL each time a predetermined imaging cycle elapses. For example, the imaging unit 8 may image the workpiece W or the structural layer SL at a first time, and then image the workpiece W or the structural layer SL at a second time at which the predetermined imaging cycle has elapsed from the first time. Incidentally, the imaging cycle may be an inverse number of the imaging rate. In this case, the imaging unit 8 may generate a plurality of melt pool images IMG as time series data. The control unit 7 may acquire the plurality of melt pool images IMG as the time series data.

The Galvano mirror 2146 moves the melt pool MP#1 in the processing unit area BSA#1 even in a period during which the imaging unit 8 repeatedly images the workpiece W or the structural layer SL. In this case, the imaging unit 8 may image the melt pool MP#1 formed at a first position on the build surface MS at a first time, and then image the melt pool MP#1 formed at a second position on the build surface MS, which is different from the first position, at a second time, which is different from the first time. Namely, the imaging unit 8 may image the melt pool MP#1 that exists at the first position on the build surface MS at the first time, and then image the melt pool MP#1 that exists at the second position on the build surface MS at the second time. As a result, the plurality of melt pool images IMG generated by the imaging unit 8 may include a melt pool image IMG in which the melt pool MP#1 formed at the first position on the build surface MS is captured and a melt pool image IMG in which the melt pool MP#1 formed at the second position on the build surface MS is captured. Namely, the plurality of melt pool images IMG may include a melt pool image IMG indicating the melt pool MP#1 formed at the first position on the build surface MS and a melt pool image IMG indicating the melt pool MP#1 formed at the second position on the build surface MS. The plurality of melt pool images IMG may include a melt pool image IMG generated by imaging the melt pool MP#1 formed at the first position on the build surface MS and a melt pool image IMG generated by imaging the melt pool MP#1 formed at the second position on the build surface MS.

Similarly, the Galvano mirror 2156 moves the melt pool MP#2 in the processing unit area BSA#2 even in a period during which the imaging unit 8 repeatedly images the workpiece W or the structural layer SL. In this case, the imaging unit 8 may image the melt pool MP#2 formed at a third position on the build surface MS at the first time, and then image the melt pool MP#2 formed at a fourth position on the build surface MS, which is different from the third position, at the second time, which is different from the first time. Namely, the imaging unit 8 may image the melt pool MP#2 that exists at the third position on the build surface MS at the first time, and then image the melt pool MP#2 that exists at the fourth position on the build surface MS at the second time. As a result, the plurality of melt pool images IMG generated by the imaging unit 8 may include a melt pool image IMG in which the melt pool MP#2 formed at the third position on the build surface MS is captured and a melt pool image IMG in which the melt pool MP#2 formed at the fourth position on the build surface MS is captured. Namely, the plurality of melt pool images IMG may include a melt pool image IMG indicating the melt pool MP#2 formed at the third position on the build surface MS and a melt pool image IMG indicating the melt pool MP#2 formed at the fourth position on the build surface MS. The plurality of melt pool images IMG may include a melt pool image IMG generated by imaging the melt pool MP#2 formed at the third position on the build surface MS and a melt pool image IMG generated by imaging the melt pool MP#2 formed at the fourth position on the build surface MS.

Incidentally, in a case where the imaging unit 8 repeatedly images the workpiece W or the structural layer SL, the imaging unit 8 may be considered to expose an imaging element to light from the workpiece W or the structural layer SL the plurality of times. In this case, the plurality of exposures of the imaging element may be referred to as a multiple exposure. Namely, the imaging unit 8 may generate the plurality of melt pool images IMG as the time series data by performing the multiple exposure of the imaging element. In other words, the imaging unit 8 may generate the plurality of melt pool images IMG as the time series data by performing the multiple exposure of melt pools MP by the imaging element. In other words, the imaging unit 8 may perform the multiple exposure of melt pools MP by the imaging element to generate the plurality of melt pool images IMG as a result of the multiple exposure.

Alternatively, in a case where the imaging unit 8 repeatedly images the workpiece W or the structural layer SL, the imaging unit 8 may expose the imaging element to the light from the workpiece W or the structural layer SL the plurality of times in a single imaging operation for generating a single melt pool image IMG. In this case, the plurality of exposures of the imaging element in the single imaging for generating the single melt pool image IMG may be referred to as the multiple exposure. Namely, the imaging unit 8 may generate the single melt pool image IMG by performing the multiple exposure of the imaging element. Furthermore, the imaging unit 8 may generate the plurality of melt pool images IMG as the time series data by repeatedly performing the multiple exposure of the imaging element for generating the single melt pool image IMG. In other words, the imaging unit 8 may perform the multiple exposure of melt pools MP by the imaging element to generate the plurality of melt pool images IMG as a result of the multiple exposure.

Then, the control unit 7 generates melt pool image information MPI based on at least one melt pool image IMG acquired at the step S11 (a step S12). The melt pool image information MPI is information related to the melt pools MP#1 and MP#2 that are captured in the melt pool image IMG.

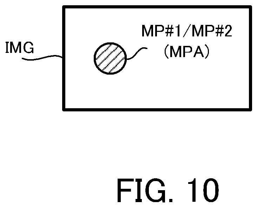

The control unit 7 may generate information related to the melt pool area MPA as one example of the melt pool image information MPI. The melt pool area MPA may include an area in which the melt pools MP #1 and MP #2 are captured in the melt pool image IMG, as illustrated in FIG. 10.

In order to generate the information related to the melt pool area MPA, the control unit 7 may use at least two of the plurality of melt pool images IMG acquired as the time series data at the step S10. Namely, the control unit 7 may generate the information related to the melt pool area MPA by using the plurality of melt pool images IMG that correspond to at least some of the plurality of melt pool images IMG acquired as the time series data at the step S10.

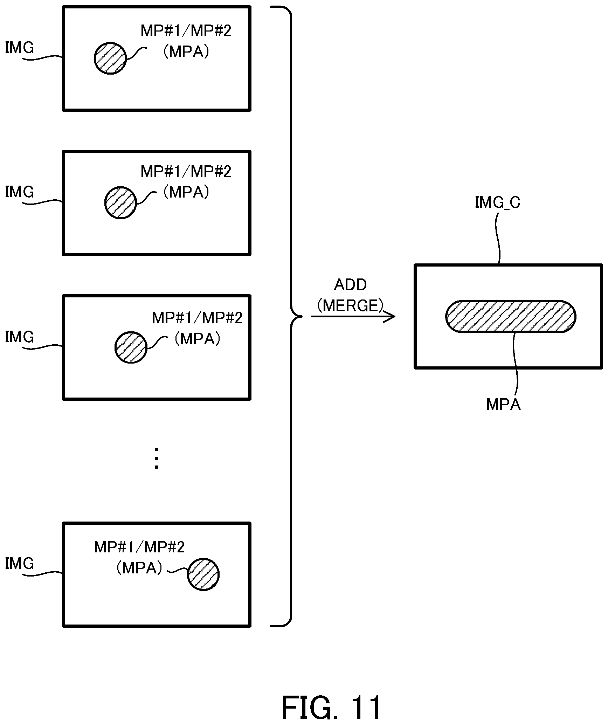

Specifically, a left side of FIG. 11 illustrates the plurality of melt pool images IMG acquired as the time series data. As illustrated on the left side of FIG. 11, in a case where the melt pool MP#1 moves by the Galvano mirror 2146, there is a possibility that a position at which the melt pool MP#1 is captured changes between the plurality of melt pool images IMG. This is because the imaging unit 8 may image the melt pool MP#1 formed at the first position on the build surface MS at the first time, and then image the melt pool MP#1 formed at the second position on the build surface MS, which is different from the first position, at the second time, which is different from the first time, as described above, in a case where the melt pool MP#1 moves by the Galvano mirror 2146. Especially, there is a higher possibility that a position at which the melt pool MP#1 is captured changes between the plurality of melt pool images IMG in a case where an exposure time of the imaging unit 8 is shorter than a certain time. For the same reason, there is a possibility that a position at which the melt pool MP#2 is captured changes between the plurality of melt pool images IMG in a case where the melt pool MP#2 moves by the Galvano mirror 2156.

In this case, the control unit 7 may generate an addition image IMG_C by adding at least two successive melt pool images IMG of the plurality of melt pool images IMG acquired at the step S10, in order to generate the information related to the melt pool area MPA, as illustrated in FIG. 11. Namely, the control unit 7 may generate the addition image IMG_C by merging at least two successive melt pool images IMG. Incidentally, the addition image IMG_C may be referred to as a merged image.

Specifically, the control unit 7 may add at least two successive melt pool images IMG in units of pixels. For example, the control unit 7 may add signal values of at least two successive melt pool images IMG in units of pixels. A value related to a brightness (namely, a luminance value) is one example of the signal value of the melt pool image IMG. The number of melt pool images IMG that should be added may be set in advance. The number of melt pool images IMG that should be added may be set appropriately by the control unit 7. An addition frame number, which is the number of melt pool images IMG that should be added, may be set appropriately by a user of the processing system SYS.

In this case, the addition image IMG_C may be an image in which the signal value of each pixel of the addition image IMG_C is a total sum of the signal values of corresponding pixels of at least two added melt pool images IMG. Specifically, the addition image IMG_C may be an image in which the signal value of the pixel in a x-th row and a y-th column of the addition image IMG_C is a total sum of the signal values of the pixels in the x-th row and the y-th column of at least two added melt pool images IMG. Note that x is a variable number representing an integer that is larger than or equal to 1 and that is smaller than or equal to the total number of pixels along a horizontal direction of each of the addition image IMG_C and the melt pool image IMG. y is a variable number representing an integer that is larger than or equal to 1 and that is smaller than or equal to the total number of pixels along a vertical direction of each of the addition image IMG_C and the melt pool image IMG.

Alternatively, the addition image IMG_C may be an image in which the signal value of each pixel of the addition image IMG_C is an average value of the signal values of corresponding pixels of at least two added melt pool images IMG. For example, the addition image IMG_C may be an image in which the signal value of the pixel in the x-th row and the y-th column of the addition image IMG_C is an average value of the signal values (namely, a value obtained by dividing the total sum of the signal values by the addition frame number) of the pixels in the x-th row and the y-th column of at least two added melt pool images IMG. In this case, the control unit 7 may calculate the total sum of the signal values of corresponding pixels of at least two melt pool images IMG, and then divide the calculated sum by the addition frame number to generate the addition image IMG_C. Alternatively, the control unit 7 may generate the addition image IMG_C by dividing the signal values of corresponding pixels of at least two melt pool images IMG by the addition frame number, and then calculate the total sum of the signal values of corresponding pixels.

Alternatively, the addition image IMG_C may be an image in which the signal value of each pixel of the addition image IMG_C is a moving average value of the signal values of corresponding pixels of at least two added melt pool images IMG. For example, the control unit 7 may generate the addition image IMG_C by calculating the moving average of the signal values of corresponding pixels of the at least two melt pool images IMG recently acquired. As one example, the control unit 7 may generate a first addition image IMG_C by calculating the moving average of the signal values of corresponding pixels of ten melt pool images IMG to which a first frame to a tenth frame are assigned as indices, and then generate a second addition image IMG_C by calculating the moving average of the signal values of corresponding pixels of ten melt pool images IMG to which a second frame to a eleventh frame are assigned as indices, and then generate a third addition image IMG_C by calculating the moving average of the signal values of corresponding pixels of ten melt pool images IMG to which a third frame to a twelfth frame are assigned as indices. Then, the control unit 7 may generate the addition image IMG_C in a same manner.

The control unit 7 typically acquires the melt pool image IMG indicated by a digital signal from the imaging unit 8. In this case, the control unit 7 may add the plurality of melt pool images IMG by adding the plurality of digital signals that indicate the plurality of melt pool images IMG, respectively. For example, the control unit 7 may add the plurality of digital signals by using an adder (namely, an adder as a hardware), which adds the input digital signals, to add the plurality of digital signals. For example, the control unit 7 may add the plurality of melt pool images IMG by input the digital signals into a buffer and then adding the digital signals that have been input into the buffer (namely, adding the digital signals as a software processing) after the digital signals have been expanded into a buffer. Alternatively, the control unit 7 may add the plurality of melt pool images IMG by performing a predetermined image processing on the plurality of melt pool images IMG and then adding the plurality of digital signals that respectively indicate the plurality of melt pool images IMG on which the predetermined image processing has been performed. At least one of a gamma processing, a noise reduction processing, and a HDR (High Dynamic Range) processing is one example of the predetermined signal processing.

Alternatively, the control unit 7 may acquire the melt pool image IMG indicated by an analog signal from the imaging unit 8. In this case, the control unit 7 may add the plurality of melt pool images IMG by adding the plurality of analog signals that indicate the plurality of melt pool images IMG, respectively. Alternatively, the control unit 7 may convert the analog signal to the digital signal. Then, the control unit 7 may add the plurality of melt pool images IMG by adding the plurality of digital signals that indicate the plurality of melt pool images IMG, respectively, as in a case where the melt pool images IMG indicated by the digital signal is acquired from the imaging unit 8.

Then, the control unit 7 may detect the melt pool area MPA in which the melt pools MP#1 and MP#2 are captured in the addition image IMG_C. Specifically, as illustrated at a left side of FIG. 11, the signal value of an area in which the melt pool MP is captured in the melt pool image IMG is different from the signal value of an area in which the melt pool MP is not captured. This is because the melt pool MP emits intense light. Therefore, the luminance value of the area is captured in the melt pool image IMG is different from the luminance value of the area in which the melt pool MP is not captured in which the melt pool MP. Typically, the luminance value of the area is captured in the melt pool image IMG is higher than the luminance value of the area in which the melt pool MP is not captured in which the melt pool MP. Therefore, as illustrated at a right side of FIG. 11, the signal value of the area in which the melt pool MP is captured is different from the signal value of the area in which the melt pool MP is not captured even in the addition image IMG _C. Namely, the signal value of the melt pool area MPA is different from the signal value of an area that is different from the melt pool area MPA in the addition image IMG_C. Typically, the luminance value of the melt pool area MPA is higher than the luminance value of the area that is different from the melt pool area MPA. Therefore, the control unit 7 may detect the melt pool area MPA in the addition image IMG_C by comparing the signal value (for example, the luminance value) of each pixel of the addition image IMG_C with a predetermined signal threshold value.

For example, the control unit 7 may detect a pixel whose signal value (for example, the luminance value) is larger than the predetermined signal threshold value in the addition image IMG_C. Namely, the control unit 7 may detect a pixel at which the added signal value (for example, luminance value) is larger than the predetermined signal threshold value in the addition image IMG_C. In this case, the control unit 7 may detect, as the melt pool area MPA, an area including the detected pixel.

For example, the control unit 7 may set the signal value of the pixel whose signal value (for example, the luminance value) is larger than the predetermined signal threshold value to a first signal value in the addition image IMG_C. On the other hand, the control unit 7 may set the signal value of the pixel whose signal value (for example, the luminance value) lower than the predetermined signal threshold value to a second signal value (for example, 0) that is different from the first signal value in the addition image IMG_C. Then, the control unit 7 may detect, as the melt pool area MPA, an area that includes the pixel whose signal value is the first signal value.

In this case, a signal value "1" may be used as the first signal value, and a signal value "0" may be used as the second signal value. Namely, the control unit 7 may set the signal value of the pixel whose signal value is larger than the predetermined signal threshold value to 1 in the addition image IMG_C. On the other hand, the control unit 7 may set the signal value of the pixel whose signal value is lower than the predetermined signal threshold value to 0 in the addition image IMG _C. Then, the control unit 7 may detect, as the melt pool area MPA, an area including the pixel whose signal value is 1.

The signal threshold value may be set to an appropriate value that allows the melt pool area MPA to be distinguished from the area different from the melt pool area MPA based on the signal value (for example, the luminance value). The signal threshold value may be set in advance. The signal threshold value may be set as appropriate by the control unit 7. The signal threshold value may be set as appropriate by the user of the processing system SYS.

The melt pool area MPA detected in the addition image IMG_C may be considered to be substantially equivalent to an area in which the melt pools MP#1 and MP#2 have moved. Especially, the melt pool area MPA detected in the addition image IMG_C may be considered to be equivalent to an area in which the melt pools MP#1 and MP#2 have moved in a period during which at least two melt pool images IMG used to generate the addition image IMG_C are captured. Therefore, the melt pool area MPA may mean the area in which the melt pools MP#1 and MP#2 have moved.

The melt pool area MPA detected in the addition image IMG_C may be considered to be substantially equivalent to an area in which the processing system SYS continuously forms the melt pools MP#1 and MP#2 at different positions. Therefore, the melt pool area MPA may mean the area in which the processing system SYS continuously forms the melt pools MP#1 and MP#2 at different positions.

Then, the control unit 7 may generate, as melt pool image information MPI, information related to the melt pool area MPA based on a detected result of the melt pool area MPA. For example, the control unit 7 may generate information related to a size of the melt pool area MPA as one example of the information related to the melt pool area MPA. As one example, the control unit 7 may calculate a planar dimension of the melt pool area MPA and generate information related to the calculated planar dimension of the melt pool area MPA as the information related to the size of the melt pool area MPA. In this case, the control unit 7 may calculate, as the planar dimension of the melt pool area MPA, the number of pixels included in the melt pool area MPA. Namely, the control unit 7 may generate the information related to the size of the melt pool area MPA by calculating the number of pixels whose signal value (for example, luminance value) is larger than the predetermined signal threshold value based on the addition image IMG_C.

However, the control unit 7 may generate the information related to the melt pool area MPA by using a single melt pool image IMG instead of using the plurality of melt pool images IMG. Specifically, the control unit 7 may detect the melt pool area MPA in the melt pool image IMG by comparing the signal value (for example, the luminance value) of each pixel of the melt pool image IMG with the predetermined signal threshold value. For example, the control unit 7 may detect the pixel whose signal value (for example, luminance value) is larger than the predetermined signal threshold value in the melt pool image IMG. In this case, the control unit 7 may detect, as the melt pool area MPA, the area including the detected pixel. Then, the control unit 7 may generate, as the melt pool image information MPI, the information related to the melt pool area MPA based on the detection results of the melt pool area MPA.

Alternatively, in a case where the exposure time of the imaging unit 8 is longer than a certain time, there is a high possibility that the melt pool area MPA, which is the same as the melt pool area MPA captured in the addition image IMG_C, is captured in the single melt pool image IMG. For example, in a case where the exposure time of the imaging unit 8 is longer than the certain time that is determined based on a cycle of the periodic movement of the melt pools MP#1 and MP#2, there is a high possibility that the melt pool area MPA, which is the same as the melt pool area MPA captured in the addition image IMG_C, is captured in the single melt pool image IMG. As one example, in a case where the exposure time of the imaging unit 8 is longer than one cycle of the periodic movement of the melt pools MP#1 and MP#2, there is a high possibility that the melt pool area MPA, which is the same as the melt pool area MPA captured in the addition image IMG_C, is captured in the single melt pool image IMG. Therefore, in a case where the exposure time of the imaging unit 8 is longer than a certain time, the control unit 7 may generate the melt pool image information MPI without using the plurality of melt pool images IMG. Incidentally, the certain time may be a time period required for one cycle of the periodic movement of the melt pools MP#1 and MP#2. The certain time may be half the time period required for one cycle of the periodic movement of the melt pools MP#1 and MP#2. The certain time may be one-third of the time period required for the periodic movement of the melt pools MP#1 and MP#2. The control unit 7 may generate the melt pool image information MPI by using the single melt pool image IMG in which the melt pool area MPA.

Incidentally, the exposure time of the imaging unit 8 may mean a time during which the imaging element of the imaging unit 8 is exposed to light. For example, in a case where the imaging unit 8 includes a mechanical shutter, the exposure time of the imaging unit 8 may mean a time during which the mechanical shutter is in an open state. Namely, the exposure time of the imaging unit 8 may mean a time from a timing at which the mechanical shutter is switched to the open state to a timing at which the mechanical shutter is switched to a close state. The open state may mean a state in which the mechanical shutter is opened. The close state may mean a state in which the mechanical shutter is closed. Alternatively, in a case where the imaging unit 8 includes an electronic shutter, the exposure time of the imaging unit 8 may mean a time during which the electronic shutter is in an ON state. Namely, the exposure time of the imaging unit 8 may mean a time from a timing at which the electronic shutter is switched to the ON state to a timing at which the electronic shutter is switched to an OFF state. The ON state may mean a state in which the electronic shutter is turned on. The state in which the electronic shutter is turned on may mean a state in which each pixel of the imaging element is exposed in a single imaging and in which an electric charge based on the amount of light is allowed to be accumulated in each pixel of the imaging element.

Alternatively, in a case where the imaging unit 8 includes the mechanical shutter, the imaging unit 8 may open and close the mechanical shutter the plurality of times at a timing synchronized with the above-described imaging rate. In this case, the imaging unit 8 may be considered to perform the multiple exposure. Then, the imaging unit 8 may read out the electric charge accumulated in each pixel of the imaging element. Even in this case, there is a high possibility that the melt pool area MPA, which is the same as the melt pool area MPA captured in the addition image IMG_C, is captured in the single melt pool image IMG generated by the imaging unit 8. Therefore, the control unit 7 may generate the melt pool image information MPI by using the single melt pool image IMG in which the melt pool area MPA is captured.

Even in a case where the imaging unit 8 includes the electronic shutter, the imaging unit 8 may turn the electronic shutter on and off the plurality of times at a timing synchronized with the above-described imaging rate. In this case, the imaging unit 8 may be considered to perform the multiple exposure. Then, the imaging unit 8 may read out the electric charge accumulated in each pixel of the imaging element. Even in this case, there is a high possibility that the melt pool area MPA, which is the same as the melt pool area MPA captured in the addition image IMG_C, is captured in the single melt pool image IMG generated by the imaging unit 8. Therefore, the control unit 7 may generate the melt pool image information MPI by using the single melt pool image IMG in which the melt pool area MPA is captured. However, the imaging unit 8 may read out the electric charge accumulated in each pixel of the imaging element each time the electronic shutter is turned on and off. In this case, the imaging unit 8 may be considered to substantially generate the plurality of melt pool images IMG as the time series data.

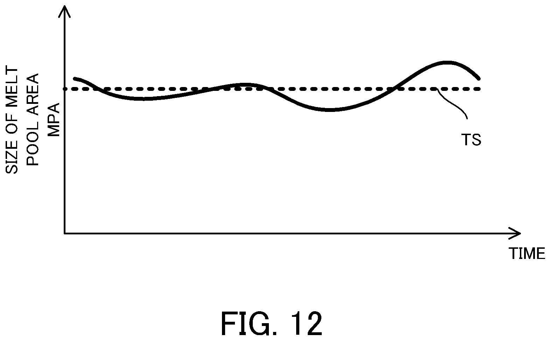

Again in FIG. 9, the control unit 7 then controls the processing system SYS based on the melt pool image information MPI generated at the step S12 (a step S13). For example, as illustrated in FIG. 12, the control unit 7 controls the processing system SYS based on the melt pool image information MPI so that the size of the melt pool area MPA becomes a predetermined target size TS.

As one example, the control unit 7 may control the intensity of at least one of the processing light EL#1 emitted by the light source 4#1 and the processing light EL#2 emitted by the light source 4#2 so that the size of the melt pool area MPA becomes the predetermined target size TS. Namely, the control unit 7 may perform a DC modulation control for controlling a DC component of the intensity of at least one of the processing lights EL#1 and EL#2. Namely, when the intensity of the processing light EL#1 changes, the size of the melt pool MP#1 changes. For example, the amount of the build material M (alternatively, the material forming the build surface MS) molten by processing light EL#1 is larger as the intensity of the processing light EL#1 is higher. Therefore, the size of the melt pool MP#1 is larger as the intensity of the processing light EL#1 is higher. Similarly, the size of the melt pool MP#2 is larger as the intensity of the processing light EL#2 is higher. When the sizes of the melt pools MP#1 and MP#2 change, the size of the melt pool area MPA captured in the melt pool image IMG or the addition image IMG_C changes. Therefore, the control unit 7 may control the size of the melt pool area MPA by controlling the intensity of at least one of the processing lights EL#1 and EL#2.

As another example, the control unit 7 may control at least one of the Galvano mirrors 2146 and 2156, which move the melt pools MP#1 and MP#2, respectively, so that the size of the melt pool area MPA becomes the predetermined target size TS. When the range in which the Galvano mirror 2146 moves the melt pool MP#1 changes, the size of the melt pool area MPA captured in the melt pool image IMG or the addition image IMG_C changes. Similarly, when the range in which the Galvano mirror 2156 moves the melt pool MP#2 changes, the size of the melt pool area MPA captured in the melt pool image IMG or the addition image IMG_C changes. Therefore, the control unit 7 may control the size of the melt pool area MPA by controlling at least one of the Galvano mirrors 2146 and 2156.

An operation for controlling the processing system SYS so that the size of the melt pool area MPA becomes the target size TS may include an operation for controlling the processing system SYS so that a difference between the size of the melt pool area MPA and the target size TS decreases. Namely, the operation for controlling the processing system SYS so that the size of the melt pool area MPA becomes the target size TS may include an operation for controlling the processing system SYS so that the size of the melt pool area MPA is closer to the target size TS. Moreover, the operation for controlling the processing system SYS so that the size of the melt pool area MPA becomes the target size TS may include an operation for controlling the processing system SYS so that the difference between the size of the melt pool area MPA and the target size TS is zero. Namely, the operation for controlling the processing system SYS so that the size of the melt pool area MPA becomes the target size TS may include the operation for controlling the processing system SYS so that the size of the melt pool area MPA is equal to the target size TS. In any case, the control unit 7 may be considered to perform a feedback control of the processing system SYS based on the size of the melt pool area MPA.

As a result, the size of the melt pool area MPA is maintained at the target size TS. Here, as described above, the melt pool area MPA corresponds to the area in which the melt pools MP#1 and MP#2 move. Therefore, the size of the melt pool area MPA is substantially correlated with the sizes of the processing unit areas BSA#1 and BSA#2 in which melt pools MP#1 and MP#2 move, respectively. Therefore, when the size of the melt pool area MPA is maintained at the target size TS, the size of each of the processing unit areas BSA#1 and BSA#2 is also maintained at a size corresponding to the target size TS. As a result, the size (typically, the width) of the linear build object, which is built by moving the processing unit areas BSA#1 and BSA#2 on the build surface MS, is also maintained at a size corresponding to the target size TS. This is because the size of the linear build object is correlated with the sizes of the processing unit areas BSA#1 and BSA#2. Therefore, the processing system SYS can build the linear build object having the desired size (typically, the desired width) by performing the melt pool feedback control. Namely, there is a lower possibility that the processing system SYS, which perform melt pool feedback control, builds the linear build object having a size that is different from the desired size. Therefore, the processing system SYS can build objects with high build accuracy.

Incidentally, the above-described description, the control unit 7 generates the melt pool image information MPI that is correlated with the sizes of the processing unit areas BSA#1 and BSA#2 by adding at least two melt pool images IMG. However, the control unit 7 may calculate an index value that is correlated with the sizes of the processing unit areas BSA#1 and BSA#2 (namely, the size of the area in which the melt pools MP#1 and MP#2 move) from at least two melt pool images IMG without adding at least two melt pool images IMG. In this case, the control unit 7 may control the processing system SYS so that the calculated index value becomes the target size TS (alternatively, a value based on the target size TS) at the step S13 in FIG. 9.

As one example, the control unit 7 may calculate the sizes of at least two melt pools MP that are captured in at least two melt pool images IMG, respectively. For example, the control unit 7 may calculate the size of the melt pool MP t captured in a first melt pool image IMG, and may calculate the sizes of the melt pools MP#1 and MP#2 captured in a second melt pool image IMG, which is different from the first melt pool image IMG. Then, the control unit 7 may add the calculated sizes of at least two melt pools MP. For example, the control unit 7 may add the sizes of the melt pools MP#1 and MP#2 captured in the first melt pool image IMG and the sizes of the melt pools MP#1 and MP#2 captured in the second melt pool image IMG. In this case, a value obtained by adding the sizes of at least two melt pools MP may be used as the index value that is correlated with the sizes of the processing unit areas BSA#1 and BSA#2 (namely, the sizes of the areas in which melt pools MP#1 and MP#2 move).

As another example, the control unit 7 may calculate positions of at least two melt pools MP that are captured in at least two melt pool images IMG, respectively. For example, the control unit 7 may calculate the positions of the melt pools MP#1 and MP#2 captured in the first melt pool image IMG, and may calculate the positions of the melt pools MP#1 and MP#2 captured in the second melt pool image IMG, which is different from the first melt pool image IMG. Then, the control unit 7 may calculate the sizes of the processing unit areas BSA#1 and BSA#2 (namely, the size of the area in which the melt pools MP#1 and MP#2 move) based on the calculated positions of at least two melt pools MP. For example, since the target irradiation area EA#1 periodically moves along one direction in the processing unit area BSA#1 as described above, the melt pool MP#1 also periodically moves along the one direction. In this case, the control unit 7 may calculate positions of both ends along the one direction of the area in which the melt pool MP#1 moves, based on the calculated position of the melt pool MP#1. For example, the control unit 7 may calculate, as the positions of the both ends along one direction of the area in which the melt pool MP#1 moves, a position at which a coordinate indicating the position of the melt pool MP#1 is maximum and a position at which the coordinate indicating the position of the melt pool MP#1 is minimum. Then, the control unit 7 may calculate a distance between the calculated positions of the both ends as the index value that correlated with the size of the processing unit area BSA#1 and BSA#2 (namely, the size of the area in which the melt pools MP#1 and MP#2 move). In this case, the control unit 7 may control the processing system SYS so that the calculated index value becomes a distance based on the target size TS at the step S13 in FIG. 9.

### (2-3) Area Detection Operation

As described above, the control unit 7 detects the melt pool area MPA in the melt pool feedback control operation (especially, at the step S12 in FIG. 9). In this case, the control unit 7 may perform an area detection operation in order to accurately detect the melt pool area MPA. Namely, the control unit 7 may perform the melt pool feedback control operation including the area detection operation that is one example of an operation for accurately detecting the melt pool area MPA.

The area detection operation is an operation for detecting at least one of the melt pool area MPA and a non-melt pool area NPA in the melt pool image IMG (alternatively, the addition image IMG_C). In other words, the area detection operation may be an operation for determining (in other words, discriminating) whether or not each area in the melt pool image IMG (alternatively, the addition image IMG_C) is the melt pool area MPA. The area detection operation may be an operation for determining (in other words, discriminating) whether or not each area in the melt pool image IMG (alternatively, the addition image IMG _C) is the non-melt pool area NPA.

The non-melt pool area NPA is an area in which the melt pools MP#1 and MP#2 are not captured. The non-melt pool area NPA may be an area in which the melt pools MP#1 and MP#2 are not captured but light is captured. Specifically, the non-melt pool area NPA may be an area in which at least one of emitted light and reflected light other than the melt pools MP#1 and MP#2 is captured. For example, the non-melt pool area NPA may include an area in which the emitted light from an object different from the melt pools MP#1 and MP#2 is captured. The non-melt pool area NPA may include an area in which the reflected light from an object different from the melt pools MP#1 and MP#2 is captured. Namely, the non-melt pool area NPA may be an area in which noise light, which is light different from the light generated due to the melt pools MP#1 and MP#2, is captured.

The noise light may include light caused by spatter generated by a molten object, which is molten in at least one of the melt pools MP#1 and MP#2, scattering. For example, the noise light may include at least one of light emitted by the spatter and light reflected by the spatter. In this case, the non-melt pool area NPA may include an area in which the spatter is captured.

The noise light may include light caused by fume generated by the molten object, that which is molten in at least one of the melt pools MP#1 and MP#2, evaporating. For example, the noise light may include at least one of light emitted by the fume and light reflected by the fume. In this case, the non-melt pool area NPA may include an area where the fume is captured.

The noise light may include light that is generated due to the irradiation of the processing light EL onto a film of the surface of the workpiece W or the structural layer SL on which the build surface MS is set. In this case, the non-melt pool area NPA may include an area in which the light that is generated due to the irradiation of the processing light EL onto the film of the surface of the workpiece W or the structural layer SL is captured.

The noise light may include light caused by the build material M that has not reached the melt pools MP#1 and MP#2. Especially, the noise light may include light caused by the build material M that has been molten by at least one of the processing lights EL#1 and EL#2 but has not reached the melt pool MP#1 and MP#2. For example, the noise light may include at least one of light emitted by the build material M and light reflected by the build material M. Especially, the noise light may include at least one of light emitted by the molten build material M and light reflected by the molten build material M. In this case, the non-melt pool area NPA may include an area in which the build material M (especially, the molten build material M) is captured.

The control unit 7 may add at least two melt pool images IMG to generate the addition image IMG_C, and may perform the area detection operation based on the generated addition image IMG_C. Namely, the control unit 7 may detect at least one of the melt pool area MPA and the non-melt pool area NPA based on the addition image IMG_C.

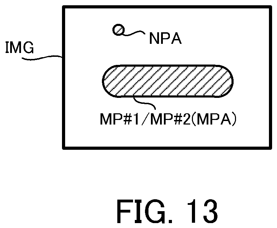

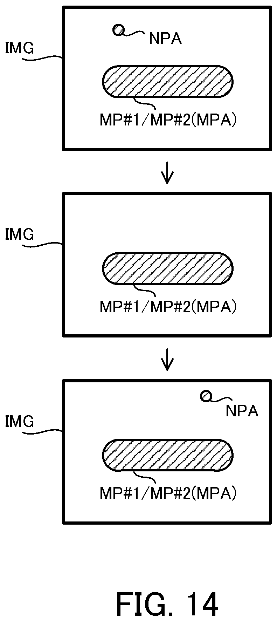

Here, with reference to FIG. 13 and FIG. 14, a technical reason why it is possible to detect at least one of the melt pool area MPA and the non-melt pool area NPA based on the addition image IMG_C will be described.

FIG. 13 illustrates the melt pool image IMG in which the melt pool area MPA and the non-melt pool area NPA are captured. Namely, FIG. 13 illustrates the melt pool image IMG in which the melt pool area MPA, which corresponds to an area in which the melt pools MP#1 and MP#2 are captured, and the non-melt pool area NPA, which corresponds to the area in which the noise light different from the light generated due to the melt pools MP#1 and MP#2, are captured. Here, the light generated by the melt pools MP#1 and MP#2 is captured in the melt pool area MPA, and the noise light is captured in the non-melt pool area NPA. Namely, the light is captured in both of the melt pool area MPA and the non-melt pool area NPA. Therefore, there is a possibility that a difference between the signal value of the pixel included in the melt pool area MPA and the signal value of the pixel included in the non-melt pool area NPA is not so large. For example, there is a possibility that a difference between the luminance value of the pixel included in the melt pool area MPA and the luminance value of the pixel included in the non-melt pool area NPA is not so large. Therefore, there is a possibility that it is not always easy to distinguish the melt pool area MPA from the non-melt pool area NPA in a single melt pool image IMG by using the above-described signal threshold value. Namely, there is a possibility that it is not always easy to distinguish the melt pool area MPA from the non-melt pool area NPA by using the single melt pool image IMG. As a result, there is a possibility that the control unit 7 mistakenly detect the non-melt pool area NPA as the melt pool area MPA.

On the other hand, as described above, the Galvano mirrors 2146 and 2156 periodically move the melt pools MP#1 and MP#2 in the processing unit areas BSA#1 and BSA#2, which are determined with respect to the processing head 21. Furthermore, since the imaging unit 8 is attached to the processing head 21, a relative positional relationship between the imaging unit 8 and each of the processing unit areas BSA#1 and BSA#2 is fixed. As a result, there is a high possibility that the position of the area in which the melt pools MP#1 and MP#2 move in the melt pool image IMG does not change regardless of an elapse of time. As a result, there is a high possibility that the position of the area in which the melt pool area MPA is captured in the melt pool image IMG does not change regardless of the elapse of time. Namely, there is a low possibility that the position of the area in which the melt pools MP#1 and MP#2 move changes significantly between the plurality of melt pool images IMG. Therefore, as illustrated in FIG. 14 that illustrates the plurality of melt pool images IMG as the time series data, there is a low possibility that the position at which the melt pool area MPA is captured changes significantly between the plurality of melt pool images IMG.

On the other hand, a position at which the noise light, which generates the non-melt pool area NPA, is emitted is not necessarily fixed. Therefore, there is a high possibility that the position at which the noise light, which generates the non-melt pool area NPA, is emitted changes over time. Furthermore, there is a high possibility that the change of the position at which the noise light, which generates the non-melt pool area NPA, is emitted occurs at random. There is a high possibility that the position at which the noise light, which generates the non-melt pool area NPA, is emitted changes at random. Therefore, there is a high possibility that the position at which the non-melt pool area NPA is captured in the melt pool image IMG changes at random over time. Namely, as illustrated in FIG. 14 that illustrates the plurality of melt pool images IMG as the time series data, there is a possibility that the position at which the non-melt pool area NPA is captured changes significantly between the plurality of melt pool images IMG.

Alternatively, the noise light is not always generated. Therefore, there is a possibility that the non-melt pool area NPA is not captured in the melt pool image IMG. Namely, as illustrated in FIG. 14 that illustrates the plurality of melt pool images IMG as the time series data, there is a possibility that the plurality of melt pool images IMG include both of the melt pool image IMG in which the non-melt pool areas NPA is captured and the melt pool image IMG in which the non-melt pool areas NPA is not captured.

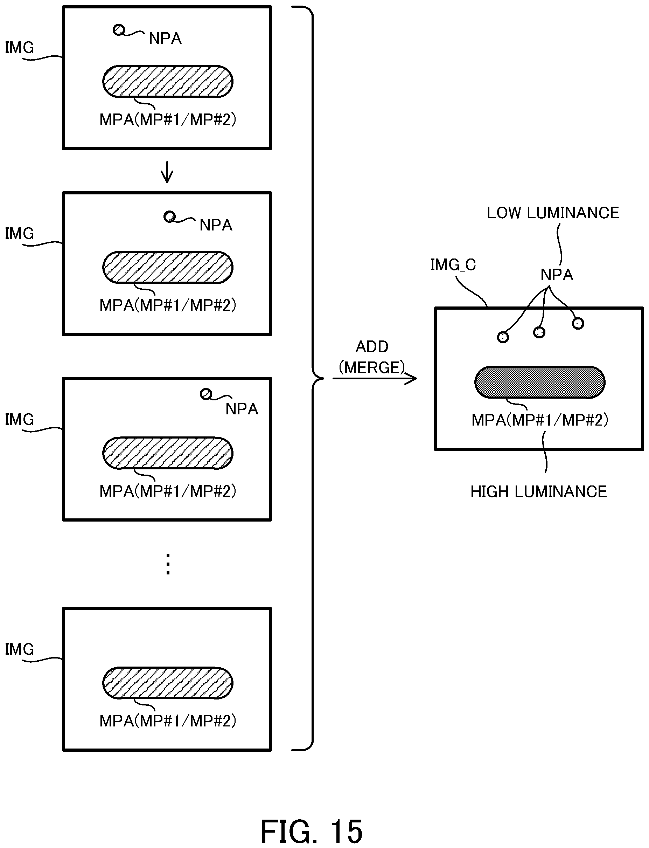

In this case, as illustrated in FIG. 15 that illustrates the addition image IMG_C generated by adding the plurality of melt pool images IMG illustrated in FIG. 14, there is a high possibility that a difference between the signal value of the pixel included in the melt pool area MPA and the signal value of the pixel included in the non-melt pool area NPA is so large in the addition image IMG_C that the two areas can be distinguished. Specifically, there is a high possibility that the luminance value of the pixel included in the melt pool area MPA is sufficiently higher than the luminance value of the pixel included in the non-melt pool area NPA in the addition image IMG_C so that the two areas can be distinguished.

Therefore, the control unit 7 may detect at least one of the melt pool area MPA and the non-melt pool area NPA based on the signal value (for example, the luminance value) of the addition image IMG_C. Specifically, the control unit 7 may detect at least one of the melt pool area MPA and the non-melt pool area NPA by comparing the signal value (for example, the luminance value) of each pixel of the addition image IMG_C with the predetermined signal threshold value.

For example, the control unit 7 may detect, as the melt pool area MPA, an area that includes the pixel whose signal value (for example, luminance value) is larger than the predetermined signal threshold value in the addition image IMG_C. Namely, the control unit 7 may detect, as the melt pool area MPA, an area that includes the pixel corresponding to the addition result of the signal values (for example, luminance values) that are larger than the predetermined signal threshold value in the addition image IMG _C. The control unit 7 may generate the melt pool image information MPI including the information related to the melt pool area MPA based on the detected melt pool area MPA.

For example, the control unit 7 may detect, as the non-melt pool area NPA, an area that includes the pixel whose signal value (for example, luminance value) is smaller than the predetermined signal threshold value in the addition image IMG_C. Namely, the control unit 7 may detect, as the non-melt pool area NPA, an area that includes the pixel corresponding to the addition result of the signal values (for example, luminance values) that are smaller than the predetermined signal threshold value in the addition image IMG_C. In this case, the control unit 7 may generate the melt pool image information MPI including the information related to the melt pool area MPA without using the detected non-melt pool area NPA.

However, there is a low possibility that the noise light is captured in the pixel whose signal value (for example, luminance value) is too small. Therefore, the control unit 7 may detect, as the non-melt pool area NPA, an area that includes the pixel whose signal value (for example, luminance value) is smaller than a first signal threshold value, which is the above-described predetermined signal threshold value, and is larger than a second signal threshold value, which is smaller than the first signal threshold value, in the addition image IMG _C.

Incidentally, in a case where the melt pool feedback control operation including the area detection operation is performed, the signal threshold value may be set to an appropriate value that allows the melt pool area MPA to be distinguished from the non-melt pool area NPA based on the signal value (for example, the luminance value).

As described above, the processing system SYS can detect at least one of the melt pool area MPA and the non-melt pool area NPA by performing the area detection operation. Therefore, there is a lower possibility that the processing system SYS mistakenly detects the non-melt pool area NPA as the melt pool area MPA, compared to a processing system in a comparative example that does not perform the area detection operation. Therefore, the size of the melt pool area MPA is maintained to be the target size TS. As a result, the size of each of the processing unit areas BSA#1 and BSA#2 is also maintained to be the size corresponding to the target size TS. Therefore, the processing system SYS can build the linear build object having the desired size (typically, the desired width) by performing the melt pool feedback control. Namely, the processing system SYS can build objects with high build accuracy.

In addition, it is possible to estimate, with a certain degree of accuracy, the range in which the Galvano mirrors 2146 and 2156 move the melt pools MP#1 and MP#2, respectively, based on driving conditions of the Galvano mirrors 2146 and 2156. Therefore, the control unit 7 may estimate the range in which the Galvano mirrors 2146 and 2156 move the melt pools MP#1 and MP#2, respectively, and estimate a boundary of the range in which the melt pool area MPA is distributed based on an estimated result, and detect the area outside the estimated boundary as the non-melt pool area NPA.

### (2-4) Imaging Condition Change Operation

### (2-4-1) Overview of Imaging Condition Change Operation

The processing system SYS may perform an imaging condition change operation, in parallel with, before or after the above-described melt pool feedback control operation, under the control of the control unit 7. Namely, the processing system SYS may perform the imaging condition change operation in at least a part of a period during which the above-described melt pool feedback control operation is performed. The processing system SYS may perform the imaging condition change operation before the above-described melt pool feedback control operation is performed. The processing system SYS may perform the imaging condition change operation after the above-described melt pool feedback control operation is performed.

The imaging condition change operation is an operation for changing (in other words, controlling, adjusting, or setting) an imaging condition for the imaging unit 8 to image the melt pools MP#1 and MP#2. Namely, the imaging condition change operation is an operation for changing the imaging condition used by the imaging unit 8 to image the melt pools MP#1 and MP#2. The imaging condition change operation is an operation for changing the imaging condition that is set in the imaging unit 8 to image the melt pools MP#1 and MP#2.

The control unit 7 may change the imaging condition so that the imaging unit 8 can appropriately image the melt pools MP#1 and MP#2. For example, the control unit 7 may change the imaging condition so that the imaging unit 8 can generate the melt pool image IMG that allows the above-described melt pool feedback control operation to be performed appropriately. For example, the control unit 7 may change the imaging condition so that the imaging unit 8 can generate the melt pool image IMG that allows the processing system SYS to build the linear build object having the desired size (typically, the desired width) by the above-described melt pool feedback control operation.

In this case, the imaging unit 8 images the melt pools MP#1 and MP#2 based on the imaging condition changed by the control unit 7. Namely, the control unit 7 controls the imaging unit 8 to image the melt pools MP#1 and MP#2 based on the imaging condition changed by the control unit 7.

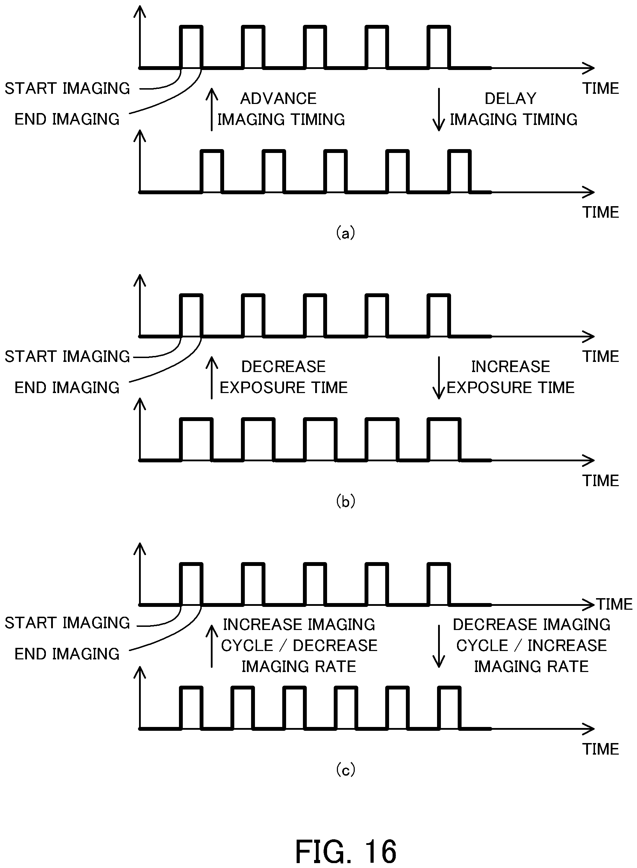

The imaging condition may include a condition related to an imaging timing at which the imaging unit 8 images the melt pools MP#1 and MP#2. In this case, the control unit 7 may change the imaging timing. For example, the control unit 7 may change the imaging timing so that the imaging timing is earlier than the imaging timing before the change, as illustrated in FIG. 16 (a). For example, the control unit 7 may change the imaging timing so that the imaging timing is later than the imaging timing before the change, as illustrated in FIG. 16 (a).

The condition related to the imaging timing may include a timing at which the imaging unit 8 starts imaging the melt pools MP#1 and MP#2, as illustrated in FIG. 16(a). The condition related to the imaging timing may include a timing at which the imaging unit 8 finishes imaging the melt pools MP#1 and MP#2, as illustrated in FIG. 16(a). The timing at which the imaging unit 8 starts imaging the melt pools MP#1 and MP#2 may mean a timing at which the imaging unit 8 switches the mechanical shutter from the close state to the open state. The timing at which the imaging unit 8 starts imaging the melt pools MP#1 and MP#2 may mean a timing at which the imaging unit 8 switches the electronic shutter from the OFF state to the ON state. The timing at which the imaging unit 8 finishes imaging of the melt pools MP#1 and MP#2 may mean a timing at which the imaging unit 8 switches the mechanical shutter from the open state to the close state. The timing at which the imaging unit 8 starts imaging the melt pools MP#1 and MP#2 may mean a timing at which the imaging unit 8 switches the electronic shutter from the ON state to the OFF state.

Incidentally, in a case where the imaging unit 8 may be considered to perform the multiple exposure as described above, the imaging timing illustrated in FIG. 16 (a) may be regarded as a timing at which each of the plurality of exposures is performed in the multiple exposure. Namely, a single pulse-shaped waveform illustrated in FIG. 16 (a) may be considered to indicate a timing at which single exposure is performed in the multiple exposure.

The imaging condition may include a condition related to the exposure time of the imaging unit 8 to image the melt pools MP#1 and MP#2. In this case, the control unit 7 may change the exposure time. For example, the control unit 7 may change the exposure time so that the exposure time is shorter than the exposure time before the change, as illustrated in FIG. 16(b). For example, the control unit 7 may change the exposure time so that the exposure time is longer than the exposure time before the change, as illustrated in FIG. 16(b).

Incidentally, the definition of the exposure time is already described, and therefore, a detailed description thereof is omitted. In the example illustrated in FIG. 16(b), the exposure time may mean a time period from a timing at which the imaging unit 8 starts imaging the melt pools MP#1 and MP#2 to a timing at which the imaging unit 8 finishes imaging the melt pools MP#1 and MP#2.

Moreover, in a case where the imaging unit 8 may be considered to perform the multiple exposure as described above, the exposure time illustrated in FIG. 16(b) may be regarded as a time period during which each of the plurality of exposures is performed in the multiple exposure. Namely, the single pulse-shaped waveform illustrated in FIG. 16(b) may be considered to indicate the time period during which the single exposure is performed in the multiple exposure.

The imaging condition may include a condition related to the imaging cycle or the imaging rate at which the imaging unit 8 images the melt pools MP#1 and MP#2. In this case, the control unit 7 may change the imaging cycle or imaging rate. For example, the control unit 7 may change the imaging cycle so that the imaging cycle is longer than the imaging cycle before the change, as illustrated in FIG. 16(c). For example, the control unit 7 may change the imaging cycle so that the imaging cycle is shorter than the imaging cycle before the change, as illustrated in FIG. 16(c). For example, the control unit 7 may change the imaging rate so that the imaging rate is lower than the imaging rate before the change, as illustrated in FIG. 16(c). For example, the control unit 7 may change the imaging rate so that the imaging rate is higher than the imaging rate before the change, as illustrated in FIG. 16(c).

Incidentally, the definition of the imaging cycle and imaging rate is already described, and therefore, a detailed description thereof is omitted. In the example illustrated in FIG. 16(c), the imaging cycle may mean a time period from a timing at which the imaging unit 8 starts imaging the melt pools MP#1 and MP#2 to a timing at which the imaging unit 8 starts imaging the melt pools MP#1 and MP#2 next. The imaging rate may mean the number of times the imaging unit 8 starts imaging the melt pools MP#1 and MP#2 per unit of time (for example, per second).

As described above, the imaging rate may be the inverse number of the imaging cycle. Namely, the imaging cycle may be the inverse number of the imaging rate. In this case, the operation for changing the imaging rate so that the imaging rate is lower may be considered to be equivalent to the operation for changing the imaging cycle so that the imaging cycle is longer. The operation for changing the imaging rate so that the imaging rate is higher may be considered to be equivalent to the operation for changing the imaging cycle so that the imaging cycle is shorter.

Incidentally, in a case where the imaging unit 8 may be considered to perform the multiple exposure as described above, the imaging cycle illustrated in FIG. 16(c) may be regarded as a cycle in which each of the plurality of exposures is performed in the multiple exposure. Namely, an interval between two adjacent pulse-shaped waveforms illustrated in FIG 16(b) may be considered to indicate a cycle in which the single exposure is performed in the multiple exposure. Moreover, in a case where the imaging unit 8 may be considered to perform the multiple exposure as described above, the imaging rate illustrated in FIG. 16(c) may be regarded as an index value (this index value may be referred to as an exposure rate) that indicates the number of times the exposure is performed per unit time in the multiple exposure.

Incidentally, when the imaging condition is changed, the operation of the imaging unit 8 for generating the plurality of melt pool images IMG as the time series data changes. Considering that the imaging unit 8 may be considered to generate the plurality of melt pool images IMG as the time series data by performing the multiple exposure as described above, the operation for changing the imaging condition may be considered to be equivalent to an operation for changing a condition of the multiple exposure.

### (2-4-2) Change of Imaging Condition based on Processing Condition

The control unit 7 may change the imaging condition based on a processing condition of the workpiece W by the processing system SYS. For example, in a case where the processing system SYS processes the workpiece W based on a first processing condition, the control unit 7 may change the imaging condition so that the imaging unit 8 images the melt pools MP#1 and MP#2 based on a first imaging condition. For example, in a case where the processing system SYS processes the workpiece W based on a second processing condition that is different from the first processing condition, the control unit 7 may change the imaging condition so that the imaging unit 8 images the melt pools MP#1 and MP#2 based on a second imaging condition that is different from the first imaging condition.

The control unit 7 may change the imaging condition so that the imaging unit 8 can appropriately image the melt pools MP#1 and MP#2 even in a case the processing condition is changed. For example, in a case where the processing system SYS processes the workpiece W based on the first processing condition, the control unit 7 may change the imaging condition to the first imaging condition so that the imaging unit 8 can appropriately image the melt pools MP#1 and MP#2 that are formed by the processing system SYS based on the first processing condition. For example, in a case where the processing system SYS processes the workpiece W based on the second processing condition, the control unit 7 may change the imaging condition to the second imaging condition so that the imaging unit 8 can appropriately image the melt pools MP#1 and MP#2 that are formed by the processing system SYS based on the second processing condition.

The control unit 7 may change the imaging condition based on the processing condition by using an imaging condition table that specifies a correspondence relationship between the processing condition and the imaging condition. The imaging condition table may be a table specifying the imaging condition that should be used by the imaging unit 8 in a case where the processing condition of the workpiece W is a certain processing condition. The imaging condition table may be a table that records information related to the imaging condition that should be used by the imaging unit 8 in association with the processing condition of the workpiece W. The imaging condition table may be stored (in other words, recorded) in the storage apparatus 72. The imaging condition table may be generated in advance by repeatedly performing the above-described melt pool feedback control operation while changing at least one of the processing condition and the imaging condition, and determining the correspondence relationship between the processing condition and the imaging condition that can achieve the desired accuracy of the linear build object that is built as a result of the melt pool feedback control operation.

### (2-4-2-1) First Specific Example of Processing Condition

The processing condition may include a light condition related to at least one of the processing lights EL#1 and EL#2. Incidentally, the light condition may be referred to as a beam condition because each of the processing lights EL#1 and EL#2 is one example of the energy beam. The light condition may include an intensity condition related to the intensity of at least one of the processing lights EL#1 and EL#2. In this case, the control unit 7 may change the imaging condition based on the intensity of at least one of the processing lights EL#1 and EL#2 with which the workpiece W is irradiated in order to process the workpiece W.

Here, as a first specific example of the operation for changing the imaging condition, an example of the operation for changing the imaging condition in a case where the intensity of the processing light EL#k (wherein k is a variable number representing each of 1 and 2) is changed from a first intensity to a second intensity that is higher than the first intensity. In this case, since the intensity of the processing light EL#k changes, the luminance value (alternatively, the signal value) of the pixel in which the melt pool MP#k is captured in the melt pool image IMG also changes. In this case, the control unit 7 may change the imaging condition so that a changed amount of the luminance value of the pixel in which the melt pool MP#k is captured in the melt pool image IMG is smaller than or equal to a first allowable amount even in a case where the intensity of the processing light EL#k is changed from the first intensity to the second intensity. Namely, the control unit 7 may change the imaging condition so that a difference between the luminance value of the pixel in which the melt pool MP#k is captured in the melt pool image IMG generated in a case where the intensity of the processing light EL#k is the first intensity and the luminance value of the pixel in which the melt pool MP#k is captured in the melt pool image IMG generated in a case where the intensity of the processing light EL#k is the second intensity is smaller than or equal to the first allowable amount. Typically, the control unit 7 may change the imaging condition so that the luminance value of the pixel in which the melt pool MP#k is captured in the melt pool image IMG is maintained at a constant value even in a case where the intensity of the processing light EL#k is changed from the first intensity to the second intensity. Namely, the control unit 7 may change the imaging condition so that the luminance value of the pixel in which the melt pool MP#k is captured in the melt pool image IMG generated in a case where the intensity of the processing light EL#k is the first intensity is equal to the luminance value of the pixel in which the melt pool MP#k is captured in the melt pool image IMG generated in a case where the intensity of the processing light EL# k is the second intensity.

More specifically, when the intensity of the processing light EL#k increases, the luminance value of the pixel in which the melt pool MP#k is captured in the melt pool image IMG also increases. In this case, the control unit 7 may change the imaging condition so that the luminance value of the pixel in which the melt pool MP#k is captured in the melt pool image IMG is lower, compared to a case where the imaging condition is not changed. For example, the luminance value of the pixel in the melt pool image IMG is lower as the exposure time, which is one example of the imaging condition, is shorter. Therefore, the control unit 7 may change the exposure time so as to decrease the exposure time. Namely, the control unit 7 may change the exposure time so that the exposure time in a case where the intensity of the processing light EL#k is the second intensity is shorter than the exposure time in a case where the intensity of the processing light EL#k is the first intensity. As a result, the changed amount of the luminance value of the pixel in which the melt pool MP#k is captured in the melt pool image IMG is smaller than or equal to the first allowable amount. In some cases, the luminance value of the pixel in which the melt pool MP#k is captured in the melt pool image IMG is maintained at the constant value.

Considering the first specific example of the operation for changing the imaging condition, the control unit 7 may change the exposure time so that the exposure time is shorter as the intensity of the processing light EL#k is higher. The control unit 7 may change the exposure time so that the exposure time is longer as the intensity of the processing light EL#k is lower.

Incidentally, a density (for example, a power density, which is substantially the fluence) of the processing light EL#k is higher as the intensity of the processing light EL#k is higher. Therefore, the light condition may include a condition related to the density of the processing light EL#k. The operation for changing the imaging condition based on the intensity of the processing light EL#k may be considered to be equivalent to an operation for changing the imaging condition based on the density of the processing light EL#k. The control unit 7 may change the imaging condition based on the density of the processing light EL#k in the same manner as in a case where the imaging condition is changed based on the intensity of the processing light EL#k. For example, the control unit 7 may change the exposure time so that the exposure time is shorter as the density of the processing light EL#k is higher. The control unit 7 may change the exposure time so that the exposure time is longer as the density of the processing light EL#k is lower.

### (2-4-2-2) Second Specific Example of Processing Condition

The processing condition may include a movement aspect condition related to a movement aspect of at least one of the target irradiation areas EA#1 and EA#2. In this case, the control unit 7 may change the imaging condition based on the movement aspect of at least one of the target irradiation areas EA#1 and EA#2. Incidentally, the operation for moving each of the target irradiation areas EA#1 and EA#2 may be referred to as the wobbling operation as described above. Therefore, the movement aspect condition related to the movement aspect of at least one of the target irradiation areas EA#1 and EA#2 may be referred to as a wobble condition.

Incidentally, since the target irradiation areas EA#1 and EA#2 are irradiated with the processing lights EL#1 and EL#2, respectively, the movement aspect condition may be considered to be equivalent to a condition related to a movement aspect of the irradiation position of at least one of the processing lights EL#1 and EL#2. Since the melt pools MP#1 and MP#2 are formed, respectively, by irradiating the target irradiation areas EA#1 and EA#2 with the processing lights EL#1 and EL#2, respectively, the movement aspect condition may be considered to be equivalent to a condition related to a movement aspect of the irradiation position of at least one of the melt pools MP#1 and MP#2. Since the target irradiation areas EA#1 and EA#2 move as a result of the deflection of the processing lights EL#1 and EL#2, the movement aspect condition may be considered to be equivalent to a condition related to a deflection aspect of at least one of the processing lights EL#1 and EL#2.

The movement aspect of the target irradiation area EA#k may include a speed of the movement of the target irradiation area EA#k. Especially, the movement aspect of the target irradiation area EA#k may include the speed of the movement of the target irradiation area EA#k on the build surface MS. Incidentally, the speed of the movement of the target irradiation area EA#k may be considered to be equivalent to a speed of the movement of the irradiation position of the processing light EL#k. Especially, the speed of the movement of the target irradiation area EA#k may be considered to be equivalent to the speed of the movement of the irradiation position of the processing light EL#k on the build surface MS. The speed of the movement of the irradiation area EA#k may be considered to be equivalent to a speed of a deflection of the processing light EL#k. The speed of the deflection of the processing light EL#1 may be considered to be equivalent to a rotational speed (a swing speed) of at least one of the X scanning mirror 2146MX and the Y scanning mirror 2146MY of the Galvano mirror 2146 that deflects the processing light EL#1. The speed of the deflection of the processing light EL#2 may be considered to be equivalent to a rotational speed (a swing speed) of at least one of the X scanning mirror 2156MX and the Y scanning mirror 2156MY of the Galvano mirror 2156 that deflects the processing light EL#2.

The movement aspect of the target irradiation area EA#k may include a cycle of the movement of the target irradiation area EA#k. Especially, the movement aspect of the target irradiation area EA#k may include a cycle of the periodic movement of the target irradiation area EA#k on the build surface MS. Incidentally, the cycle of the movement of the target irradiation area EA#k may be considered to be equivalent to a cycle of the movement of the irradiation position of the processing light EL#k. Especially, the cycle of the movement of the target irradiation area EA#k may be considered to be equivalent to the cycle of the periodic movement of the irradiation position of the processing light EL#k on the build surface MS. The cycle of the movement of the irradiation area EA#k may be considered to be equivalent to a cycle of the deflection of the processing light EL#k. The cycle of the deflection of the processing light EL#1 may be considered to be equivalent to a rotational cycle (a swing cycle) of at least one of the X scanning mirror 2146MX and the Y scanning mirror 2146MY of the Galvano mirror 2146 that deflects processing light EL#1. The cycle of the deflection of the processing light EL#2 may be considered to be equivalent to a rotational cycle (a swing cycle) of at least one of the X scanning mirror 2156MX and the Y scanning mirror 2156MY of the Galvano mirror 2156 that deflects processing light EL#1

The movement aspect of the target irradiation area EA#k may include a stroke (namely, a stroke amount or a stroke width) of the movement of the target irradiation area EA#k. The stroke of the movement may mean an amplitude of the back-and-forth movement. Especially, the movement aspect of the target irradiation area EA#k may include the stroke of the movement of the target irradiation area EA#k on the build surface MS. Incidentally, the stroke of the movement of the target irradiation area EA#k may be considered to be equivalent to a stroke of the movement of the irradiation position of the processing light EL#k. Especially, the stroke of the movement of the target irradiation area EA#k may be considered to be equivalent to the stroke of the movement of the irradiation position of the processing light EL#k on the build surface MS.

The movement aspect of the target irradiation area EA#k may include a pattern of the movement trajectory of the target irradiation area EA#k. Especially, the movement aspect of the target irradiation area EA#k may include a pattern of the periodic movement trajectory of the target irradiation area EA#k on the build surface MS. The wave-shaped (for example, the sinusoidal wave-shaped) pattern illustrated in FIG. 4(b) is one example of the pattern of the movement trajectory of the target irradiation area EA#k. The spiral-shaped (for example, a circular-shaped in which a center position gradually shifts) pattern illustrated in FIG. 5(c) is one example of the pattern of the movement trajectory of the target irradiation area EA#k. Incidentally, the pattern of the movement trajectory of the target irradiation area EA#k may be considered to be equivalent to a pattern of the movement trajectory of the irradiation position of the processing light EL#k. Especially, the pattern of the movement trajectory of the target irradiation area EA#k may be considered to be equivalent to the pattern of the periodic movement trajectory of the irradiation position of the processing light EL#k on the build surface MS.

Incidentally, the control unit 7 may change the imaging condition based on a control signal for controlling the X scanning mirror 2146MX and the Y scanning mirror 2146MY, which are a deflection optical system, because the movement aspect of the target irradiation area EA#1 is determined by the control signal for controlling operation aspects of the X scanning mirror 2146MX and the Y scanning mirror 2146MY, which are the deflection optical system. Similarly, the control unit 7 may change the imaging condition based on a control signal for controlling the X scanning mirror 2156MX and the Y scanning mirror 2156MY, which are a deflection optical system, because the movement aspect of the target irradiation area EA#2 is determined by the control signal for controlling operation aspects of the X scanning mirror 2156MX and the Y scanning mirror 2156MY, which are the deflection optical system.

Here, as a second specific example of the operation for changing the imaging condition, an example of the operation for changing the imaging condition in a case where the speed of the movement of the target irradiation area EA#k is changed from a first speed to a second speed that is faster than the first speed. **In** this case, the control unit 7 may change the imaging condition so that a changed amount of the number of times the imaging unit 8 images the melt pool MP#k in a unit movement period, during which the target irradiation area EA#k moves by a unit movement distance, is smaller than or equal to a second allowable amount even in a case where the speed of the movement of the target irradiation area EA#k is changed from the first speed to the second speed. Namely, the control unit 7 may change the imaging condition so that a difference between the number of times the imaging unit 8 images the melt pool MP#k in the unit movement period in a case where the speed of the movement of the target irradiation area EA#k is the first speed and the number of times the imaging unit 8 images the melt pool MP#k in the unit movement period in a case where the speed of the movement of the target irradiation area EA#k is the second speed is smaller than or equal to the second allowable amount. Typically, the control unit 7 may change the imaging condition so that the number of times the imaging unit 8 images the melt pool MP#k in the unit movement period, during which the target irradiation area EA#k moves by the unit movement amount, is maintained at a constant value even in a case where the speed of the movement of the target irradiation area EA#k is changed from the first speed to the second speed. Namely, the control unit 7 may change the imaging condition so that the number of times the imaging unit 8 images the melt pool MP#k in the unit movement period in a case where the speed of the movement of the target irradiation area EA#k is the first speed is equal to the number of times the imaging unit 8 images the melt pool MP#k in the unit movement period in a case where the speed of the movement of the target irradiation area EA#k is the second speed.

Incidentally, when the cycle of the movement of the target irradiation area EA#k is changed, the speed of the movement of the target irradiation area EA#k changes. Typically, the speed of the movement of the target irradiation area EA#k is faster as the cycle of the movement of the target irradiation area EA#k is shorter. Therefore, the control unit 7 may change the imaging condition even in a case where the cycle of the movement of the target irradiation area EA#k is changed from a first cycle to a second cycle that is shorter than the first cycle, in the same manner as in a case where the speed of the movement of the target irradiation area EA#k is changed from the first speed to the second speed that is faster than the first speed. Namely, the control unit 7 may change the imaging condition so that the changed amount of the number of times the imaging unit 8 images the melt pool MP#k in the unit movement period is smaller than or equal to the second allowable amount even in a case where the cycle of the movement of the target irradiation area EA#k is changed from the first cycle to the second cycle. Typically, the control unit 7 may change the imaging condition so that the number of times the imaging unit 8 images the melt pool MP#k in the unit movement period is maintained at a constant value even in a case where the cycle of the movement of the target irradiation area EA#k is changed from the first cycle to the second cycle.

**In** a case where the imaging cycle of the imaging unit 8 is fixed, the unit movement period is shorter as the speed of the movement of the target irradiation area EA#k is faster. Therefore, the number of times the imaging unit 8 images the melt pool MP#k in the unit movement period is smaller as the speed of the movement of the target irradiation area EA#k is faster. Therefore, the control unit 7 may change the imaging cycle so as to decrease the imaging cycle. Namely, the control unit 7 may change the imaging cycle so that the imaging cycle in a case where the speed of the movement of the target irradiation area EA#k is the second speed is shorter than the imaging cycle in a case where the speed of the movement of the target irradiation area EA#k is the first speed. The control unit 7 may change the imaging cycle so that the imaging cycle in a case where the cycle of the movement of the target irradiation area EA#k is the second cycle is shorter than the imaging cycle in a case where the cycle of the movement of the target irradiation area EA#k is the first cycle. As a result, the changed amount of the number of times the imaging unit 8 images the melt pool MP#k in the unit movement period is smaller than or equal to the second allowable amount. **In** some cases, the number of times the imaging unit 8 images the melt pool MP#k in the unit movement period is maintained at the constant value.

Incidentally, the imaging cycle is the inverse number of the imaging rate as described above. Therefore, the control unit 7 may change the imaging rate so as to increase the imaging rate. Namely, the control unit 7 may change the imaging rate so that the imaging rate in a case where the speed of the movement of the target irradiation area EA#k is the second speed is higher than the imaging rate in a case where the speed of the movement of the target irradiation area EA#k is the first speed. The control unit 7 may change the imaging rate so that the imaging rate in a case where the cycle of the movement of the target irradiation area EA#k is the second cycle is higher than the imaging rate in a case where the cycle of the movement of the target irradiation area EA#k is the first cycle.

Considering the second specific example of the operation for changing the imaging condition, the control unit 7 may change the imaging cycle so that the imaging cycle is shorter as the speed of the movement of the target irradiation area EA#k is faster. The control unit 7 may change the imaging cycle so that the imaging cycle is longer as the speed of the movement of the target irradiation area EA#k is slower. The control unit 7 may change the imaging cycle so that the imaging cycle is shorter as the cycle of the movement of the target irradiation area EA#k is shorter. The control unit 7 may change the imaging cycle so that the imaging cycle is longer as the cycle of the movement of the target irradiation area EA#k is longer. The control unit 7 may change the imaging rate so that the imaging rate is higher as the speed of the movement of the target irradiation area EA#k is faster. The control unit 7 may change the imaging rate so that the imaging rate is lower as the speed of the movement of the target irradiation area EA#k is slower. The control unit 7 may change the imaging rate so that the imaging rate is higher as the cycle of the movement of the target irradiation area EA#k is shorter. The control unit 7 may change the imaging rate so that the imaging rate is lower as the cycle of the movement of the target irradiation area EA#k is longer.

The control unit 7 may change the imaging timing in addition to or instead of changing at least one of the imaging cycle and the imaging rate. For example, the control unit 7 may change the imaging timing so that the imaging unit 8 can image the melt pool MP#k at an appropriate timing even in a case where the speed of the movement of the target irradiation area EA#k is changed from the first speed to the second speed. Specifically the control unit 7 may change the imaging timing so that the changed amount of the position of the melt pool MP#k in the processing unit area BSA#k at the timing at which the imaging unit 8 images the melt pool MP#k is smaller than or equal to a third allowable amount even in a case where the speed of the movement of the target irradiation area EA#k is changed from the first speed to the second speed. Namely, the control unit 7 may change the imaging timing so that a difference between the position of the melt pool MP#k, which is captured by the imaging unit 8 in a case where the speed of the movement of the target irradiation area EA#k is the first speed, in the processing unit area BSA#k and the position of the melt pool MP#k, which is captured by the imaging unit 8 in a case where the speed of the movement of the target irradiation area EA#k is the second speed, in the processing unit area BSA#k is smaller than or equal to the third allowable amount. Typically, the control unit 7 may change the imaging timing so that the position of the melt pool MP#k in the processing unit area BSA#k at the timing at which the imaging unit 8 images the melt pool MP#k does not change even in a case where the speed of the movement of the target irradiation area EA#k is changed from the first speed to the second speed. Namely, the control unit 7 may change the imaging timing so that the position of the melt pool MP#k, which is captured by the imaging unit 8 in a case where the speed of the movement of the target irradiation area EA#k is the first speed, in the processing unit area BSA#k is the same as the position of the melt pool MP#k, which is captured by the imaging unit 8 in a case where the speed of the movement of the target irradiation area EA#k is the second speed, in the processing unit area BSA#k.

As described above, the processing system SYS can appropriately image the melt pools MP#1 and MP#2 by using the imaging unit 8 by performing the imaging condition change operation. The processing system SYS can appropriately image the melt pools MP#1 and MP#2 by using the imaging unit 8 by performing the imaging condition change operation even in a case where the processing condition is changed. Therefore, the processing system SYS can perform the above-described melt pool feedback control operation appropriately by using the melt pool image IMG generated by the imaging unit 8.

### (2-5) Signal Threshold Value Change Operation

### (2-5-1) Overview of Signal Threshold Value Change Operation

The processing system SYS may perform a signal threshold value change operation in parallel with, before or after the above-described melt pool feedback control operation under the control of the control unit 7. Namely, the processing system SYS may perform the signal threshold value change operation in at least a part of the period during which the above-described melt pool feedback control operation is performed. The processing system SYS may perform the signal threshold value change operation before the above-described melt pool feedback control operation is performed. The processing system SYS may perform the signal threshold value change operation after the above-described melt pool feedback control operation is performed. Typically, the control unit 7 may perform the signal threshold value change operation.

The signal threshold value change operation is an operation for changing (in other words, controlling, adjusting or setting) the signal threshold value that is used to detect the melt pool area MPA. Namely, the signal threshold value change operation is an operation for changing the signal threshold value that is used by the control unit 7 to detect the melt pool area MPA.

The control unit 7 may change the signal threshold value so that the control unit 7 can appropriately detect the melt pool area MPA. For example, the control unit 7 may change the signal threshold value so that the control unit 7 can detect the melt pool area MPA from which the appropriate melt pool image information MPI can be generated. For example, the control unit 7 may change the signal threshold value so that the control unit 7 can appropriately detect the melt pool area MPA having a size that is correlated with the size of the processing unit areas BSA#1 and BSA#2. For example, the control unit 7 may change the signal threshold value so that the control unit 7 can appropriately detect the melt pool area MPA having a size that is correlated with the size of the linear build object built on the build surface MS. For example, the control unit 7 may change the signal threshold value so that the control unit 7 can detect the melt pool area MPA that allows the above-described melt pool feedback control operation to be performed appropriately. For example, the control unit 7 may change the signal threshold value so that the control unit 7 can detect the melt pool area MPA that allows the processing system SYS to build the linear build object having the desired size (typically, the desired width) by the above-described melt pool feedback control operation.

In a case where control unit 7 detects the melt pool area MPA by using the signal threshold value changed by the control unit 7. Namely, the control unit 7 performs the melt pool feedback control operation by using the signal threshold value changed by the control unit 7.

### (2-5-2) Change of Signal Threshold Value based on Processing Condition

The control unit 7 may change the signal threshold value based on the processing condition of workpiece W by the processing system SYS. For example, in a case where the processing system SYS processes workpiece W based on a first processing condition, the control unit 7 may change the signal threshold value so that the control unit 7 detects the melt pool area MPA by using a first signal threshold value. For example, in a case where the processing system SYS processes the workpiece W based on a second processing condition that is different from the first processing condition, the control unit 7 may change the signal threshold value so that the control unit 7 detects the melt pool area MPA by using a second signal threshold value that is different from the first signal threshold value.

The control unit 7 may change the signal threshold value so that the control unit 7 can appropriately detect the melt pool area MPA even in a case the processing condition is changed. For example, the control unit 7 may change the signal threshold value to the first signal threshold value so that the control unit 7 can appropriately detect the melt pool area MPA in a situation where the processing system SY S processes the workpiece W based on the first processing condition. For example, in a case where the processing system SY S processes the workpiece W based on the second processing condition, the control unit 7 may change the signal threshold value to the second signal threshold value so that the control unit 7 can appropriately detect the melt pool area MPA in a situation where the processing system SY S processes the workpiece W based on the second processing condition.

The control unit 7 may change the signal threshold value based on the processing condition by using a signal threshold value table that specifies a correspondence relationship between the processing condition and the signal threshold value. The signal threshold value table may be a table that specifies the signal threshold value that should be used by the control unit 7 in a case where the processing condition of the workpiece W is a certain processing condition. The signal threshold value table may be a table that records information related to the signal threshold value that should be used by the control unit 7 in association with the processing condition of the workpiece W. The signal threshold value table may be stored (in other words, recorded) in the storage apparatus 72. The signal threshold value table may be generated in advance by repeatedly performing the above-described melt pool feedback control operation while changing at least one of the processing condition and the signal threshold value, and determining the correspondence relationship between the processing condition and the signal threshold value that can achieve the desired accuracy of the linear build object that is built as a result of the melt pool feedback control operation.

### (2-5-2-1) First Specific Example of Processing Condition

As described above, the processing condition may include the intensity condition related to the intensity of at least one of the processing lights EL#1 and EL#2. The control unit 7 may change the signal threshold value based on the intensity of at least one of the processing lights EL#1 and EL#2 with which the workpiece W is irradiated in order to process the workpiece W.

Here, as a first specific example of the operation for changing the signal threshold value, an example of the operation for changing the signal threshold value in a case where the intensity of the processing light EL#k is changed from a first intensity to a second intensity that is higher than the first intensity. In this case, since the intensity of the processing light EL#k increases, the luminance value (alternatively, the signal value) of the pixel in which the melt pool MP#k is captured in the melt pool image IMG also increases. In this case, the control unit 7 may change the signal threshold value to increase the signal threshold value. Namely, the control unit 7 may change the signal threshold value so that the signal threshold value is larger as the intensity of the processing light EL#k is higher. The control unit 7 may change the signal threshold value so that the signal threshold value is smaller as the intensity of the processing light EL#k is lower.

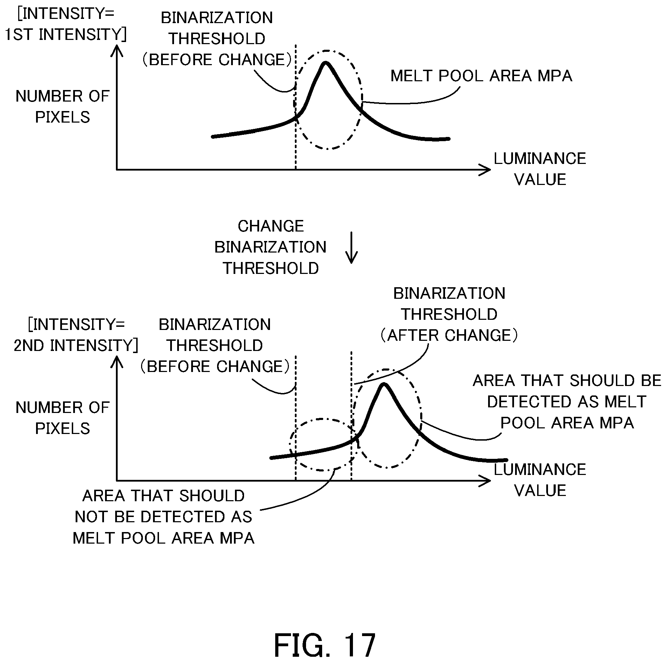

In this case, the control unit 7 can appropriately detect, as the melt pool area MPA, an area that should be detected as the melt pool area MPA. Specifically, FIG. 17 illustrates a histogram of the luminance value in the melt pool image IMG in a case where the intensity of the processing light EL#k is the first intensity, and a histogram of the luminance value in the melt pool image IMG in a case where the intensity of the processing light EL#k is the second intensity. As illustrated in FIG. 17, in a case where the signal threshold value is not changed in a situation where the intensity of the processing light EL#k is changed from the first intensity to the second intensity that is higher than the first intensity, there is a possibility that the luminance value of an area that should not be detected as the melt pool area MPA is higher than the unchanged signal threshold value. Therefore, there is a possibility that the control unit 7 mistakenly detects, as the melt pool area MPA, the area that should not be detected as the melt pool area MPA. On the other hand, as illustrated in FIG 17, in a case where the signal threshold value is changed in a situation where the intensity of the processing light EL#k is changed from the first intensity to the second intensity, the luminance value of the area that should not be detected as the melt pool area MPAis lower than the changed signal threshold value. As a result, there is a low possibility that the control unit 7 mistakenly detects, as the melt pool area MPA, the area that should not be detected as the melt pool area MPA. As a result, the control unit 7 can appropriately detect, as the melt pool area MPA, the area that should be detected as the melt pool area MPA. Namely, the control unit 7 can accurately detect the melt pool area MPA.

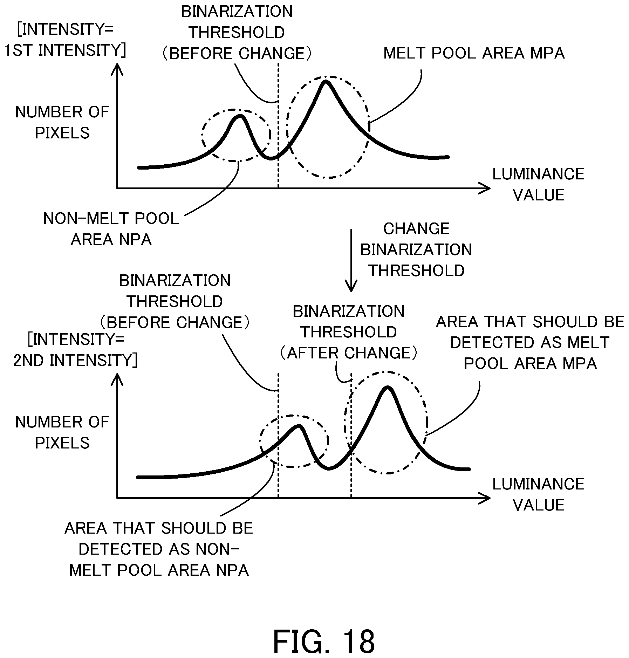

FIG. 18 also illustrates the histogram of the luminance value in the melt pool image IMG in a case where the intensity of the processing light EL#k is the first intensity, and the histogram of the luminance value in the melt pool image IMG in a case where the intensity of the processing light EL#k is the second intensity. As illustrated in FIG. 18, the unchanged signal threshold value is set to a value that allows the melt pool area MPA to be distinguished from the non-melt pool area NPA in the melt pool image IMG in a case where the intensity of the processing light EL#k is the first intensity. In this case, there is a possibility that the luminance value of the area that should be detected as the non-melt pool area NPA increases after the intensity of the processing light EL#k is changed from the first intensity to the second intensity. This is because the non-melt pool area NPA includes the area in which the noise light, which is generated due to the processing light EL, is captured, and therefore, there is a possibility that the increase of the intensity of the processing light EL results in the increase of the intensity of the noise light. As a result, as illustrated in FIG. 18, in a case where the signal threshold value is not changed in a situation where the intensity of the processing light EL#k is changed from the first intensity to the second intensity, there is a possibility that the luminance value of the area that should be detected as the non-melt pool area NPA is higher than the unchanged signal threshold value. Therefore, there is a possibility that the control unit 7 mistakenly detects, as the melt pool area MPA, the area that should be detected as the non-melt pool area NPA. On the other hand, as illustrated in FIG 18, in a case where the signal threshold value is changed in a situation where the intensity of the processing light EL#k is changed from the first intensity to the second intensity, the luminance value of the area that should be detected as the non-melt pool area NPA is lower than the changed signal threshold value. As a result, there is a low possibility that the control unit 7 mistakenly detects, as the melt pool area MPA, the area that should be detected as the non-melt pool area NPA. As a result, the control unit 7 can appropriately detect, as the melt pool area MPA, the area that should be detected as the melt pool area MPA. Namely, the control unit 7 can accurately detect the melt pool area MPA.

Incidentally, as described above, the processing condition may include the condition related to the density of the processing light EL#k. In this case, the operation for changing the signal threshold value based on the intensity of the processing light EL#k may be considered to be equivalent to an operation for changing the signal threshold value based on the density of the processing light EL#k. The control unit 7 may change the signal threshold value based on the density of the processing light EL#k in the same manner as in a case where the signal threshold value is changed based on the intensity of the processing light EL#k. For example, the control unit 7 may change the signal threshold value so that the signal threshold value is larger as the density of the processing light EL#k is higher. The control unit 7 may change the signal threshold value so that the signal threshold value is smaller as the density of the processing light EL#k is lower.

### (2-5-2-2) Second Specific Example of Processing Condition

As described above, the processing condition may include the movement aspect condition related to the movement aspect of at least one of the target irradiation areas EA#1 and EA#2. The control unit 7 may change the signal threshold value based on the movement aspect of at least one of the target irradiation areas EA#1 and EA#2.

Here, as a second specific example of the operation for changing the signal threshold value, an example of the operation for changing the signal threshold value in a case where the speed of the movement of the target irradiation area EA#k is changed from a first speed to a second speed that is faster than the first speed. In this case, since the speed of the movement of the target irradiation area EA#k increases, an amount of an energy transferred from the processing light EL#k to the build surface MS per unit time decreases. Therefore, the luminance value (alternatively, the signal value) of the pixel in which the melt pool MP#k is captured in the melt pool image IMG decreases. In this case, the control unit 7 may change the signal threshold value to decrease the signal threshold value. Namely, the control unit 7 may change the signal threshold value so that the signal threshold value is smaller as the speed of the movement of the target irradiation area EA#k is faster. The control unit 7 may change the signal threshold value so that the signal threshold value is larger as the speed of the movement of the target irradiation area EA#k is slower.

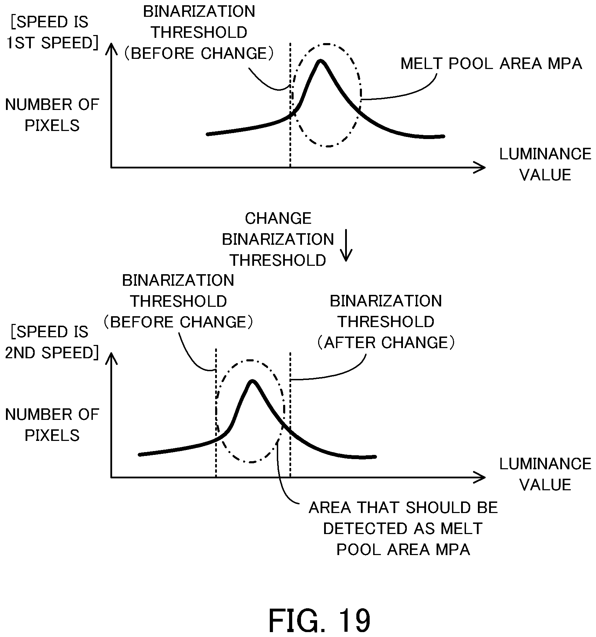

In this case, the control unit 7 can appropriately detect, as the melt pool area MPA, the area that should be detected as the melt pool area MPA. Specifically, FIG. 19 illustrates the histogram of the luminance value in the melt pool image IMG in a case where the speed of the movement of the target irradiation area EA#k is the first speed, and a histogram of the luminance value in the melt pool image IMG in a case where the speed of the movement of the target irradiation area EA#k is the second speed. As illustrated in FIG. 19, in a case where the signal threshold value is not changed in a situation where the speed of the movement of the target irradiation area EA#k is changed from the first speed to the second speed that is faster than the first speed, there is a possibility that the luminance value of the area that should be detected as the melt pool area MPA is lower than the unchanged signal threshold value. Therefore, there is a possibility that the control unit 7 does not detect, as the melt pool area MPA, the area that should be detected as the melt pool area MPA. On the other hand, in a case where the signal threshold value is changed in a situation where the speed of the movement of the target irradiation area EA#k is changed from the first speed to the second speed, the luminance value of the area that should be detected as the melt pool area MPA is higher than the changed signal threshold value. As a result, the control unit 7 can appropriately detect, as the melt pool area MPA, the area that should be detected as the melt pool area MPA. Namely, the control unit 7 can accurately detect the melt pool area MPA.

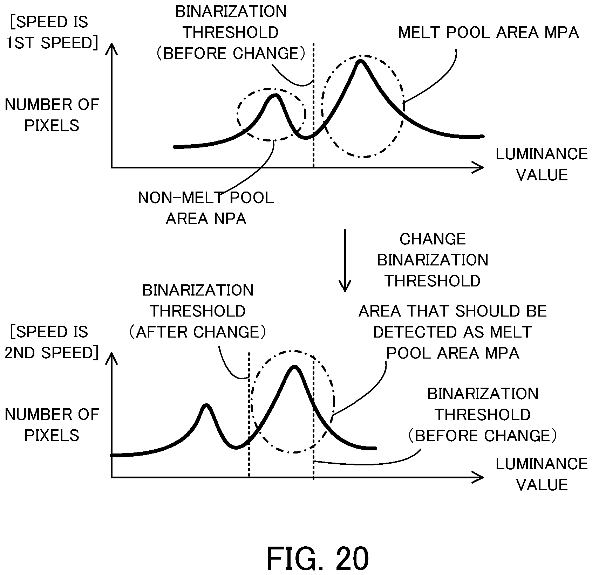

FIG. 20 also illustrates the histogram of the luminance value in the melt pool image IMG in a case where the speed of the movement of the target irradiation area EA#k is the first speed, and the histogram of the luminance value in the melt pool image IMG in a case where the speed of the movement of the target irradiation area EA#k is the second speed. As illustrated in FIG. 20, the unchanged signal threshold value is set to a value that allows the melt pool area MPA to be distinguished from the non-melt pool area NPA in the melt pool image IMG in a case where the speed of the movement of the target irradiation area EA#k is the first speed. In this case, the luminance value of the area that should be detected as the melt pool area MPA decreases after the speed of the movement of the target irradiation area EA#k is changed from the first speed to the second speed. As a result, there is a possibility that the luminance value of the area that should be detected as the melt pool area MPA is lower than the unchanged signal threshold value. Therefore, in a case where the signal threshold value is not changed in a situation where the speed of the movement of the target irradiation area EA#k is changed from the first speed to the second speed, there is a possibility that the control unit 7 mistakenly detect, as the non-melt pool area NPA, the area that should be detected as the melt pool area MPA. On the other hand, in a case where the signal threshold value is changed in a situation where the speed of the movement of the target irradiation area EA#k is changed from the first speed to the second speed, the luminance value of the area that should be detected as the melt pool area MPA is higher than the changed signal threshold value. Therefore, the control unit 7 can appropriately detect, as the melt pool area MPA, the area that should be detected as the melt pool area MPA. Namely, the control unit 7 can accurately detect the melt pool area MPA.

Incidentally, as described above, when the cycle of movement of the target irradiation area EA#k is changed, the speed of the movement of the target irradiation area EA#k changes. Therefore, the control unit 7 may change the signal threshold value in a case where the cycle of the movement of the target irradiation area EA#k is changed from a first cycle to a second cycle that is shorter than the first cycle in the same manner as in a case where the speed of the movement of the target irradiation area EA#k is changed from the first speed to the second speed that is faster than the first speed. Namely, the control unit 7 may change the signal threshold value so that the signal threshold value is smaller as the cycle of movement of the target irradiation area EA#k is shorter. The control unit 7 may change the signal threshold value so that the signal threshold value is larger as the cycle of movement of the target irradiation area EA#k is longer.

As described above, the processing system SYS can appropriately detect the melt pool area MPA by performing the signal threshold value change operation. The processing system SYS can appropriately (for example, accurately) detect the melt pool area MPA by using the control unit 7 by performing the signal threshold value change operation even in a case where the processing condition is changed. Therefore, the processing system SYS can perform above-described the melt pool feedback control operation appropriately by using the melt pool area MPA detected by the control unit 7.

### (2-6) Addition Frame Number Change Operation

### (2-6-1) Overview of Addition Frame Number Change Operation

As described above, the processing system SYS generates the addition image IMG_C by adding the plurality of melt pool images IMG in order to detect the melt pool area MPA in the melt pool feedback control operation. In this case, the processing system SYS may perform an addition frame number change operation in parallel with, before or after the above-described melt pool feedback control operation under the control of the control unit 7. Namely, the processing system SYS may perform the addition frame number change operation in at least a part of the period during which the above-described melt pool feedback control operation is performed. The processing system SYS may perform the addition frame number change operation before the above-described melt pool feedback control operation is performed. The processing system SYS may perform the addition frame number change operation after the above-described melt pool feedback control operation is performed. Typically, the control unit 7 may perform the frame addition number change operation.

The addition frame number change operation is an operation for changing (in other words, controlling, adjusting or setting) the number of melt pool images IMG that should be added to generate the addition image IMG_C. Namely, the addition frame number change operation is an operation for changing the number of melt pool images IMG that should be added by the control unit 7 to generate the addition image IMG_C. In the below-described description, the number of melt pool images IMG that should be added to generate the addition image IMG_C is referred to as the "addition frame number".

The control unit 7 may change the addition frame number so that the control unit 7 can appropriately detect the melt pool area MPA. For example, the control unit 7 may change the addition frame number so that the control unit 7 can detect the melt pool area MPA from which the appropriate melt pool image information MPI can be generated. For example, the control unit 7 may change the addition frame number so that the control unit 7 can appropriately detect the melt pool area MPA having a size that is correlated with the size of the processing unit areas BSA#1 and BSA#2. For example, the control unit 7 may change the addition frame number so that the control unit 7 can appropriately detect the melt pool area MPA having a size that is correlated with the size of the linear build object built on the build surface MS. For example, the control unit 7 may change the addition frame number so that the control unit 7 can detect the melt pool area MPA that allows the above-described melt pool feedback control operation to be performed appropriately. For example, the control unit 7 may change the addition frame number so that the control unit 7 can detect the melt pool area MPA that allows the processing system SYS to build the linear build object having the desired size (typically, the desired width) by the above-described melt pool feedback control operation.

In this case, the control unit 7 generates the addition image IMG_C by using the addition frame number changed by the control unit 7. Namely, the control unit 7 generates the addition image IMG_C by adding the melt pool images IMG, whose number is equal to the addition frame number changed by the control unit 7.

Incidentally, when the addition frame number is changed, the operation of the imaging unit 8 for generating the plurality of melt pool images IMG as the time series data changes. Considering that the imaging unit 8 may be considered to generate the plurality of melt pool images IMG as the time series data by performing the multiple exposure as described above, the operation for changing the addition frame number may be considered to be equivalent to an operation for changing a condition related to the multiple exposure. Specifically, the addition frame number may be considered to be equivalent to the number of exposures that should be performed to generate a single melt pool image IMG generated by the multiple exposure. In this case, the operation for changing the addition frame number may be considered to be equivalent to an operation for changing the number of exposures that should be performed to generate a single melt pool image IMG generated by the multiple exposure.

### (2-6-2) Change of Addition Frame Number based on Processing Condition

The control unit 7 may change the addition frame number based on the processing condition of the workpiece W by the processing system SYS. For example, in a case where the processing system SYS processes the workpiece W based on a first processing condition, the control unit 7 may change the addition frame number so that the control unit 7 generates the addition image IMG_C by adding the melt pool images IMG whose number is equal to a first frame number. For example, in a case where the processing system SYS processes the workpiece W based on a second processing condition that is different from the first processing condition, the control unit 7 may change the addition frame number so that the control unit 7 generates the addition image IMG_C C by adding the melt pool images IMG whose number is equal to a second frame number that is different from the first frame number.

The control unit 7 may change the addition frame number so that the control unit 7 can appropriately detect the melt pool area MPA even in a case where the processing condition is changed. For example, in a case where the processing system SY S processes the workpiece W based on the first processing condition, the control unit 7 may change the addition frame number to the first frame number so that the control unit 7 can appropriately detect the melt pool area MPA in a situation where the processing system SY S processes the workpiece W based on the first processing condition. For example, in a case where the processing system SY S processes the workpiece W based on the second processing condition, the control unit 7 may change the addition frame number to the second frame number so that the control unit 7 can appropriately detect the melt pool area MPA in a situation where the processing system SY S processes the workpiece W based on the second processing condition.

The control unit 7 may change the addition frame number based on the processing condition by using an addition frame number table that specifies a correspondence relationship between the processing condition and the addition frame number. The addition frame number table may be a table that specifies the addition frame number that should be used by the control unit 7 in a case where the processing condition of the workpiece W is a certain processing condition. The addition frame number table may be a table that records information related to the addition frame number that should be used by the control unit 7 in association with the processing condition of the workpiece W. The addition frame number table may be stored (in other words, recorded) in the storage apparatus 72. The addition frame number table may be generated in advance by repeatedly performing the above-described melt pool feedback control operation while changing at least one of the processing condition and the addition frame number, and determining the correspondence relationship between the processing condition and the addition frame number that can achieve the desired accuracy of the linear build object that is built as a result of the melt pool feedback control operation.

### (2-6-2-1) First Specific Example of Processing Condition

As described above, the processing condition may include the intensity condition related to the intensity of at least one of the processing lights EL#1 and EL#2. The control unit 7 may change the addition frame number based on the intensity of at least one of the processing lights EL#1 and EL#2 with which the workpiece W is irradiated in order to process the workpiece W.

Here, as a first specific example of the operation for changing the addition frame number, an example of the operation for changing the addition frame number in a case where the intensity of processing light EL#k is changed from a first intensity to a second intensity that is higher than the first intensity. In this case, since the intensity of the processing light EL#k increases, the luminance value (alternatively, the signal value) of the pixel in which the melt pool MP#k is captured in the melt pool image IMG also increases. In this case, the control unit 7 may change the addition frame number to decrease the addition frame number. Namely, the control unit 7 may change the addition frame number so that the addition frame number is smaller as the intensity of the processing light EL#k is higher. The control unit 7 may change the addition frame number so that the addition frame number is larger as the intensity of the processing light EL#k is lower.

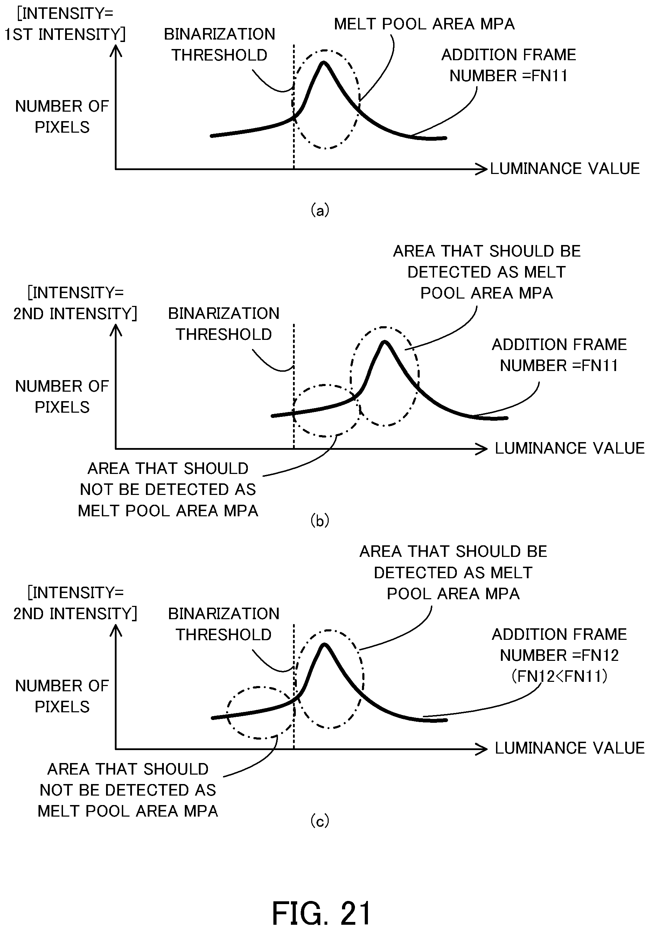

In this case, the control unit 7 can appropriately detect, as the melt pool area MPA, the area that should be detected as the melt pool area MPA. Specifically, FIG. 21 (a) illustrates the histogram of the luminance value in the melt pool image IMG in a case where the intensity of the processing light EL#k is the first intensity and the addition frame number is a first frame number FN11. FIG. 21(b) illustrates the histogram of the luminance value in the melt pool image IMG in a case where the intensity of the processing light EL#k is the second intensity and the addition frame number is not changed and is still the first frame number FN11. FIG. 21(c) illustrates the histogram of the luminance value in the melt pool image IMG in a case where the intensity of the processing light EL#k is the second intensity and the addition frame number is changed from the first frame number FN11 to a second frame number FN12 that is smaller than the first frame number FN11. As illustrated in FIG. 21(b), in a case the addition frame number is not changed in a situation where the intensity of the processing light EL#k is changed from the first intensity to the second intensity that is higher than the first intensity, there is a possibility that the luminance value of the area that should not be detected as the melt pool area MPA is higher than the signal threshold value. Therefore, there is a possibility that the control unit 7 mistakenly detects, as the melt pool area MPA, the area that should not be detected as the melt pool area MPA. On the other hand, in a case where the addition frame number is changed to decrease in a situation where the intensity of the processing light EL#k is changed from the first intensity to the second intensity, the luminance value of each pixel of the addition image IMG_C decreases. As a result, as illustrated in FIG 21(c), the luminance value of the area that should not be detected as the melt pool area MPA is lower than the signal threshold value. As a result, there is a low possibility that the control unit 7 mistakenly detects, as the melt pool area MPA, the area that should not be detected as the melt pool area MPA. As a result, the control unit 7 can appropriately detect, as the melt pool area MPA, the area that should be detected as the melt pool area MPA. Namely, the control unit 7 can accurately detect the melt pool area MPA.

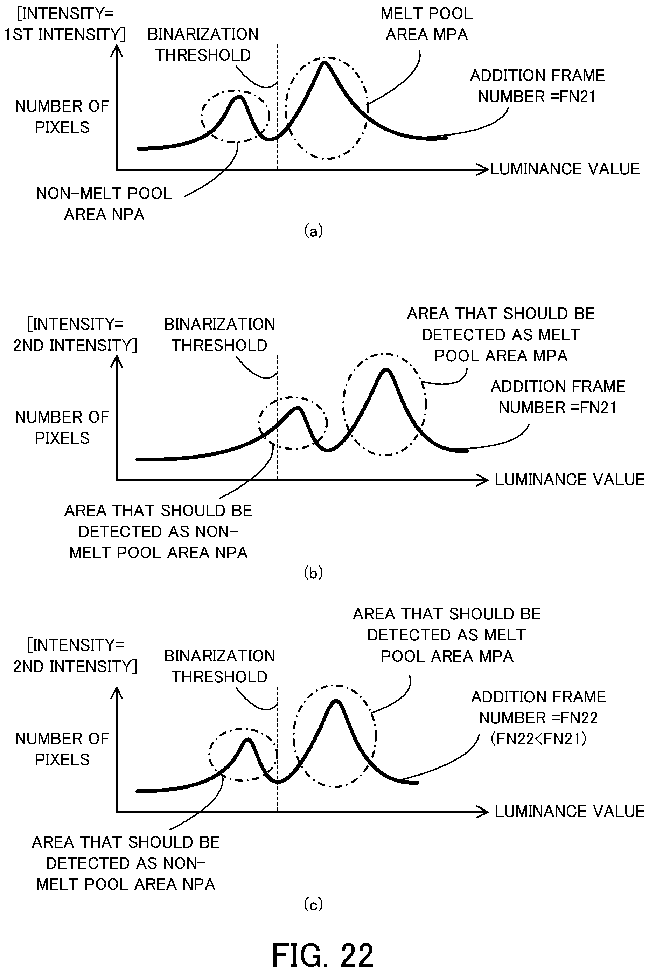

Similarly, FIG. 22(a) illustrates the histogram of the luminance value in the melt pool image IMG in a case where the intensity of the processing light EL#k is the first intensity and the addition frame number is a first frame number FN21. FIG. 22(b) illustrates the histogram of the luminance value in the melt pool image IMG in a case where the intensity of the processing light EL#k is the second intensity and the addition frame number is not changed and is still the first frame number FN21. FIG. 22(c) illustrates the histogram of the luminance value in the melt pool image IMG in a case where the intensity of the processing light EL#k is the second intensity and the addition frame number is changed from the first frame number FN21 to a second frame number FN22 that is smaller than the first frame number FN21. As illustrated in FIG. 22(a), the signal threshold value is set to a value that allows the melt pool area MPA to be distinguished from the non-melt pool area NPA in the melt pool image IMG in a case where the intensity of the processing light EL#k is the first intensity. In this case, as described above, there is a possibility that the luminance value of the area that should be detected as the non-melt pool area NPA increases after the intensity of the processing light EL#k is changed from the first intensity to the second intensity. As a result, as illustrated in FIG. 22(b), in a case where the addition frame number is not changed in a situation where the intensity of the processing light EL#k is changed from the first intensity to the second intensity, there is a possibility that the luminance value of the area that should be detected as the non-melt pool area NPA is higher than the signal threshold value. Therefore, there is a possibility that the control unit 7 mistakenly detects, as the melt pool area MPA, the area that should be detected as the non-melt pool area NPA. On the other hand, in a case where the addition frame number is changed to decrease in a situation where the intensity of the processing light EL#k is changed from the first intensity to the second intensity, the luminance value of each pixel of the addition image IMG_C decreases. As a result, as illustrated in FIG. 22(c), the luminance value of the area that should be detected as the non-melt pool area NPA is lower than the signal threshold value. As a result, there is a low possibility that the control unit 7 mistakenly detects, as the melt pool area MPA, the area that should be detected as the non-melt pool area NPA. As a result, the control unit 7 can appropriately detect, as the melt pool area MPA, the area that should be detected as the melt pool area MPA. Namely, the control unit 7 can accurately detect the melt pool area MPA.

Incidentally, as described above, the processing condition may include the condition related to the density of the processing light EL#k. In this case, the operation for changing the addition frame number based on the intensity of the processing light EL#k may be considered to be equivalent to an operation for changing the addition frame number based on the density of the processing light EL#k. The control unit 7 may change the addition frame number based on the density of the processing light EL#k in the same manner as in a case where the addition frame number is changed based on the intensity of the processing light EL#k. For example, the control unit 7 may change the addition frame number so that the addition frame number is smaller as the density of the processing light EL#k is higher. The control unit 7 may change the addition frame number so that the addition frame number is larger as the density of the processing light EL#k is lower.

### (2-6-2-2) Second Specific Example of Processing Condition

As described above, the processing condition may include the movement aspect condition related to the movement aspect of at least one of the target irradiation areas EA#1 and EA#2. The control unit 7 may change the addition frame number based on the movement aspect of at least one of the target irradiation areas EA#1 and EA#2.

Here, as a second specific example of the operation for changing the addition frame number, an example of the operation for changing the addition frame number in a case where the speed of the movement of the target irradiation area EA#k is changed from a first speed to a second speed that is faster than the first speed. In this case, since the speed of the movement of the target irradiation area EA#k increases, the amount of the energy transferred from the processing light EL#k to the build surface MS per unit time decreases. Therefore, the luminance value (alternatively, the signal value) of the pixel in which the melt pool MP#k is captured in the melt pool image IMG decreases. In this case, the control unit 7 may change the addition frame number to increase the addition frame number. Namely, the control unit 7 may change the addition frame number so that the addition frame number is larger as the speed of the movement of the target irradiation area EA#k is faster. The control unit 7 may change the addition frame number so that the addition frame number is smaller as the speed of the movement of the target irradiation area EA#k is slower.

In this case, the control unit 7 can appropriately detect, as the melt pool area MPA, the area that should be detected as the melt pool area MPA. Specifically, FIG. 23(a) illustrates the histogram of the luminance value in the melt pool image IMG in a case where the speed of the movement of the target irradiation area EA#k is the first speed and the addition frame number is a first frame number FN31. FIG. 23(b) illustrates the histogram of the luminance value in the melt pool image IMG in a case where the speed of the movement of the target irradiation area EA#k is the second speed and the addition frame number is not changed is still the first frame number FN31. FIG. 23(c) illustrates the histogram of the luminance value in the melt pool image IMG in a case where the speed of the movement of the target irradiation area EA#k is the second speed and the addition frame number is changed from the first frame number FN31 to a second frame number FN32 that is larger than the first frame number FN31. As illustrated in FIG. 23(b), in a case where the addition frame number is not changed in a situation where the speed of the movement of the target irradiation area EA#k is changed from the first speed to the second speed that is faster than the first speed, there is a possibility that the luminance value of the area that should be detected as the melt pool area MPA is lower than the signal threshold value. Therefore, there is a possibility that the control unit 7 does not detect, as the melt pool area MPA, the area that should be detected as the melt pool area MPA. On the other hand, in a case where the addition frame number is changed to increase in a situation where the speed of the movement of the target irradiation area EA#k is changed from the first speed to the second speed, the luminance value of each pixel of the addition image IMG_C increases. As a result, as illustrated in FIG. 23(c), the luminance value of the area that should be detected as the melt pool area MPA is higher than the signal threshold value. As a result, the control unit 7 can appropriately detect, as the melt pool area MPA, the area that should be detected as the melt pool area MPA. Namely, the control unit 7 can accurately detect the melt pool area MPA.

Similarly, FIG. 24(a) illustrates the histogram of the luminance values in the melt pool image IMG in a case where the speed of the movement of the target irradiation area EA#k is the first speed and the addition frame number is a first frame number FN41. FIG. 24(b) illustrates the histogram of the luminance value in the melt pool image IMG in a case where the speed of the movement of the target irradiation area EA#k is the second speed and the addition frame number is not changed and is still the first frame number FN41. FIG. 24(c) illustrates the histogram of the luminance value in the melt pool image IMG in a case where the speed of the movement of the target irradiation area EA#k is the second speed and the addition frame number is changed from the first frame number FN41 to a second frame number FN42 that is larger than the first frame number FN41. As illustrated in FIG 24(a), the signal threshold value is set to a value that allows the melt pool area MPA to be distinguished from the non-melt pool area NPA in the melt pool image IMG in a case where the speed of the movement of the target irradiation area EA#k is the first speed. In this case, the luminance value of the area that should be detected as the melt pool area MPA decreases after the speed of the movement of the target irradiation area EA#k is changed from the first speed to the second speed. As a result, in a case where the addition frame number is not changed in a situation where the speed of the movement of the target irradiation area EA#k is changed from the first speed to the second speed, there is a possibility that the luminance value of the area that should be detected as the melt pool area MPA is lower than the unchanged signal threshold value as illustrated in FIG. 24(b). Therefore, there is a possibility that the control unit 7 mistakenly detect, as the non-melt pool area NPA, the area that should be detected as the melt pool area MPA. On the other hand, in a case where the addition frame number is changed to increase in a situation where the speed of the movement of the target irradiation area EA#k is changed from the first speed to the second speed, the luminance value of each pixel of the addition image IMG_C increases. As a result, as illustrated in FIG. 24(c), the luminance value of the area that should be detected as the melt pool area MPA is higher than the signal threshold value. Therefore, the control unit 7 can appropriately detect, as the melt pool area MPA, the area that should be detected as the melt pool area MPA. Namely, the control unit 7 can accurately detect the melt pool area MPA.

Incidentally, as described above, when the cycle of movement of the target irradiation area EA#k is changed, the speed of the movement of the target irradiation area EA#k changes. Therefore, the control unit 7 may change the addition frame number in a case where the cycle of the movement of the target irradiation area EA#k is changed from a first cycle to a second cycle that is shorter than the first cycle in the same manner as in a case where the speed of the movement of the target irradiation area EA#k is changed from the first speed to the second speed that is faster than the first speed. Namely, the control unit 7 may change the addition frame number so that the addition frame number is larger as the cycle of movement of the target irradiation area EA#k is shorter. The control unit 7 may change the addition frame number so that the addition frame number is smaller as the cycle of movement of the target irradiation area EA#k is longer.

As described above, the processing system SYS can appropriately detect the melt pool area MPA by performing the addition frame number change operation. The processing system SYS can appropriately (for example, accurately) detect the melt pool area MPA by using the control unit 7 by performing the addition frame number change operation even in a case where the processing condition is changed. Therefore, the processing system SYS can perform above-described the melt pool feedback control operation appropriately by using the melt pool area MPA detected by the control unit 7.

Incidentally, the control unit 7 may change the addition frame number based on the exposure time of the imaging unit 8. For example, when the exposure time is changed from a first time to a second time that is shorter than the first time, the luminance value (alternatively, the signal value) of the pixel in which the melt pool MP#k is captured in the melt pool image IMG decreases. Namely, the luminance value (alternatively, the signal value) of the pixel in which the melt pool MP#k is captured in the melt pool image IMG is lower as the exposure time is shorter, as in a case where the speed of the movement of the target irradiation area EA#k increases. Therefore, the control unit 7 may change the addition frame number based on the exposure time in the same manner as in a case where the addition frame number is changed based on the speed of the movement of the target irradiation area EA#k. Namely, the control unit 7 may change the addition frame number so that the addition frame number is larger as the exposure time is shorter. The control unit 7 may change the addition frame number so that the addition frame number is smaller as the exposure time is longer.

### (2-7) Target Size Change Operation

### (2-7-1) Overview of Target Size Change Operation

As described above, the control unit 7 controls the processing system SYS so that the size of the melt pool area MPA is the target size TS at the step S13 in FIG. 9. In this case, the processing system SYS may perform a target size change operation in parallel with, before or after the above-described melt pool feedback control operation under the control of the control unit 7. Namely, the processing system SYS may perform the target size change operation in at least a part of the period during which the above-described melt pool feedback control operation is performed. The processing system SYS may perform the target size change operation before the above-described melt pool feedback control operation is performed. The processing system SYS may perform the target size change operation after the above-described melt pool feedback control operation is performed. Typically, the control unit 7 may perform the frame addition number change operation.

The target size change operation is an operation for changing (in other words, controlling, adjusting or setting) the target size TS. Namely, the target size change operation is an operation for changing the target size TS that is used by the control unit 7 to control the processing system SYS.

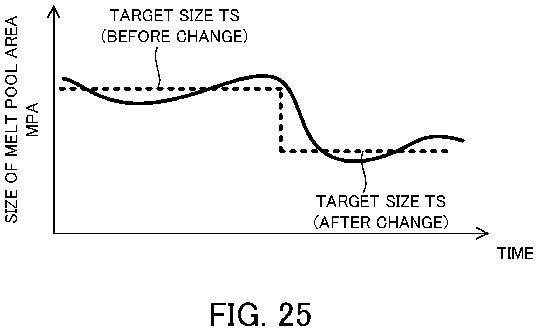

In this case, the control unit 7 controls the processing system SYS so that the size of the melt pool area MPA is the target size TS changed by the control unit 7. Specifically, as illustrated in FIG. 25 that is a timing chart illustrating a relationship between the size of the melt pool area and the target size TS, before the target size TS is changed, the control unit 7 controls the processing system SYS so that the size of the melt pool area MPA is the target size TS before the change. On the other hand, after the target size TS has been changed, the control unit 7 controls the processing system SYS so that the size of the melt pool area MPA is the target size TS after the change.

The control unit 7 may change the target size TS so that the processing system SYS can build the linear build object having the desired size (typically, the desired width) by the above-described melt pool feedback control operation. As a result, the processing system SYS can build the linear build object having the desired size (typically, the desired width). Namely, the processing system SYS can build the build object with high build accuracy.

### (2-7-2) Change of Target Size TS based on Processing Condition

The control unit 7 may change the target size TS based on the processing condition of the workpiece W by the processing system SYS. For example, in a case where the processing system SYS processes the workpiece W based on a first processing condition, the control unit 7 may change the target size TS so that the control unit 7 uses a first size as the target size TS. For example, in a case where the processing system SYS processes the workpiece W based on a second processing condition that is different from the first processing condition, the control unit 7 may change the target size TS so that the control unit 7 uses a second size, which is different from the first size, as the target size TS.

The control unit 7 may change the target size TS so that the processing system SYS can build the linear build object having the desired size (typically, the desired width) even in a case where the processing condition is changed. For example, in a case where the processing system SY S processes the workpiece W based on the first processing condition, the control unit 7 may change the target size TS to the first size so that the processing system SYS can build the linear build object having the desired size corresponding to the first processing condition. For example, in a case where the processing system SY S processes the workpiece W based on the second processing condition, the control unit 7 may change the target size TS to the second size so that the processing system SYS can build the linear build object having the desired size corresponding to the second processing condition.

The control unit 7 may change the target size TS so that a difference between the size (for example, the width) of the linear build object that is built in a case where the processing system SYS processes the workpiece W based on the first processing condition and the size (for example, the width) of the linear build object that is built in a case where the processing system SYS processes the workpiece W based on the second processing condition is smaller than or equal to a predetermined fourth allowable amount. Typically, the control unit 7 may change the target size TS so that he size (for example, the width) of the linear build object that is built in a case where the processing system SYS processes the workpiece W based on the first processing condition is the same as the size (for example, the width) of the linear build object that is built in a case where the processing system SYS processes the workpiece W based on the second processing condition. Alternatively, the control unit 7 may change the target size TS so that the difference between the size (for example, the width) of the linear build object that is built in a case where the processing system SYS processes the workpiece W based on the first processing condition and the size (for example, the width) of the linear build object that is built in a case where the processing system SYS processes the workpiece W based on the second processing condition is a predetermined target difference amount.

The control unit 7 may change the target size TS based on the processing condition by using a target size table that specifies a correspondence relationship between the processing condition and the target size TS. The target size table may be a table that specifies the target size TS that should be used by the control unit 7 in a case where the processing condition of the workpiece W is a certain processing condition. The target size table may be a table that records information related to the target size TS that should be used by the control unit 7 in association with the processing condition of the workpiece W. The target size table may be stored (in other words, recorded) in the storage apparatus 72. The target size table may be generated in advance by repeatedly performing the above-described melt pool feedback control operation while changing at least one of the processing condition and the target size TS, and determining the correspondence relationship between the processing condition and the target size TS that can achieve the desired accuracy of the linear build object that is built as a result of the melt pool feedback control operation.

### (2-7-2-1) First Specific Example of Processing Condition

As described above, the processing condition may include the intensity condition related to the intensity of at least one of the processing lights EL#1 and EL#2. The control unit 7 may change the target size TS based on the intensity of at least one of the processing lights EL#1 and EL#2 with which the workpiece W is irradiated in order to process the workpiece W.

Here, as a first specific example of the operation for changing the target size TS, an example of the operation for changing the target size TS in a case where the intensity of the processing light EL#k is changed from a first intensity to a second intensity that is higher than the first intensity. In this case, since the intensity of the processing light EL#k increases, the luminance value (alternatively, the signal value) of the pixel in which the melt pool MP#k is captured in the melt pool image IMG also increases. Furthermore, there is a possibility that the number of pixels, whose signal value (for example, luminance value) is larger than the signal threshold value, increases due to the increase of the intensity of the processing light EL#k, even though the area in which the melt pools MP#1 and MP#2 formed on the build surface MS move is not changed. As a result, there is a possibility that the size of the melt pool area MPA, which is calculated in the melt pool feedback control operation, increases, even though the area in which the melt pools MP#1 and MP#2 formed on the build surface MS move is not changed. Namely, there is a possibility that the size of the melt pool area MPA calculated in a case where the intensity of the processing light EL is the second intensity is larger than the size of the melt pool area MPA calculated in a case where the intensity of the processing light EL is the first intensity.

In a case where the intensity of the processing light EL#k is changed from the first intensity to the second intensity without changing the target size TS in this situation, the size of the melt pool area MPA, which was equal to the target size TS in a case where the intensity of the processing light EL#k was the first intensity, is larger than the target size TS. Namely, even though the area in which the melt pool MP#k actually moves on the build surface MS is not changed due to the change of the intensity of the processing light EL#k, the size of the melt pool area MPA calculated by the melt pool feedback control operation increases. Therefore, the control unit 7 controls the processing system SYS so that the size of the melt pool area MPA decreases. As a result, there is a possibility that the area in which the melt pool MP#k actually moves on the build surface MS may become smaller than the area in which the melt pool MP#k actually moves on the build surface MS in a case where the intensity of the processing light EL#k is the second intensity. Namely, there is a possibility that the size of the processing unit area BSA#k in which the melt pool MP#k is formed in a case where the intensity of the processing light EL#k is the second intensity is smaller than the size of the processing unit area BSA#k in which the melt pool MP#k is formed in a case where the intensity of the processing light EL#k is the first intensity. As a result, there is a possibility that the size of the linear build object built in a case where the intensity of the processing light EL#k is the second intensity is smaller than the size of the linear build object built in a case where the intensity of the processing light EL#k is the first intensity.

Therefore, the control unit 7 may change the target size TS to increase the target size TS in a case where the intensity of the processing light EL#k is changed from the first intensity to the second intensity that is higher than the first intensity. Namely, the control unit 7 may change the target size TS so that the target size TS is larger as the intensity of the processing light EL#k is higher. The control unit 7 may change the target size TS so that the target size TS is smaller as the intensity of the processing light EL#k is lower.

As a result, even in a case where the intensity of the processing light EL#k is changed, the size of the processing unit area BSA#k in which the melt pool MP#k is formed does not change unexpectedly. As a result, the size (typically, the width) of the linear build object, which is built by moving the processing unit areas BSA#1 and BSA#2 on the build surface MS, does not change unexpectedly. Therefore, the processing system SYS can build the linear build object having the desired size (typically, the desired width) even in a case where the intensity of the processing light EL#k is changed. Therefore, the processing system SYS can build the build object with high build accuracy.

Incidentally, as described above, the processing condition may include the condition related to the density of the processing light EL#k. In this case, the operation for changing the target size TS based on the intensity of the processing light EL#k may be considered to be equivalent to an operation for changing the target size TS based on the density of the processing light EL#k. The control unit 7 may change the target size TS based on the density of the processing light EL#k in the same manner as in a case where the target size TS is changed based on the intensity of the processing light EL#k. For example, the control unit 7 may change the target size TS so that the target size TS is smaller as the density of the processing light EL#k is higher. The control unit 7 may change the target size TS so that the target size TS is larger as the density of the processing light EL#k is lower.

### (2-7-2-2) Second Specific Example of Processing Condition

As described above, the processing condition may include the movement aspect condition related to the movement aspect of at least one of the target irradiation areas EA#1 and EA#2. The control unit 7 may change the target size TS based on the movement aspect of at least one of the target irradiation areas EA#1 and EA#2.

For example, the control unit 7 may change the target size TS so that a difference between the size (for example, the width) of the linear build object that is built in a case where the target irradiation area EA#k moves in a first movement aspect and the size (for example, the width) of the linear build object that is built in a case where the target irradiation area EA#k moves in a second movement mode, which is different from the first movement aspect, is smaller than or equal to the predetermined fourth allowable amount. Typically, the control unit 7 may change the target size TS so that a difference between the size (for example, the width) of the linear build object that is built in a case where the target irradiation area EA#k moves in the first movement aspect is the same as the size (for example, the width) of the linear build object that is built in a case where the target irradiation area EA#k moves in the second movement mode is smaller than or equal to the predetermined fourth allowable amount. Alternatively, the control unit 7 may change the target size TS so that the difference between the size (for example, the width) of the linear build object that is built in a case where the target irradiation area EA#k moves in the first movement aspect and the size (for example, the width) of the linear build object that is built in a case where the target irradiation area EA#k moves in the second movement mode is the predetermined target difference amount.

As one example, as described above, the movement aspect of the target irradiation area EA#k may include the stroke of the movement of the target irradiation area EA#k. the size (for example, the width) of the linear build object is larger as the stroke of the movement of the target irradiation area EA#k is larger. In this case, the control unit 7 may change the target size TS so that the target size TS is larger as the stroke is larger. The control unit 7 may change the target size TS so that the target size TS is smaller as the stroke is smaller. As a result, the processing system SYS can build the linear build object having the size corresponding to the stroke.

As another example, as described above, the movement aspect of the target irradiation area EA#k may include the pattern of the movement trajectory of the target irradiation area EA#k. In this case, the control unit 7 may acquire the target size TS corresponding to the pattern of the movement trajectory of the target irradiation area EA#k from the target size table. For example, in a case where the pattern of the movement trajectory of the target irradiation area EA#k is the wave-shaped (for example, the sinusoidal wave-shaped) pattern as illustrated in FIG. 4(b), the control unit 7 may acquire the target size TS corresponding to the wave-shaped (for example, the sinusoidal wave-shaped) pattern of the movement trajectory from the target size table. For example, in a case where the pattern of the movement trajectory of the target irradiation area EA#k is the spiral-shaped (for example, a circular-shaped in which a center position gradually shifts) pattern as illustrated in FIG. 5(c), the control unit 7 may acquire the target size TS corresponding to the spiral-shaped (for example, a circular-shaped in which a center position gradually shifts) pattern of the movement trajectory from the target size table. Then, the control unit 7 may control the processing system SYS so that the size of the melt pool area MPA is the acquired target size TS.

As described above, the processing system SYS can appropriately change the target size TS by performing the target size change operation. Especially, the processing system SYS can appropriately build the linear-shaped build object having the desired size even in a case where the processing condition is changed by performing the target size change operation. Therefore, the processing system SYS can build the build object with high build accuracy.

### (3) Modified Example

### (3-1) First Modified Example

The control unit 7 may be configured to acquire shape information related to the melt pool MP#k continuously formed at different positions by the processing light EL#k based on the melt pool image IMG. The control unit 7 may control the processing system SYS based on the shape information.

The shape information may be information indicating the shape of the above-described melt pool area MPA. As described above, the melt pool area MPA corresponds to the area in which the melt pool MP#k moves. In this case, the shape information may be information indicating a shape of the area in which the melt pool MP#k moves. In other words, the shape information may be information indicating a shape of the movement trajectory of the melt pool MP#k.

The control unit 7 may control the processing system SYS so that the shape of the melt pool area MPA is a desired shape. For example, in a case where the shape of the melt pool area MPA is different from the desired shape, the control unit 7 may control the processing system SYS so that the shape of the melt pool area MPA returns to the desired shape. As one example, the control unit 7 may control the intensity of at least one of the processing light EL#1 emitted by the light source 4#1 and the processing light EL#2 emitted by the light source 4#2 so that the shape of the melt pool area MPA returns to the desired shape. Namely, the control unit 7 may perform the DC modulation control for controlling the DC component of the intensity of at least one of the processing lights EL#1 and EL#2 so that the shape of the melt pool area MPA returns to the desired shape.

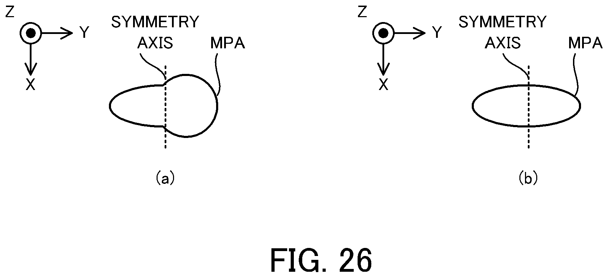

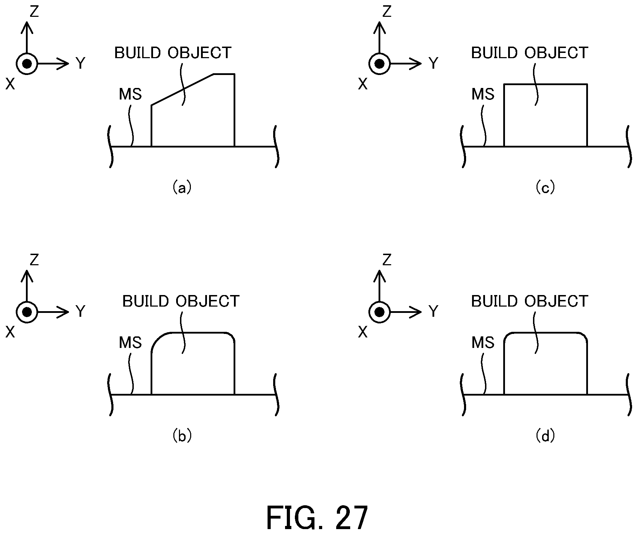

A shape that is linearly symmetric about a symmetry axis along the movement direction of the processing unit area BSA#k is one example of the desired shape. As one example, FIG. 26(a) illustrates an example in which the shape of the melt pool area MPA is not linearly symmetric about the symmetry axis (for example, the symmetry axis along the X-axis). In this case, as illustrated in FIG. 27(a), which is a cross-sectional view illustrating the linear build object that is built in a case where the melt pool area MPA illustrated in FIG. 26(a) is detected, there is a possibility that a height of a left half of the linear build object is not the same as a height of a right half of the linear build object. Furthermore, as illustrated in FIG. 27(b), which is a cross-sectional view illustrating the linear build object that is built in a case where the melt pool area MPAillustrated in FIG. 26(a) is detected, a curvature of a corner of the left half of the linear build object is not the same as a curvature of a corner of the right half of the linear build object. Namely, there is a possibility that the build accuracy of the build object deteriorates.

In this case, the control unit 7 may control the processing system SYS so that the shape of the melt pool area MPA is symmetrical about the symmetry axis (for example, the symmetry axis along the X-axis), as illustrated in FIG. 26(b). As a result, the height of the left half of the linear build object is the same as the height of the right half of the linear build object as illustrated in FIG. 27(c), which is a cross-sectional view illustrating the linear build object that is built in a case where the melt pool area MPA illustrated in FIG. 26(b) is detected. Furthermore, the curvature of the corner of the left half of the linear build object is the same as the curvature of the corner of the right half of the linear build object as illustrated in FIG. 27(d), which is a cross-sectional view illustrating the linear build object that is built in a case where the melt pool area MPA illustrated in FIG. 26(b) is detected,. Namely, the build accuracy of the build object is improved.

### (3-2) Second Modified Example

The control unit 7 may be configured to acquire center position information related to the melt pool MP#k continuously formed at different positions by the processing light EL#k based on the melt pool image IMG. The control unit 7 may control the processing system SYS based on the center information.

The center position information may be information indicating a center position of the above-described melt pool area MPA. As described above, the melt pool area MPA corresponds to the area in which the melt pool MP#k moves. In this case, the center position information may be information indicating a center position of the area in which the melt pool MP#k moves. Note that a center of mass of the melt pool area MPA is one example of the center position of the melt pool area MPA.

The control unit 7 may control the processing system SYS so that the center position of the melt pool area MPA moves along a desired trajectory. For example, in a case where the center position of the melt pool area MPA is positioned at a position that is away from the desired trajectory, the control unit 7 may control the processing system SYS so that the center position of the melt pool area MPA moves along the desired trajectory. As one example, the control unit 7 may control the stroke of at least one of the target irradiation areas EA#1 and EA#2 so that the center position of the melt pool area MPA moves along the desired trajectory. Namely, the control unit 7 may control at least one of the Galvano mirrors 2146 and 2156 that are configured to control the stroke of at least one of the target irradiation areas EA#1 and EA#2.

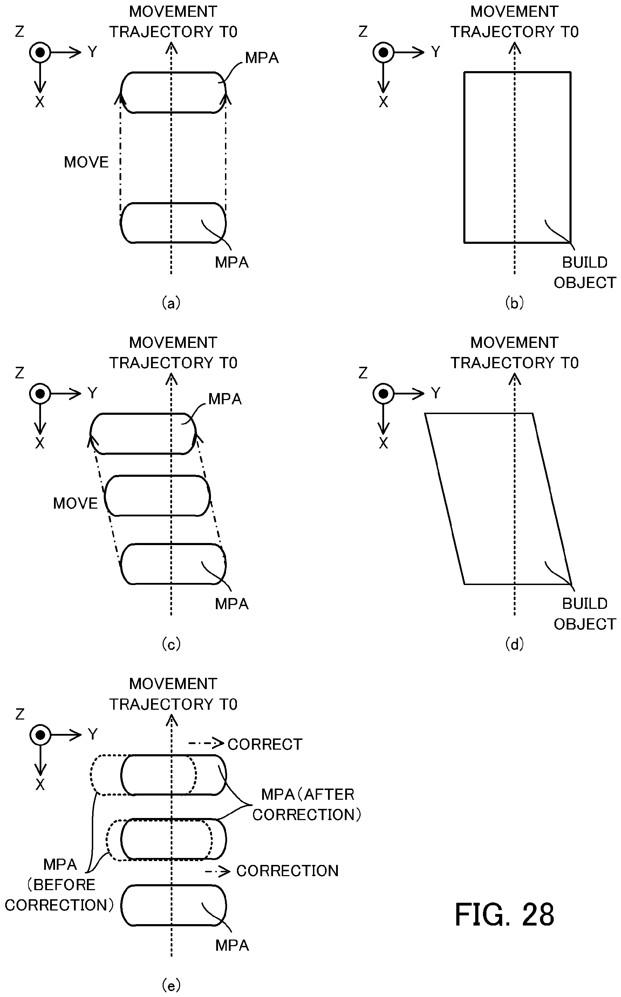

The target movement trajectory MT0 of the processing unit area BSA#k is one example of the desired trajectory. In this case, the control unit 7 may control the processing system SYS so that the center position of the melt pool area MPA moves along the target movement trajectory MT0 of the processing unit area BSA#k, as illustrated in FIG. 28(a). As a result, as illustrated in FIG. 28(b), which is a cross-sectional view illustrating the linear build object that is built in a case where the melt pool area MPA illustrated in FIG. 28(a) is detected, the control unit 7 can appropriately build the linear build object that extends along the target movement trajectory MT0 of the processing unit area BSA#k. If the center position of the melt pool area MPA moves along a movement trajectory that is different from the target movement trajectory MT0 of the processing unit area BSA#k as illustrated in FIG. 28(c), the control unit 7 builds the linear build object that extends along a direction intersecting the target movement trajectory MT0 of the processing unit area BSA#k as illustrated in FIG. 28(d), which is a cross-sectional view illustrating the linear build object that is built in a case where the melt pool area MPA illustrated in FIG. 28(c) is detected. In this case, as illustrated in FIG. 28(e), the control unit 7 may correct the center position of the melt pool area MPA so that the center position of the melt pool area MPA moves along the movement trajectory that is different from the target movement trajectory MT0 of the processing unit area BSA#k.

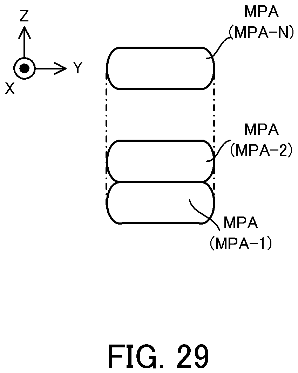

The control unit 7 may control the processing system SYS so that an amount of positional deviation of the center position of the melt pool area MPA in a lateral direction is smaller than a fifth allowable amount during a process of stacking the plurality of linear build objects. Typically, the control unit 7 may control the processing system SYS so that the center position of the melt pool area MPA is positioned at the same position in the lateral direction during the process of stacking the plurality of linear build objects. For example, as illustrated in FIG. 29, the control unit 7 may control the processing system SYS so that the center position of the melt pool area MPA-1 detected in a case where a first linear build object is built, the center position of the melt pool area MPA-2 detected in a case where a second linear build object is built on the first linear object, ..., and the center position of the melt pool area MPA-N detected in a case where a N-th linear build object is built on a (N-1)-th linear object are the same as each other in the lateral direction.

### (3-3) Modified Example

The light source 4 of the processing system SYS may be replaceable. For example, in a case where the processing system SYS includes a first light source 4 that emits the processing light EL having a first wavelength, the first light source 4 may be replaced with a second light source 4 that emits the processing light EL having a second wavelength that is different from the first wavelength. For example, in a case where the processing system SYS includes a third light source 4 that emits the processing light EL having a first intensity, the third light source 4 may be replaced with a fourth light source 4 that emits the processing light EL having a fourth wavelength that is different from the first intensity. In a case where the processing system SYS includes the light source 4 that has deteriorated over time, the light source 4 may be replaced with a new light source 4.

The control unit 7 may calculate the intensities of the processing lights EL#1 and EL#2 based on the luminance value of the melt pool area MPA in the melt pool image IMG or the addition image IMG_C acquired by the imaging unit 8 of the processing system SYS imaging the melt pool MP as described above. The control unit 7 may estimate a deterioration of the optical member in the irradiation optical system 211 based on the intensities of the processing lights EL#1 and EL#2 estimated from the imaged result of the imaging unit 8 and the intensities of the processing lights EL#1 and EL#2 detected by the power meters 2143 and 2153.

In the above-described description, the processing unit 2 melts the build material M by irradiating the build material M with the processing light EL. However, the processing unit 2 may melt the build material M by irradiating the build material M with any energy beam. At least one of a charged particle beam, an electromagnetic wave and the like is one example of any energy beam. A least one of an electron beam, an ion beam and the like is one example of the charged particle beam.

In the above-described description, the processing unit 2 builds the three-dimensional structural object ST by performing the additive manufacturing based on the Laser Metal Deposition. However, the processing unit 2 may build the three-dimensional structural object ST by performing the additive manufacturing based on another method for building the three-dimensional structural object. At least one of a PBF (Powder Bed Fusion) such as a SLS (Selective Laser Sintering), a Binder Jetting, a Material Jetting, a SLA (Stereolithography), and a LMF (Laser Metal Fusion) is one example of another method for building the three-dimensional structural object.

The processing system SYS may perform both of the additive manufacturing and a subtracting manufacturing. For example, the processing system SYS may perform the additive manufacturing by using either one of the processing lights EL#1 and EL#2, and may perform the subtracting manufacturing by using the other one of the processing lights EL#1 and EL#2. In this case, the processing system SYS may perform the additive manufacturing and the subtracting manufacturing simultaneously. Incidentally, in a case where the processing system SYS may not perform the additive manufacturing and the subtracting manufacturing simultaneously, the processing system SYS may perform the additive manufacturing and the subtracting manufacturing by using the same processing light EL.

The processing system SYS may perform a remelt processing for reducing a flatness of the surface (namely, for reducing a surface roughness, for making the surface closer to a flat surface) of the workpiece W (alternatively, the build object built on the workpiece W) processed by the additive manufacturing or the subtractive manufacturing, in addition to or instead of at least one of the additive manufacturing and the subtractive manufacturing. For example, the processing system SYS may perform at least one of the additive manufacturing and the subtractive manufacturing by using either one of the processing lights EL#1 and EL#2, and may perform the remelt processing by using the other one of the processing lights EL#1 and EL#2. In this case, the processing system SYS may perform the remelt processing and at least one of the additive manufacturing and the subtractive manufacturing simultaneously. Incidentally, in a case where the processing system SYS may not perform the remelt processing and at least one of the additive manufacturing and the subtracting manufacturing simultaneously, the processing system SYS may perform the remelt processing and at least one of the additive manufacturing and the subtracting manufacturing by using the same processing light EL.

The above-described processing unit 2 (especially, the processing head 21) may be attached to a robot (typically, an articulated robot). For example, the processing unit 2 (especially, the processing head 21) may be attached to a welding robot for performing a welding. For example, the processing unit 2 (especially, the processing head 21) may be attached to a self-propelled mobile robot.

### (5) Supplementary Note

Regarding the above-described example embodiment, below described Supplementary notes are further disclosed.

### [Supplementary Note 1]

A processing system including:
a processing apparatus that is configured to process an object by irradiating the object with an energy beam to form a melt pool on the object and supplying a build material to the melt pool;
an imaging apparatus that is configured to generate a melt pool image by imaging the melt pool; and
a control apparatus that is configured to generate melt pool image information based on the melt pool image generated by the imaging apparatus, and control the processing apparatus based on the melt pool image information so that a size of a melt pool area is a target size,
wherein
the melt pool image information is generated based on a plurality of melt pool images imaged by the imaging apparatus, and
the control apparatus changes, based on a processing condition of the object by the processing apparatus, an imaging condition for the imaging apparatus imaging the melt pool.

### [Supplementary Note 2]

The processing system according to the Supplementary Note 1, wherein
the processing apparatus includes: an irradiation optical system that emits the energy beam; and a position change apparatus that is configured to change a positional relationship between the object and the irradiation optical system, and
the irradiation optical system includes a deflection optical system that is configured to move, on a surface of the object, an irradiation position of the energy beam on the surface of the object by deflecting the energy beam.

### [Supplementary Note 3]

The processing system according to the Supplementary Note 2, wherein
the control apparatus controls the position change apparatus based on path information so that a build object is formed on the object along a target trajectory and controls the deflection optical system so that the irradiation position of the energy beam periodically moves on the surface of the object along a scanning direction intersecting the target trajectory.

### [Supplementary Note 4]

The processing system according to the Supplementary Note 2 or 3, wherein
the plurality of melt pool images includes: an image indicating the melt pool formed at a first position; and an image indicating the melt pool formed at a second position different from the first position by the deflection optical system.

### [Supplementary Note 5]

The processing system according to any one of the Supplementary Notes 2 to 4, wherein
the control apparatus changes the imaging condition based on a control signal for controlling the deflection optical system.

### [Supplementary Note 6]

The processing system according to any one of the Supplementary Notes 2 to 5, wherein
the control apparatus performs at least one of an operation for changing an imaging cycle for imaging the melt pool based on a speed of a movement of the irradiation position, an operation for changing the imaging cycle for imaging the melt pool based on a cycle of a deflection of the energy beam, an operation for changing the imaging cycle for imaging the melt pool based on a speed of the deflection of the energy beam, an operation for changing an imaging rate for imaging the melt pool based on the speed of the movement of the irradiation position, an operation for changing the imaging rate for imaging the melt pool based on the cycle of the deflection of the energy beam, and an operation for changing the imaging rage for imaging the melt pool based on the speed of the deflection of the energy beam.

### [Supplementary Note 7]

The processing system according to any one of the Supplementary Notes 2 to 6, wherein
the control apparatus performs at least one of an operation for making an imaging cycle for imaging the melt pool be shorter as a speed of a movement of the irradiation position is faster, an operation for making the imaging cycle for imaging the melt pool be shorter as a cycle of a deflection of the energy beam is shorter, an operation for making the imaging cycle for imaging the melt pool be shorter as a speed of the deflection of the energy beam is faster, an operation for making an imaging rate for imaging the melt pool be higher as the speed of the movement of the irradiation position is faster, an operation for making imaging rate for imaging the melt pool be higher as the cycle of the deflection of the energy beam is shorter, and an operation for making imaging rate for imaging the melt pool be higher as the speed of the deflection of the energy beam is faster.

### [Supplementary Note 8]

The processing system according to any one of the Supplementary Notes 2 to 6, wherein
the melt pool image information is generated by adding the plurality of melt pool images imaged by the imaging apparatus,
the control apparatus performs at least one of an operation for changing the number of the added melt pool images based on a speed of a movement of the irradiation position, an operation for changing the number of the added melt pool images based on a cycle of a deflection of the energy beam, and an operation for changing the number of the added melt pool images based on a speed of the deflection of the energy beam.

### [Supplementary Note 9]

The processing system according to any one of the Supplementary Notes 2 to 8, wherein
the melt pool image information is generated by adding the plurality of melt pool images imaged by the imaging apparatus,
the control apparatus performs at least one of an operation for making the number of the added melt pool images be larger as a speed of a movement of the irradiation position is faster, an operation for making the number of the added melt pool images be larger as a cycle of a deflection of the energy beam is shorter, and an operation for making the number of the added melt pool images be larger as a speed of the deflection of the energy beam is faster.

### [Supplementary Note 10]

The processing system according to any one of the Supplementary Notes 1 to 9, wherein
the imaging condition includes a condition related to a timing at which the imaging apparatus images the melt pool.

### [Supplementary Note 11]

The processing system according to any one of the Supplementary Notes 1 to 10, wherein
the imaging condition includes a condition related to an exposure time of the imaging apparatus for imaging the melt pool.

### [Supplementary Note 12]

The processing system according to any one of the Supplementary Notes 1 to 11, wherein
the imaging condition includes a condition related to an imaging cycle or an imaging rate at which the imaging apparatus images the melt pool.

### [Supplementary Note 13]

The processing system according to any one of the Supplementary Notes 1 to 12, wherein
the control apparatus controls the imaging apparatus so that an exposure time for imaging the melt pool is shorter as an intensity or a density of the energy beam is higher.

### [Supplementary Note 14]

The processing system according to the Supplementary Note 13, wherein
the melt pool image information is generated by adding the plurality of melt pool images imaged by the imaging apparatus, and
the control apparatus makes the number of the added melt pool images be larger as the exposure time is shorter.

### [Supplementary Note 15]

The processing system according to any one of the Supplementary Notes 2 to 9, wherein
the energy beam is a first energy beam,
the deflection optical system is a first deflection optical system, and
the processing system further comprises a second deflection optical system that is configured to move, on the surface of the object, an irradiation position of a second energy beam on the surface of the object by deflecting the second energy beam that is different from the first energy beam.

### [Supplementary Note 16]

The processing system according to the Supplementary Note 15, wherein
the processing condition includes at least one of a speed, a cycle, and a stroke of a movement of the irradiation position of the first energy beam and at least one of a speed, a cycle, and a stroke of a movement of the irradiation position of the second energy beam.

### [Supplementary Note 17]

The processing system according to any one of the Supplementary Notes 1 to 16, wherein
the processing condition includes a beam condition related to the energy beam.

### [Supplementary Note 18]

The processing system according to any one of the Supplementary Notes 1 to 17, wherein
the processing apparatus includes an irradiation position movement apparatus that is configured to move an irradiation position of the energy beam on the object, and
the processing condition includes a movement aspect condition related to a movement aspect of the irradiation position.

### [Supplementary Note 19]

The processing system according to any one of the Supplementary Notes 1 to 18, wherein
the control apparatus changes the imaging condition so that the imaging apparatus images the melt pool based on a first imaging condition in a case where the processing apparatus processes the object based on a first processing condition and the imaging apparatus images the melt pool based on a second imaging condition that is different from the first imaging condition in a case where the processing apparatus processes the object based on a second processing condition that is different from the first processing condition.

### [Supplementary Note 20]

A processing system including:
a processing apparatus that includes: a processing head that is configured to process an object by irradiating the object with an energy beam to form a melt pool on the object and supplying a build material to the melt pool; and a position change apparatus that is configured to change an irradiation position of the energy beam relative to the processing head;
an imaging apparatus that is attached to the processing head and that is configured to generate a melt pool image by imaging the melt pool formed by the processing apparatus; and
a control apparatus that is configured to generate melt pool image information based on the melt pool image generated by the imaging apparatus, and control the processing apparatus based on the melt pool image information so that a size of the melt pool area is a target size,
wherein
the melt pool image information is generated based on a plurality of melt pool images imaged by the imaging apparatus.

### [Supplementary Note 21]

The processing system according to the Supplementary Note 20, wherein
the position change apparatus is a first position change apparatus,
the processing apparatus further includes a second position change apparatus that is configured to change a positional relationship between the object and the processing head, and
the first position change apparatus includes a deflection optical system that is configured to move, on a surface of the object, the irradiation position of the energy beam on the surface of the object by deflecting the energy beam.

### [Supplementary Note 22]

The processing system according to the Supplementary Note 21, wherein
the control apparatus controls the second position change apparatus based on path information so that a build object is formed on the object along a target trajectory and controls the deflection optical system so that the irradiation position of the energy beam periodically moves on the surface of the object along a scanning direction intersecting the target trajectory.

### [Supplementary Note 23]

The processing system according to the Supplementary Note 21 or 22, wherein
the plurality of melt pool images includes: an image indicating the melt pool formed at a first position; and an image indicating the melt pool formed at a second position different from the first position by the deflection optical system.

### [Supplementary Note 24]

The processing system according to any one of the Supplementary Notes 21 to 23, wherein
the control apparatus performs at least one of an operation for making an imaging cycle for imaging the melt pool be shorter as a speed of a movement of the irradiation position is faster, an operation for making the imaging cycle for imaging the melt pool be shorter as a cycle of a deflection of the energy beam is shorter, an operation for making the imaging cycle for imaging the melt pool be shorter as a speed of the deflection of the energy beam is faster, an operation for making an imaging rate for imaging the melt pool be higher as the speed of the movement of the irradiation position is faster, an operation for making imaging rate for imaging the melt pool be higher as the cycle of the deflection of the energy beam is shorter, and an operation for making imaging rate for imaging the melt pool be higher as the speed of the deflection of the energy beam is faster.

### [Supplementary Note 25]

The processing system according to any one of the Supplementary Notes 21 to 24, wherein
the melt pool image information is generated by adding the plurality of melt pool images imaged by the imaging apparatus, and
the control apparatus performs at least one of an operation for making the number of the added melt pool images be larger as a speed of a movement of the irradiation position is faster, an operation for making the number of the added melt pool images be larger as a cycle of a deflection of the energy beam is shorter, and an operation for making the number of the added melt pool images be larger as a speed of the deflection of the energy beam is faster.

### [Supplementary Note 26]

The processing system according to any one of the Supplementary Notes 20 to 25, wherein
the control apparatus changes an imaging condition for the imaging apparatus imaging the melt pool, and
the imaging condition includes a condition related to a timing at which the imaging apparatus images the melt pool.

### [Supplementary Note 27]

The processing system according to any one of the Supplementary Notes 20 to 26, wherein
the control apparatus changes an imaging condition for the imaging apparatus imaging the melt pool, and
the imaging condition includes a condition related to an exposure time of the imaging apparatus for imaging the melt pool.

### [Supplementary Note 28]

The processing system according to any one of the Supplementary Notes 20 to 27, wherein
the control apparatus changes an imaging condition for the imaging apparatus imaging the melt pool, and
the imaging condition includes a condition related to an imaging cycle or an imaging rate at which the imaging apparatus images the melt pool.

### [Supplementary Note 29]

The processing system according to any one of the Supplementary Notes 20 to 28, wherein
the control apparatus controls the imaging apparatus so that an exposure time for imaging the melt pool is shorter as an intensity or a density of the energy beam is higher.

### [Supplementary Note 30]

The processing system according to the Supplementary Note 29, wherein
the melt pool image information is generated by adding the plurality of melt pool images imaged by the imaging apparatus, and
the control apparatus makes the number of the added melt pool images be larger as the exposure time is shorter.

### [Supplementary Note 31]

The processing system according to any one of the Supplementary Notes 20 to 30, wherein
the control apparatus changes an imaging condition for the imaging apparatus imaging the melt pool so that the imaging apparatus images the melt pool based on a first imaging condition in a case where the processing apparatus processes the object based on a first processing condition and the imaging apparatus images the melt pool based on a second imaging condition that is different from the first imaging condition in a case where the processing apparatus processes the object based on a second processing condition that is different from the first processing condition.

### [Supplementary Note 32]

A processing system including:
a processing apparatus that is configured to process an object by irradiating the object with an energy beam to form a melt pool on the object and supplying a build material to the melt pool;
an imaging apparatus that is configured to generate a melt pool image by imaging the melt pool; and
a control apparatus that is configured to calculate a size of a melt pool area in the melt pool image based on a compared result of a signal value of the melt pool image and a predetermined threshold value, and control the processing apparatus so that the size of the melt pool area is a target size,
wherein
the control apparatus changes the predetermined threshold value based on a processing condition of the object by the processing apparatus.

### [Supplementary Note 33]

The processing system according to the Supplementary Note 32, wherein
the processing apparatus includes: an irradiation optical system that emits the energy beam; and a position change apparatus that is configured to change a positional relationship between the object and the irradiation optical system, and
the irradiation optical system includes a deflection optical system that is configured to move, on a surface of the object, an irradiation position of the energy beam on the surface of the object by deflecting the energy beam.

### [Supplementary Note 34]

The processing system according to the Supplementary Note 33, wherein the control apparatus controls the position change apparatus based on path information so that a build object is formed on the object along a target trajectory and controls the deflection optical system so that the irradiation position of the energy beam periodically moves on the surface of the object along a scanning direction intersecting the target trajectory.

### [Supplementary Note 35]

The processing system according to the Supplementary Note 33 or 34, wherein
the imaging apparatus generates a plurality of melt pool images,
the control apparatus calculates the size of the melt pool area in the melt pool image based on a compared result of an added result of the plurality of melt pool images and the predetermined threshold value, and
the plurality of melt pool images includes: an image indicating the melt pool formed at a first position; and an image indicating the melt pool formed at a second position different from the first position by the deflection optical system.

### [Supplementary Note 36]

The processing system according to any one of the Supplementary Notes 33 to 35, wherein
the control apparatus performs at least one of an operation for making the threshold value be smaller as a speed of a movement of the irradiation position is faster, an operation for making the threshold value be smaller as a cycle of a deflection of the energy beam is shorter, and an operation for making the threshold value be smaller as a speed of the deflection of the energy beam is faster.

### [Supplementary Note 37]

The processing system according to any one of the Supplementary Notes 32 to 36, wherein
the control apparatus makes the threshold value be larger as an intensity or a density of the energy beam is higher.

### [Supplementary Note 38]

The processing system according to any one of the Supplementary Notes 32 to 37, wherein
the signal value is a value related to a luminance of the melt pool image.

### [Supplementary Note 39]

The processing system according to any one of the Supplementary Notes 32 to 38, wherein
the size of the melt pool area is calculated based on the number of pixels whose signal value is larger than the predetermined threshold value.

### [Supplementary Note 40]

The processing system according to any one of the Supplementary Notes 32 to 39, wherein
the processing condition includes a beam condition related to the energy beam.

### [Supplementary Note 41]

The processing system according to any one of the Supplementary Notes 33 to 36, wherein
the processing condition includes a movement aspect condition related to a movement aspect of the irradiation position of the energy beam by the deflection optical system.

### [Supplementary Note 42]

The processing system according to any one of the Supplementary Notes 32 to 41, wherein
the control apparatus changes the predetermined threshold value so that the control apparatus calculates the size of the melt pool area by comparing the signal value to a first threshold value, which is the predetermined threshold value, in a case where the processing apparatus processes the object based on a first processing condition and the control apparatus calculates the size of the melt pool area by comparing the signal value to a second threshold value, which is the predetermined threshold value and which is different from the first luminance threshold value, in a case where the processing apparatus processes the object based on a second processing condition that is different from the first processing condition.

### [Supplementary Note 43]

The processing system according to any one of the Supplementary Notes 32 to 42, wherein
the imaging apparatus generates a plurality of melt pool images as time series data by successively imaging the melt pool the plurality of times,
the control apparatus calculates the size of the melt pool area by adding the signal values of successive melt pool images, whose number is a predetermined number, among the plurality of melt pool images by a unit of pixel, and comparing an added result of the signal values and the predetermined threshold value.

### [Supplementary Note 44]

The processing system according to the Supplementary Note 43, wherein
the control apparatus changes the predetermined number based on the processing condition.

### [Supplementary Note 45]

The processing system according to the Supplementary Note 44, wherein
the control apparatus changes the predetermined number so that the control apparatus adds the signal values of the melt pool images, whose number is a first number, by a unit of pixel in a case where the processing apparatus processes the object based on a first processing condition and the control apparatus adds the signal values of the melt pool images, whose number is a second number different from the first number, by a unit of pixel in a case where the processing apparatus processes the object based on a second processing condition that is different from the first processing condition.

### [Supplementary Note 46]

A processing system including:
a processing apparatus that is configured to process an object by irradiating the object with an energy beam to form a melt pool on the object and supplying a build material to the melt pool;
an imaging apparatus that is configured to generate a melt pool image by imaging the melt pool; and
a control apparatus that is configured to generate melt pool image information based on the melt pool image generated by the imaging apparatus, and control the processing apparatus based on the melt pool image information so that a size of the melt pool area is a target size,
wherein
the control apparatus changes the target size based on a processing condition of the object by the processing apparatus.

### [Supplementary Note 47]

The processing system according to the Supplementary Note 46, wherein
the processing apparatus includes: an irradiation optical system that emits the energy beam; and a position change apparatus that is configured to change a positional relationship between the object and the irradiation optical system, and
the irradiation optical system includes a deflection optical system that is configured to move, on a surface of the object, an irradiation position of the energy beam on the surface of the object by deflecting the energy beam.

### [Supplementary Note 48]

The processing system according to the Supplementary Note 47, wherein
the control apparatus controls the position change apparatus based on path information so that a build object is formed on the object along a target trajectory and controls the deflection optical system so that the irradiation position of the energy beam periodically moves on the surface of the object along a scanning direction intersecting the target trajectory.

### [Supplementary Note 49]

The processing system according to any one of the Supplementary Notes 46 to 48, wherein
the processing condition includes a beam condition related to the energy beam.

### [Supplementary Note 50]

The processing system according to the Supplementary Note 49, wherein
the control apparatus makes the target size be larger as an intensity or a density of the energy beam is higher.

### [Supplementary Note 51]

The processing system according to any one of the Supplementary Notes 46 to 50, wherein
the processing apparatus includes an irradiation position movement apparatus that is configured to move an irradiation position of the energy beam on the object, and
the processing condition includes a movement aspect condition related to a movement aspect of the irradiation position of the energy beam by the deflection optical system.

### [Supplementary Note 52]

The processing system according to any one of the Supplementary Notes 46 to 51, wherein
the processing condition includes a stroke of a movement of an irradiation position of the energy beam, and
the control apparatus makes the target size be larger as the stroke is larger.

### [Supplementary Note 53]

The processing system according to any one of the Supplementary Notes 46 to 52, wherein
the control apparatus changes the target size so that the control apparatus controls the processing apparatus so that the size of the melt pool area is a first size, which is the target size, in a case where the processing apparatus processes the object based on a first processing condition and the size of the melt pool area is a second size, which is the target size and which is different from the first size, in a case where the processing apparatus processes the object based on a second processing condition that is different from the first processing condition.

### [Supplementary Note 54]

The processing system according to any one of the Supplementary Notes 46 to 53, wherein
the control apparatus changes the target size to build a build object having a desired size on the object by controlling the processing apparatus so that the size of the melt pool area is the target size.

### [Supplementary Note 55]

A processing system including:
a processing apparatus that is configured to process an object by irradiating the object with an energy beam to form a melt pool on the object and supplying a build material to the melt pool;
an imaging apparatus that is configured to generate a plurality of images by imaging an area including the melt pool a plurality of number of times; and
a control apparatus that is configured to add signal values of the plurality of images by a unit of pixel, and detect at least one of a melt pool area in the image and a non-melt pool area in which at least one of emitted light and reflected light other than the melt pool is captured based on a compared result of a predetermined threshold value and an added result by a unit of pixel.

### [Supplementary Note 56]

The processing system according to any one of the Supplementary Note 55, wherein
at least one of: a spatter generated by a molten object, which is molten in the melt pool, scattering; a fume generated by a molten object, which is molten in the melt pool, evaporating; emitting light due to an irradiation of the energy beam onto a film of a surface of the object; and the build material that is molten by the energy beam before reaching the melt pool is captured in the non-melt pool area.

### [Supplementary Note 57]

The processing system according to the Supplementary Note 55 or 56, wherein
the processing apparatus includes: an irradiation optical system that emits the energy beam; and a position change apparatus that is configured to change a positional relationship between the object and the irradiation optical system, and
the irradiation optical system includes a deflection optical system that is configured to move, on a surface of the object, an irradiation position of the energy beam on the surface of the object by deflecting the energy beam.

### [Supplementary Note 58]

The processing system according to the Supplementary Note 57, wherein
the control apparatus controls the position change apparatus based on path information so that a build object is formed on the object along a target trajectory and controls the deflection optical system so that the irradiation position of the energy beam periodically moves on the surface of the object along a scanning direction intersecting the target trajectory.

### [Supplementary Note 59]

The processing system according to any one of the Supplementary Notes 54 to 58, wherein
the signal value is a luminance value of the image.

### [Supplementary Note 60]

The processing system according to any one of the Supplementary Notes 54 to 59, wherein
the control apparatus detects, as the melt pool area, an area including a pixel corresponding to the added result of the signal values larger than the threshold value, and detects, as the non-melt pool area, an area including a pixel corresponding to the added result of the signal values smaller than the luminance threshold value.

### [Supplementary Note 61]

The processing system according to any one of the Supplementary Notes 55 to 60, wherein
the imaging apparatus generates the plurality of images as time series data.

### [Supplementary Note 62]

The processing system according to any one of the Supplementary Notes 55 to 61, wherein
the imaging apparatus generates the plurality of images by successively imaging the melt pool.

### [Supplementary Note 63]

A processing system including:
a processing apparatus that is configured to process an object by irradiating the object with an energy beam to form a melt pool on the object and supplying a build material to the melt pool;
an imaging apparatus that is configured to perform a multiple exposure of an area including the melt pool; and
a control apparatus that is configured to detect at least one of a melt pool area in an image generated by the multiple exposure and a non-melt pool area in which at least one of emitted light and reflected light other than the melt pool is captured by comparing a result of the multiple exposure by the imaging apparatus and a predetermined threshold value.

### [Supplementary Note 64]

The processing system according to the Supplementary Note 63, wherein
at least one of: a spatter generated by a molten object, which is molten in the melt pool, scattering; a fume generated by a molten object, which is molten in the melt pool, evaporating; emitting light due to an irradiation of the energy beam onto a film of a surface of the object; and the build material that is molten by the energy beam before reaching the melt pool is captured in the non-melt pool area.

### [Supplementary Note 65]

The processing system according to the Supplementary Note 63 or 64, wherein
the processing apparatus includes: an irradiation optical system that emits the energy beam; and a position change apparatus that is configured to change a positional relationship between the object and the irradiation optical system, and
the irradiation optical system includes a deflection optical system that is configured to move, on a surface of the object, an irradiation position of the energy beam on the surface of the object by deflecting the energy beam.

### [Supplementary Note 66]

The processing system according to the Supplementary Note 65, wherein
the control apparatus controls the position change apparatus based on path information so that a build object is formed on the object along a target trajectory and controls the deflection optical system so that the irradiation position of the energy beam periodically moves on the surface of the object along a scanning direction intersecting the target trajectory.

### [Supplementary Note 67]

The processing system according to any one of the Supplementary Notes 63 to 66, wherein
the result of the multiple exposure includes a luminance value of the image.

### [Supplementary Note 68]

The processing system according to any one of the Supplementary Notes 63 to 67, wherein
the control apparatus detects, as the melt pool area, an area including a pixel corresponding to the result of the multiple exposure larger than the threshold value, and detects, as the non-melt pool area, an area including a pixel corresponding to the result of the multiple exposure smaller than the luminance threshold value.

### [Supplementary Note 69]

A processing system including:
a processing apparatus that is configured to process an object by irradiating the object with an energy beam to form a melt pool on the object and supplying a build material to the melt pool;
an imaging apparatus that is configured to generate a melt pool image by imaging the melt pool;
a control apparatus that is configured to generate melt pool image information based on the melt pool image generated by the imaging apparatus, and control the processing apparatus based on the melt pool image information so that a size of a melt pool area is a target size; and
a recording apparatus that is configured to record information related to the target size of the melt pool in association with a wobble condition of the energy beam,
wherein
the control apparatus controls the processing apparatus based on the target size of the melt pool acquired from the recording apparatus.

### [Supplementary Note 70]

The processing system according to the Supplementary Note 69, wherein
the processing apparatus includes: an irradiation optical system that emits the energy beam; and a position change apparatus that is configured to change a positional relationship between the object and the irradiation optical system, and
the irradiation optical system includes a deflection optical system that is configured to move, on a surface of the object, an irradiation position of the energy beam on the surface of the object by deflecting the energy beam.

### [Supplementary Note 71]

The processing system according to the Supplementary Note 70, wherein
the control apparatus controls the position change apparatus based on path information so that a build object is formed on the object along a target trajectory and controls the deflection optical system so that the irradiation position of the energy beam periodically moves on the surface of the object along a scanning direction intersecting the target trajectory.

### [Supplementary Note 72]

A processing system including:
a processing apparatus that is configured to process an object by irradiating the object with an energy beam to form a melt pool on the object and supplying a build material to the melt pool;
an imaging apparatus that is configured to generate a melt pool image by imaging the melt pool; and
a control apparatus,
wherein
the control apparatus is configured to acquire, based on the melt pool image generated by the imaging apparatus, shape information related to the melt pool that is successively formed at different positions by the energy beam, and controls the processing apparatus based on the shape information.

### [Supplementary Note 73]

The processing system according to the Supplementary Note 72, wherein
the processing apparatus includes: an irradiation optical system that emits the energy beam; and a position change apparatus that is configured to change a positional relationship between the object and the irradiation optical system, and
the irradiation optical system includes a deflection optical system that is configured to move, on a surface of the object, an irradiation position of the energy beam on the surface of the object by deflecting the energy beam.

### [Supplementary Note 74]

The processing system according to the Supplementary Note 73, wherein
the control apparatus controls the position change apparatus based on path information so that a build object is formed on the object along a target trajectory and controls the deflection optical system so that the irradiation position of the energy beam periodically moves on the surface of the object along a scanning direction intersecting the target trajectory.

### [Supplementary Note 75]

A processing system including:
a processing apparatus that is configured to process an object by irradiating the object with an energy beam to form a melt pool on the object and supplying a build material to the melt pool;
an imaging apparatus that is configured to generate a melt pool image by imaging the melt pool; and
a control apparatus,
wherein
the control apparatus is configured to acquire, based on the melt pool image generated by the imaging apparatus, center position information of the melt pool that is successively formed at different positions by the energy beam, and controls the processing apparatus based on the center position information.

### [Supplementary Note 76]

The processing system according to the Supplementary Note 75, wherein
the processing apparatus includes: an irradiation optical system that emits the energy beam; and a position change apparatus that is configured to change a positional relationship between the object and the irradiation optical system, and
the irradiation optical system includes a deflection optical system that is configured to move, on a surface of the object, an irradiation position of the energy beam on the surface of the object by deflecting the energy beam.

### [Supplementary Note 77]

The processing system according to the Supplementary Note 76, wherein
the control apparatus controls the position change apparatus based on path information so that a build object is formed on the object along a target trajectory and controls the deflection optical system so that the irradiation position of the energy beam periodically moves on the surface of the object along a scanning direction intersecting the target trajectory.

### [Supplementary Note 78]

The processing system according to the Supplementary Note 3, 22, 34, 48, 58, 64, 70, 73, or 76, wherein
the path information includes a line width information,
the control apparatus controls the deflection optical system so that the irradiation position of the energy beam periodically moves inside a width of a line that is built based on the line width information.

### [Supplementary Note 79]

The processing system according to any one of the Supplementary Notes 2 to 4, 21 to 23, 33 to 35, 47 to 48, 57 to 58, 65 to 66, 70 to 71, 73 to 74, and 76 to 78, wherein
the control apparatus controls the deflection optical system so as to periodically move the irradiation position of the energy beam inside a target width indicating a width of a build object along a direction intersecting the target trajectory.

### [Supplementary Note 80]

The processing system according to the Supplementary Note 78, wherein
the imaging apparatus is configured to image the melt pool so that the melt pool, which is formed by the energy beam periodically moving inside the width of the line, is included in an imaging range.

### [Supplementary Note 81]

The processing system according to the Supplementary Note 79, wherein
the imaging apparatus is configured to image the melt pool so that the melt pool, which is formed by the energy beam periodically moving inside the target width, is included in an imaging range.

### [Supplementary Note 82]

The processing system according to any one of the Supplementary Notes 1 to 31, 46 to 54, and 69 to 71, wherein
the melt pool image information is generated based on a plurality of melt pool images generated by imaging the melt pool formed at different positions in an imaging range of the imaging apparatus.

### [Supplementary Note 83]

The processing system according to any one of the Supplementary Notes 21 to 23, 33 to 35, 47 to 48, 57 to 58, 65 to 66, 70 to 71, 73 to 74, and 76 to 81, wherein
the control apparatus controls the deflection optical system to perform a wobbling operation for periodically moving the energy beam.

### [Supplementary Note 84]

The processing system according to any one of the Supplementary Notes 21 to 23, 33 to 35, 47 to 48, 57 to 58, 65 to 66, 70 to 71, 73 to 74, 76 to 81, and 83, wherein
the deflection optical system includes a Galvano mirror.

### [Supplementary Note 85]

The processing system according to any one of the Supplementary Notes 1 to 31, 46 to 54, 69 to 71, and 82, wherein
the melt pool image information includes information related to the number of pixels of an image indicating the melt pool.

### [Supplementary Note 86]

The processing system according to any one of the Supplementary Notes 1 to 31 and 43, wherein
the plurality of melt pool images are images generated by imaging a plurality of melt pools whose positions are different from each other.

### [Supplementary Note 87]

The processing system according to any one of the Supplementary Notes 55 to 62, wherein
the plurality of images are images generated by imaging a plurality of melt pools whose positions are different from each other.

### [Supplementary Note 88]

The processing system according to any one of the Supplementary Notes 1 to 87, wherein
the melt pool is movable in a plane intersecting an irradiation direction of the energy beam.

### [Supplementary Note 89]

The processing system according to any one of the Supplementary Notes 1 to 88, wherein
the melt pool is allowed to move back and forth on an axis intersecting an irradiation direction of the energy beam.

### [Supplementary Note 90]

The processing system according to any one of the Supplementary Notes 1 to 19 and 32 to 54, wherein
the processing condition is a condition related to a movement of an irradiation position of the energy beam.

### [Supplementary Note 91]

The processing system according to any one of the Supplementary Notes 1 to 19, 32 to 54, and 90, wherein
the processing condition includes at least one of a speed, a cycle, and a stroke of a movement of an irradiation position of the energy beam.

### [Supplementary Note 92]

A processing system including:
a processing apparatus that is configured to process an object by irradiating the object with an energy beam to form a melt pool on the object and supplying a build material to the melt pool;
an imaging apparatus that is configured to generate a melt pool image by imaging the melt pool; and
a control apparatus that is configured to generate melt pool image information based on the melt pool image generated by the imaging apparatus, and control the processing apparatus based on the melt pool image information so that a size of a melt pool area is a target size,
wherein
the melt pool image information is generated based on the melt pool image generated by a multiple exposure by the imaging apparatus, and
the control apparatus changes, based on a processing condition of the object by the processing apparatus, a condition of the multiple exposure by the imaging apparatus.

### [Supplementary Note 93]

A processing system including:
a processing apparatus that includes: a processing head that is configured to process an object by irradiating the object with an energy beam to form a melt pool on the object and supplying a build material to the melt pool; and a position change apparatus that is configured to change an irradiation position of the energy beam relative to the processing head;
an imaging apparatus that is attached to the processing head and that is configured to generate a melt pool image by imaging the melt pool formed by the processing apparatus; and
a control apparatus that is configured to generate melt pool image information based on the melt pool image generated by the imaging apparatus, and control the processing apparatus based on the melt pool image information so that a size of the melt pool area is a target size,
wherein
the melt pool image information is generated based on a multiple exposure by the imaging apparatus.

### [Supplementary Note 94]

A processing system including:
a processing apparatus that is configured to irradiate an object with an energy beam to form a melt pool on the object;
an imaging apparatus that is configured to generate a melt pool image by imaging the melt pool; and
a control apparatus that is configured to generate melt pool image information based on the melt pool image generated by the imaging apparatus, and control the processing apparatus based on the melt pool image information,
wherein
the melt pool image information is generated based on a plurality of melt pool images imaged by the imaging apparatus, and
the control apparatus changes, based on a processing condition of the object by the processing apparatus, an imaging condition for the imaging apparatus imaging the melt pool.

### [Supplementary Note 95]

A processing system including:
a processing apparatus that includes: a processing head that is configured to process an object by irradiating the object with an energy beam to form a melt pool on the object; and a position change apparatus that is configured to change an irradiation position of the energy beam relative to the processing head;
an imaging apparatus that is attached to the processing head and that is configured to generate a melt pool image by imaging the melt pool formed by the processing apparatus; and
a control apparatus that is configured to generate melt pool image information based on the melt pool image generated by the imaging apparatus, and control the processing apparatus based on the melt pool image information.

### [Supplementary Note 96]

A processing system including:
a processing apparatus that is configured to process an object by irradiating the object with an energy beam to form a melt pool on the object;
an imaging apparatus that is configured to generate a melt pool image by imaging the melt pool; and
a control apparatus that is configured to control the processing apparatus based on a compared result of a signal value of the melt pool image and a predetermined threshold value,
wherein
the control apparatus changes the predetermined threshold value based on a processing condition of the object by the processing apparatus.

### [Supplementary Note 97]

A processing system including:
a processing apparatus that is configured to process an object by irradiating the object with an energy beam to form a melt pool on the object;
an imaging apparatus that is configured to generate a melt pool image by imaging the melt pool; and
a control apparatus that is configured to generate melt pool image information based on the melt pool image generated by the imaging apparatus, and control the processing apparatus based on the melt pool image information so that a size of the melt pool area is a target size,
wherein
the control apparatus changes the target size based on a processing condition of the object by the processing apparatus.

### [Supplementary Note 98]

A processing system including:
a processing apparatus that is configured to process an object by irradiating the object with an energy beam to form a melt pool on the object;
an imaging apparatus that is configured to generate a plurality of images by imaging an area including the melt pool a plurality of number of times; and
a control apparatus that is configured to detect at least one of a melt pool area in the image and a non-melt pool area in which at least one of emitted light and reflected light other than the melt pool is captured based on an added result of signal values of the plurality of images by a unit of pixel.

### [Supplementary Note 99]

A processing system including:
a processing apparatus that is configured to process an object by irradiating the object with an energy beam to form a melt pool on the object;
an imaging apparatus that is configured to perform a multiple exposure of an area including the melt pool; and
a control apparatus that is configured to detect at least one of a melt pool area in an image generated by the multiple exposure and a non-melt pool area in which at least one of emitted light and reflected light other than the melt pool is captured based on a compared result of a result of the multiple exposure by the imaging apparatus and a predetermined threshold value.

### [Supplementary Note 100]

A processing system including:
a processing apparatus that is configured to process an object by irradiating the object with an energy beam to form a melt pool on the object;
an imaging apparatus that is configured to generate a melt pool image by imaging the melt pool;
a control apparatus that is configured to generate melt pool image information based on the melt pool image generated by the imaging apparatus, and control the processing apparatus based on the melt pool image information; and
a recording apparatus that is configured to record information related to a target size of the melt pool in association with a wobble condition of the energy beam,
wherein
the control apparatus controls the processing apparatus based on the target size of the melt pool acquired from the recording apparatus.

### [Supplementary Note 101]

A processing system including:
a processing apparatus that is configured to process an object by irradiating the object with an energy beam to form a melt pool on the object;
an imaging apparatus that is configured to generate a melt pool image by imaging the melt pool; and
a control apparatus,
wherein
the control apparatus is configured to acquire, based on the melt pool image generated by the imaging apparatus, shape information related to the melt pool that is successively formed at different positions by the energy beam, and controls the processing apparatus based on the shape information.

### [Supplementary Note 102]

A processing system including:
a processing apparatus that is configured to process an object by irradiating the object with an energy beam to form a melt pool on the object;
an imaging apparatus that is configured to generate a melt pool image by imaging the melt pool; and
a control apparatus,
wherein
the control apparatus is configured to acquire, based on the melt pool image generated by the imaging apparatus, center position information of the melt pool that is successively formed at different positions by the energy beam, and controls the processing apparatus based on the center position information.

### [Supplementary Note 103]

A processing system including:
a processing apparatus that is configured to process an object by irradiating the object with an energy beam to form a melt pool on the object;
an imaging apparatus that is configured to generate a melt pool image by imaging the melt pool; and
a control apparatus that is configured to generate melt pool image information based on the melt pool image generated by the imaging apparatus, and control the processing apparatus based on the melt pool image information,
wherein
the melt pool image information is generated based on the melt pool image generated by a multiple exposure by the imaging apparatus, and
the control apparatus changes, based on a processing condition of the object by the processing apparatus, a condition of the multiple exposure by the imaging apparatus.

### [Supplementary Note 104]

A processing system including:
a processing apparatus that includes: a processing head that is configured to process an object by irradiating the object with an energy beam to form a melt pool on the object; and a position change apparatus that is configured to change an irradiation position of the energy beam relative to the processing head;
an imaging apparatus that is attached to the processing head and that is configured to generate a melt pool image by imaging the melt pool formed by the processing apparatus; and
a control apparatus that is configured to generate melt pool image information based on the melt pool image generated by the imaging apparatus, and control the processing apparatus based on the melt pool image information,
wherein
the melt pool image information is generated based on a multiple exposure by the imaging apparatus.

### [Supplementary Note 105]

A processing system including:
a processing apparatus that is configured to irradiate an object with an energy beam to form a melt pool on the object, and thereby form a build object on the object along a target trajectory;
an imaging apparatus that is configured to generate a melt pool image by imaging the melt pool; and
a control apparatus that is configured to control the processing apparatus based on the melt pool image generated by the imaging apparatus,
wherein
forming the build object on the object along the target trajectory includes moving an irradiation position of the energy beam on a surface of the object along a scanning direction intersecting the target trajectory,
the control apparatus controls the processing apparatus based on a plurality of melt pool images imaged by the imaging apparatus.

### [Supplementary Note 106]

The processing system according to the Supplementary Note 105, wherein
the movement of the irradiation position along the scanning direction includes a periodical movement.

### [Supplementary Note 107]

The processing system according to the Supplementary Note 105 or 106, wherein
forming the build object on the object along the target trajectory includes periodically moving the irradiation position of the energy beam on the surface of the object along the target trajectory.

### [Supplementary Note 108]

A processing system including:
a processing apparatus that is configured to irradiate an object with an energy beam to form a melt pool on the object; and
an imaging apparatus that is configured to generate a melt pool image by imaging the melt pool,
wherein
the imaging apparatus is configured to image the melt pool existing on a first position at a first time and the melt pool existing on a second position different from the first position at a second time different from the first time.

### [Supplementary Note 109]

A processing method including:
processing an object by irradiating the object with an energy beam to form a melt pool on the object and supplying a build material to the melt pool by using a processing apparatus;
generating a melt pool image by imaging the melt pool;
generating melt pool image information based on the melt pool image;
controlling the processing apparatus based on the melt pool image information so that a size of a melt pool area is a target size; and
changing, based on a processing condition of the object, an imaging condition for imaging the melt pool,
wherein
the generating the melt pool image information includes generating the melt pool image information based on a plurality of melt pool images.

### [Supplementary Note 110]

A processing method including:
processing an object by irradiating the object with an energy beam to form a melt pool on the object and supplying a build material to the melt pool by using a processing apparatus including a processing head;
changing an irradiation position of the energy beam relative to the processing head;
generating a melt pool image by using an imaging apparatus, which is attached to the processing head, to image the melt pool;
generating melt pool image information based on the melt pool image; and
controlling the processing apparatus based on the melt pool image information so that a size of a melt pool area is a target size,
wherein
the generating the melt pool image information includes generating the melt pool image information based on a plurality of melt pool images.

### [Supplementary Note 111]

A processing method including:
processing an object by irradiating the object with an energy beam to form a melt pool on the object and supplying a build material to the melt pool by using a processing apparatus;
generating a melt pool image by imaging the melt pool;
calculating a size of a melt pool area in the melt pool image based on a compared result of a signal value of the melt pool image and a predetermined threshold value;
controlling the processing apparatus so that the size of the melt pool area is a target size; and
changing the predetermined threshold value based on a processing condition of the object.

### [Supplementary Note 112]

A processing method including:
processing an object by irradiating the object with an energy beam to form a melt pool on the object and supplying a build material to the melt pool by using a processing apparatus;
generating a melt pool image by imaging the melt pool;
generating melt pool image information based on the melt pool image;
controlling the processing apparatus based on the melt pool image information so that a size of a melt pool area is a target size; and
changing the target size based on a processing condition of the object.

### [Supplementary Note 113]

A processing method including:
processing an object by irradiating the object with an energy beam to form a melt pool on the object and supplying a build material to the melt pool;
generating a plurality of images by imaging an area including the melt pool a plurality of number of times; and
adding signal values of the plurality of images by a unit of pixel, and detecting at least one of a melt pool area in the image and a non-melt pool area in which at least one of emitted light and reflected light other than the melt pool is captured based on a compared result of a predetermined threshold value and an added result by a unit of pixel.

### [Supplementary Note 114]

A processing method including:
processing an object by irradiating the object with an energy beam to form a melt pool on the object and supplying a build material to the melt pool;
performing a multiple exposure of an area including the melt pool; and
detecting at least one of a melt pool area in an image generated by the multiple exposure and a non-melt pool area in which at least one of emitted light and reflected light other than the melt pool is captured by comparing a result of the multiple exposure and a predetermined threshold value.

### [Supplementary Note 115]

A processing method including:
processing an object by irradiating the object with an energy beam to form a melt pool on the object and supplying a build material to the melt pool by using a processing apparatus;
generating a melt pool image by imaging the melt pool;
generating melt pool image information based on the melt pool image;
controlling the processing apparatus based on the melt pool image information so that a size of a melt pool area is a target size; and
acquiring information related to the target size of the melt pool from a recording apparatus that is configured to record the information related to the target size of the melt pool in association with a wobble condition of the energy beam,
wherein
the controlling the processing apparatus includes controlling the processing apparatus based on the target size of the melt pool acquired from the recording apparatus.

### [Supplementary Note 116]

A processing method including:
processing an object by irradiating the object with an energy beam to form a melt pool on the object and supplying a build material to the melt pool;
generating a melt pool image by imaging the melt pool;
acquiring, based on the melt pool image, shape information related to the melt pool that is sequentially formed at different positions by the energy beam; and
controlling the processing apparatus based on the shape information.

### [Supplementary Note 117]

A processing method including:
processing an object by irradiating the object with an energy beam to form a melt pool on the object and supplying a build material to the melt pool;
generating a melt pool image by imaging the melt pool;
acquiring, based on the melt pool image, center position information of the melt pool that is sequentially formed at different positions by the energy beam; and
controlling the processing apparatus based on the center position information.

### [Supplementary Note 118]

A processing method including:
processing an object by irradiating the object with an energy beam to form a melt pool on the object and supplying a build material to the melt pool by using a processing apparatus;
generating a melt pool image by performing a multiple exposure to image the melt pool;
generate melt pool image information based on the melt pool image generated by the imaging apparatus;
controlling the processing apparatus based on the melt pool image information so that a size of a melt pool area is a target size; and
changing, based on a processing condition of the object, a condition of the multiple exposure.

### [Supplementary Note 119]

A processing method including:
processing an object by irradiating the object with an energy beam to form a melt pool on the object and supplying a build material to the melt pool by using a processing apparatus including a processing head;
changing an irradiation position of the energy beam relative to the processing head;
generating a melt pool image by using an imaging apparatus, which is attached to the processing head, to image the melt pool;
generating melt pool image information based on the melt pool image; and
controlling the processing apparatus based on the melt pool image information so that a size of a melt pool area is a target size,
wherein
the generating the melt pool image information includes generating the melt pool image information based on a multiple exposure by the imaging apparatus.

### [Supplementary Note 120]

A processing method including:
irradiating the object with an energy beam to form a melt pool on the object by using a processing apparatus;
generating a melt pool image by imaging the melt pool;
generating melt pool image information based on the melt pool image;
controlling the processing apparatus based on the melt pool image information; and
changing, based on a processing condition of the object, an imaging condition for imaging the melt pool,
wherein
the generating the melt pool image information includes generating the melt pool image information based on a plurality of melt pool images.

### [Supplementary Note 121]

A processing method including:
processing an object by irradiating the object with an energy beam to form a melt pool on the object by using a processing apparatus including a processing head;
changing an irradiation position of the energy beam relative to the processing head;
generating a melt pool image by using an imaging apparatus, which is attached to the processing head, to image the melt pool;
generating melt pool image information based on the melt pool image generated by the imaging apparatus; and
controlling the processing apparatus based on the melt pool image information.

### [Supplementary Note 122]

A processing method including:
processing an object by irradiating the object with an energy beam to form a melt pool on the object by using a processing apparatus;
generating a melt pool image by imaging the melt pool;
controlling the processing apparatus based on a compared result of a signal value of the melt pool image and a predetermined threshold value; and
changing the predetermined threshold value based on a processing condition of the object.

### [Supplementary Note 123]

A processing method including:
processing an object by irradiating the object with an energy beam to form a melt pool on the object by using a processing apparatus;
generating a melt pool image by imaging the melt pool;
generating melt pool image information based on the melt pool image;
controlling the processing apparatus based on the melt pool image information so that a size of a melt pool area is a target size; and
changing the target size based on a processing condition of the object.

### [Supplementary Note 124]

A processing method including:
processing an object by irradiating the object with an energy beam to form a melt pool on the object;
generating a plurality of images by imaging an area including the melt pool a plurality of number of times; and
detecting at least one of a melt pool area in the image and a non-melt pool area in which at least one of emitted light and reflected light other than the melt pool is captured based on an added result of signal values of the plurality of images by a unit of pixel.

### [Supplementary Note 125]

A processing method including:
processing an object by irradiating the object with an energy beam to form a melt pool on the object;
performing a multiple exposure of an area including the melt pool; and
detecting at least one of a melt pool area in an image generated by the multiple exposure and a non-melt pool area in which at least one of emitted light and reflected light other than the melt pool is captured based on a compared result of a result of the multiple exposure and a predetermined threshold value.

### [Supplementary Note 126]

A processing method including:
processing an object by irradiating the object with an energy beam to form a melt pool on the object by using a processing apparatus;
generating a melt pool image by imaging the melt pool;
generating melt pool image information based on the melt pool image;
controlling the processing apparatus based on the melt pool image information; and
acquiring information related to a target size of the melt pool from a recording apparatus that is configured to record the information related to the target size of the melt pool in association with a wobble condition of the energy beam,
wherein
the controlling the processing apparatus includes controlling the processing apparatus based on the target size of the melt pool acquired from the recording apparatus.

### [Supplementary Note 127]

A processing method including:
processing an object by irradiating the object with an energy beam to form a melt pool on the object;
generating a melt pool image by imaging the melt pool;
acquiring, based on the melt pool image, shape information related to the melt pool that is sequentially formed at different positions by the energy beam; and
controlling the processing apparatus based on the shape information.

### [Supplementary Note 128]

A processing method including:
processing an object by irradiating the object with an energy beam to form a melt pool on the object;
generating a melt pool image by imaging the melt pool;
acquiring, based on the melt pool image, center position information of the melt pool that is sequentially formed at different positions by the energy beam; and
controlling the processing apparatus based on the center position information.

### [Supplementary Note 129]

A processing method including:
processing an object by irradiating the object with an energy beam to form a melt pool on the object by using a processing apparatus;
generating a melt pool image by performing a multiple exposure to image the melt pool;
generate melt pool image information based on the melt pool image;
controlling the processing apparatus based on the melt pool image information; and
changing, based on a processing condition of the object, a condition of the multiple exposure.

### [Supplementary Note 130]

A processing method including:
processing an object by irradiating the object with an energy beam to form a melt pool on the object by using a processing apparatus including a processing head;
changing an irradiation position of the energy beam relative to the processing head;
generating a melt pool image by using an imaging apparatus, which is attached to the processing head, to image the melt pool;
generating melt pool image information based on the melt pool image; and
controlling the processing apparatus based on the melt pool image information,
wherein
the generating the melt pool image information includes generating the melt pool image information based on a multiple exposure by the imaging apparatus.

### [Supplementary Note 131]

A processing method including:
irradiating an object with an energy beam to form a melt pool on the object, and thereby forming a build object on the object along a target trajectory by using a processing apparatus;
generating a plurality of melt pool images by imaging the melt pool; and
controlling the processing apparatus based on the plurality of melt pool images,
wherein
forming the build object on the object along the target trajectory includes moving an irradiation position of the energy beam on a surface of the object along a scanning direction intersecting the target trajectory.

### [Supplementary Note 132]

A processing method includes:
irradiating an object with an energy beam to form a melt pool on the object; and
generating a melt pool image by imaging the melt pool,
wherein
the imaging the melt pool includes: imaging the melt pool existing on a first position at a first time; and imaging the melt pool existing on a second position different from the first position at a second time different from the first time.

At least a part of the feature of each example embodiment described above is allowed to be combined with at least another part of the feature of each example embodiment described above. A part of the feature of each example embodiment described above may not be used. Moreover, the disclosures of all publications and United States patents that are cited in each example embodiment described above are incorporated in the disclosures of the present application by reference if it is legally permitted.

The present invention is allowed to be changed, if desired, without departing from the essence or spirit of the invention which can be read from the claims and the entire specification, and a processing system and a processing method, which involve such changes, are also intended to be within the technical scope of the present invention.

### Description of Reference Codes

- SYS: processing system
- 2: processing unit
- 21: processing head
- 211: irradiation optical system
- 2146, 2156: Galvano mirror
- 2162: fθ lens
- 212: material nozzle
- 22: head driving system
- 3: stage unit
- 31: stage
- 32: stage driving system
- 8: imaging unit
- W: workpiece
- MS: build surface
- EL: processing light
- EA: target irradiation area
- BSA: processing unit area
- MP: melt pool
- MPA: melt pool area
- NPA: non-melt pool area
- MPI: melt pool image information
- IMG: melt pool image
- IMG_C: addition image

## Claims

1. A processing system comprising:
a processing apparatus that is configured to process an object by irradiating the object with an energy beam to form a melt pool on the object and supplying a build material to the melt pool;
an imaging apparatus that is configured to generate a melt pool image by imaging the melt pool; and
a control apparatus that is configured to generate melt pool image information based on the melt pool image generated by the imaging apparatus, and control the processing apparatus based on the melt pool image information so that a size of a melt pool area is a target size,
wherein
the melt pool image information is generated based on a plurality of melt pool images imaged by the imaging apparatus, and
the control apparatus changes, based on a processing condition of the object by the processing apparatus, an imaging condition for the imaging apparatus imaging the melt pool.

2. The processing system according to claim 1, wherein
the processing apparatus includes: an irradiation optical system that emits the energy beam; and a position change apparatus that is configured to change a positional relationship between the object and the irradiation optical system, and
the irradiation optical system includes a deflection optical system that is configured to move, on a surface of the object, an irradiation position of the energy beam on the surface of the object by deflecting the energy beam.

3. The processing system according to claim 2, wherein
the control apparatus controls the position change apparatus based on path information so that a build object is formed on the object along a target trajectory and controls the deflection optical system so that the irradiation position of the energy beam periodically moves on the surface of the object along a scanning direction intersecting the target trajectory.

4. The processing system according to claim 2 or 3, wherein
the plurality of melt pool images includes: an image indicating the melt pool formed at a first position; and an image indicating the melt pool formed at a second position different from the first position by the deflection optical system.

5. The processing system according to any one of claims 2 to 4, wherein
the control apparatus changes the imaging condition based on a control signal for controlling the deflection optical system.

6. The processing system according to any one of claims 2 to 5, wherein
the control apparatus performs at least one of an operation for changing an imaging cycle for imaging the melt pool based on a speed of a movement of the irradiation position, an operation for changing the imaging cycle for imaging the melt pool based on a cycle of a deflection of the energy beam, an operation for changing the imaging cycle for imaging the melt pool based on a speed of the deflection of the energy beam, an operation for changing an imaging rate for imaging the melt pool based on the speed of the movement of the irradiation position, an operation for changing the imaging rate for imaging the melt pool based on the cycle of the deflection of the energy beam, and an operation for changing the imaging rage for imaging the melt pool based on the speed of the deflection of the energy beam.

7. The processing system according to any one of claims 2 to 6, wherein
the control apparatus performs at least one of an operation for making an imaging cycle for imaging the melt pool be shorter as a speed of a movement of the irradiation position is faster, an operation for making the imaging cycle for imaging the melt pool be shorter as a cycle of a deflection of the energy beam is shorter, an operation for making the imaging cycle for imaging the melt pool be shorter as a speed of the deflection of the energy beam is faster, an operation for making an imaging rate for imaging the melt pool be higher as the speed of the movement of the irradiation position is faster, an operation for making imaging rate for imaging the melt pool be higher as the cycle of the deflection of the energy beam is shorter, and an operation for making imaging rate for imaging the melt pool be higher as the speed of the deflection of the energy beam is faster.

8. The processing system according to any one of claims 2 to 6, wherein
the melt pool image information is generated by adding the plurality of melt pool images imaged by the imaging apparatus,
the control apparatus performs at least one of an operation for changing the number of the added melt pool images based on a speed of a movement of the irradiation position, an operation for changing the number of the added melt pool images based on a cycle of a deflection of the energy beam, and an operation for changing the number of the added melt pool images based on a speed of the deflection of the energy beam.

9. The processing system according to any one of claims 2 to 8, wherein
the melt pool image information is generated by adding the plurality of melt pool images imaged by the imaging apparatus,
the control apparatus performs at least one of an operation for making the number of the added melt pool images be larger as a speed of a movement of the irradiation position is faster, an operation for making the number of the added melt pool images be larger as a cycle of a deflection of the energy beam is shorter, and an operation for making the number of the added melt pool images be larger as a speed of the deflection of the energy beam is faster.

10. The processing system according to any one of claims 1 to 9, wherein
the imaging condition includes a condition related to a timing at which the imaging apparatus images the melt pool.

11. The processing system according to any one of claims 1 to 10, wherein
the imaging condition includes a condition related to an exposure time of the imaging apparatus for imaging the melt pool.

12. The processing system according to any one of claims 1 to 11, wherein
the imaging condition includes a condition related to an imaging cycle or an imaging rate at which the imaging apparatus images the melt pool.

13. The processing system according to any one of claims 1 to 12, wherein
the control apparatus controls the imaging apparatus so that an exposure time for imaging the melt pool is shorter as an intensity or a density of the energy beam is higher.

14. The processing system according to claim 13, wherein
the melt pool image information is generated by adding the plurality of melt pool images imaged by the imaging apparatus, and
the control apparatus makes the number of the added melt pool images be larger as the exposure time is shorter.

15. The processing system according to any one of claims 2 to 9, wherein
the energy beam is a first energy beam,
the deflection optical system is a first deflection optical system, and
the processing system further comprises a second deflection optical system that is configured to move, on the surface of the object, an irradiation position of a second energy beam on the surface of the object by deflecting the second energy beam that is different from the first energy beam.

16. The processing system according to claim 15, wherein
the processing condition includes at least one of a speed, a cycle, and a stroke of a movement of the irradiation position of the first energy beam and at least one of a speed, a cycle, and a stroke of a movement of the irradiation position of the second energy beam.

17. The processing system according to any one of claims 1 to 16, wherein
the processing condition includes a beam condition related to the energy beam.

18. The processing system according to any one of claims 1 to 17, wherein
the processing apparatus includes an irradiation position movement apparatus that is configured to move an irradiation position of the energy beam on the object, and
the processing condition includes a movement aspect condition related to a movement aspect of the irradiation position.

19. The processing system according to any one of claims 1 to 18, wherein
the control apparatus changes the imaging condition so that the imaging apparatus images the melt pool based on a first imaging condition in a case where the processing apparatus processes the object based on a first processing condition and the imaging apparatus images the melt pool based on a second imaging condition that is different from the first imaging condition in a case where the processing apparatus processes the object based on a second processing condition that is different from the first processing condition.

20. A processing system comprising:
a processing apparatus that includes: a processing head that is configured to process an object by irradiating the object with an energy beam to form a melt pool on the object and supplying a build material to the melt pool; and a position change apparatus that is configured to change an irradiation position of the energy beam relative to the processing head;
an imaging apparatus that is attached to the processing head and that is configured to generate a melt pool image by imaging the melt pool formed by the processing apparatus; and
a control apparatus that is configured to generate melt pool image information based on the melt pool image generated by the imaging apparatus, and control the processing apparatus based on the melt pool image information so that a size of the melt pool area is a target size,
wherein
the melt pool image information is generated based on a plurality of melt pool images imaged by the imaging apparatus.

21. The processing system according to claim 20, wherein
the position change apparatus is a first position change apparatus,
the processing apparatus further includes a second position change apparatus that is configured to change a positional relationship between the object and the processing head, and
the first position change apparatus includes a deflection optical system that is configured to move, on a surface of the object, the irradiation position of the energy beam on the surface of the object by deflecting the energy beam.

22. The processing system according to claim 21, wherein
the control apparatus controls the second position change apparatus based on path information so that a build object is formed on the object along a target trajectory and controls the deflection optical system so that the irradiation position of the energy beam periodically moves on the surface of the object along a scanning direction intersecting the target trajectory.

23. The processing system according to claim 21 or 22, wherein
the plurality of melt pool images includes: an image indicating the melt pool formed at a first position; and an image indicating the melt pool formed at a second position different from the first position by the deflection optical system.

24. The processing system according to any one of claims 21 to 23, wherein
the control apparatus performs at least one of an operation for making an imaging cycle for imaging the melt pool be shorter as a speed of a movement of the irradiation position is faster, an operation for making the imaging cycle for imaging the melt pool be shorter as a cycle of a deflection of the energy beam is shorter, an operation for making the imaging cycle for imaging the melt pool be shorter as a speed of the deflection of the energy beam is faster, an operation for making an imaging rate for imaging the melt pool be higher as the speed of the movement of the irradiation position is faster, an operation for making imaging rate for imaging the melt pool be higher as the cycle of the deflection of the energy beam is shorter, and an operation for making imaging rate for imaging the melt pool be higher as the speed of the deflection of the energy beam is faster.

25. The processing system according to any one of claims 21 to 24, wherein
the melt pool image information is generated by adding the plurality of melt pool images imaged by the imaging apparatus, and
the control apparatus performs at least one of an operation for making the number of the added melt pool images be larger as a speed of a movement of the irradiation position is faster, an operation for making the number of the added melt pool images be larger as a cycle of a deflection of the energy beam is shorter, and an operation for making the number of the added melt pool images be larger as a speed of the deflection of the energy beam is faster.

26. The processing system according to any one of claims 20 to 25, wherein
the control apparatus changes an imaging condition for the imaging apparatus imaging the melt pool, and
the imaging condition includes a condition related to a timing at which the imaging apparatus images the melt pool.

27. The processing system according to any one of claims 20 to 26, wherein
the control apparatus changes an imaging condition for the imaging apparatus imaging the melt pool, and
the imaging condition includes a condition related to an exposure time of the imaging apparatus for imaging the melt pool.

28. The processing system according to any one of claims 20 to 27, wherein
the control apparatus changes an imaging condition for the imaging apparatus imaging the melt pool, and
the imaging condition includes a condition related to an imaging cycle or an imaging rate at which the imaging apparatus images the melt pool.

29. The processing system according to any one of claims 20 to 28, wherein
the control apparatus controls the imaging apparatus so that an exposure time for imaging the melt pool is shorter as an intensity or a density of the energy beam is higher.

30. The processing system according to claim 29, wherein
the melt pool image information is generated by adding the plurality of melt pool images imaged by the imaging apparatus, and
the control apparatus makes the number of the added melt pool images be larger as the exposure time is shorter.

31. The processing system according to any one of claims 20 to 30, wherein
the control apparatus changes an imaging condition for the imaging apparatus imaging the melt pool so that the imaging apparatus images the melt pool based on a first imaging condition in a case where the processing apparatus processes the object based on a first processing condition and the imaging apparatus images the melt pool based on a second imaging condition that is different from the first imaging condition in a case where the processing apparatus processes the object based on a second processing condition that is different from the first processing condition.

32. A processing system comprising:
a processing apparatus that is configured to process an object by irradiating the object with an energy beam to form a melt pool on the object and supplying a build material to the melt pool;
an imaging apparatus that is configured to generate a melt pool image by imaging the melt pool; and
a control apparatus that is configured to calculate a size of a melt pool area in the melt pool image based on a compared result of a signal value of the melt pool image and a predetermined threshold value, and control the processing apparatus so that the size of the melt pool area is a target size,
wherein
the control apparatus changes the predetermined threshold value based on a processing condition of the object by the processing apparatus.

33. The processing system according to claim 32, wherein
the processing apparatus includes: an irradiation optical system that emits the energy beam; and a position change apparatus that is configured to change a positional relationship between the object and the irradiation optical system, and
the irradiation optical system includes a deflection optical system that is configured to move, on a surface of the object, an irradiation position of the energy beam on the surface of the object by deflecting the energy beam.

34. The processing system according to claim 33, wherein
the control apparatus controls the position change apparatus based on path information so that a build object is formed on the object along a target trajectory and controls the deflection optical system so that the irradiation position of the energy beam periodically moves on the surface of the object along a scanning direction intersecting the target trajectory.

35. The processing system according to claim 33 or 34, wherein
the imaging apparatus generates a plurality of melt pool images,
the control apparatus calculates the size of the melt pool area in the melt pool image based on a compared result of an added result of the plurality of melt pool images and the predetermined threshold value, and
the plurality of melt pool images includes: an image indicating the melt pool formed at a first position; and an image indicating the melt pool formed at a second position different from the first position by the deflection optical system.

36. The processing system according to any one of claims 33 to 35, wherein
the control apparatus performs at least one of an operation for making the threshold value be smaller as a speed of a movement of the irradiation position is faster, an operation for making the threshold value be smaller as a cycle of a deflection of the energy beam is shorter, and an operation for making the threshold value be smaller as a speed of the deflection of the energy beam is faster.

37. The processing system according to any one of claims 32 to 36, wherein
the control apparatus makes the threshold value be larger as an intensity or a density of the energy beam is higher.

38. The processing system according to any one of claims 32 to 37, wherein
the signal value is a value related to a luminance of the melt pool image.

39. The processing system according to any one of claims 32 to 38, wherein
the size of the melt pool area is calculated based on the number of pixels whose signal value is larger than the predetermined threshold value.

40. The processing system according to any one of claims 32 to 39, wherein
the processing condition includes a beam condition related to the energy beam.

41. The processing system according to any one of claims 33 to 36, wherein
the processing condition includes a movement aspect condition related to a movement aspect of the irradiation position of the energy beam by the deflection optical system.

42. The processing system according to any one of claims 32 to 41, wherein
the control apparatus changes the predetermined threshold value so that the control apparatus calculates the size of the melt pool area by comparing the signal value to a first threshold value, which is the predetermined threshold value, in a case where the processing apparatus processes the object based on a first processing condition and the control apparatus calculates the size of the melt pool area by comparing the signal value to a second threshold value, which is the predetermined threshold value and which is different from the first luminance threshold value, in a case where the processing apparatus processes the object based on a second processing condition that is different from the first processing condition.

43. The processing system according to any one of claims 32 to 42, wherein
the imaging apparatus generates a plurality of melt pool images as time series data by successively imaging the melt pool the plurality of times,
the control apparatus calculates the size of the melt pool area by adding the signal values of successive melt pool images, whose number is a predetermined number, among the plurality of melt pool images by a unit of pixel, and comparing an added result of the signal values and the predetermined threshold value.

44. The processing system according to claim 43, wherein
the control apparatus changes the predetermined number based on the processing condition.

45. The processing system according to claim 44, wherein
the control apparatus changes the predetermined number so that the control apparatus adds the signal values of the melt pool images, whose number is a first number, by a unit of pixel in a case where the processing apparatus processes the object based on a first processing condition and the control apparatus adds the signal values of the melt pool images, whose number is a second number different from the first number, by a unit of pixel in a case where the processing apparatus processes the object based on a second processing condition that is different from the first processing condition.

46. A processing system comprising:
a processing apparatus that is configured to process an object by irradiating the object with an energy beam to form a melt pool on the object and supplying a build material to the melt pool;
an imaging apparatus that is configured to generate a melt pool image by imaging the melt pool; and
a control apparatus that is configured to generate melt pool image information based on the melt pool image generated by the imaging apparatus, and control the processing apparatus based on the melt pool image information so that a size of the melt pool area is a target size,
wherein
the control apparatus changes the target size based on a processing condition of the object by the processing apparatus.

47. The processing system according to claim 46, wherein
the processing apparatus includes: an irradiation optical system that emits the energy beam; and a position change apparatus that is configured to change a positional relationship between the object and the irradiation optical system, and
the irradiation optical system includes a deflection optical system that is configured to move, on a surface of the object, an irradiation position of the energy beam on the surface of the object by deflecting the energy beam.

48. The processing system according to claim 47, wherein
the control apparatus controls the position change apparatus based on path information so that a build object is formed on the object along a target trajectory and controls the deflection optical system so that the irradiation position of the energy beam periodically moves on the surface of the object along a scanning direction intersecting the target trajectory.

49. The processing system according to any one of claims 46 to 48, wherein
the processing condition includes a beam condition related to the energy beam.

50. The processing system according to claim 49, wherein
the control apparatus makes the target size be larger as an intensity or a density of the energy beam is higher.

51. The processing system according to any one of claims 46 to 50, wherein
the processing apparatus includes an irradiation position movement apparatus that is configured to move an irradiation position of the energy beam on the object, and
the processing condition includes a movement aspect condition related to a movement aspect of the irradiation position of the energy beam by the deflection optical system.

52. The processing system according to any one of claims 46 to 51, wherein
the processing condition includes a stroke of a movement of an irradiation position of the energy beam, and
the control apparatus makes the target size be larger as the stroke is larger.

53. The processing system according to any one of claims 46 to 52, wherein
the control apparatus changes the target size so that the control apparatus controls the processing apparatus so that the size of the melt pool area is a first size, which is the target size, in a case where the processing apparatus processes the object based on a first processing condition and the size of the melt pool area is a second size, which is the target size and which is different from the first size, in a case where the processing apparatus processes the object based on a second processing condition that is different from the first processing condition.

54. The processing system according to any one of claims 46 to 53, wherein
the control apparatus changes the target size to build a build object having a desired size on the object by controlling the processing apparatus so that the size of the melt pool area is the target size.

55. A processing system comprising:
a processing apparatus that is configured to process an object by irradiating the object with an energy beam to form a melt pool on the object and supplying a build material to the melt pool;
an imaging apparatus that is configured to generate a plurality of images by imaging an area including the melt pool a plurality of number of times; and
a control apparatus that is configured to add signal values of the plurality of images by a unit of pixel, and detect at least one of a melt pool area in the image and a non-melt pool area in which at least one of emitted light and reflected light other than the melt pool is captured based on a compared result of a predetermined threshold value and an added result by a unit of pixel.

56. The processing system according to any one of claim 55, wherein
at least one of: a spatter generated by a molten object, which is molten in the melt pool, scattering; a fume generated by a molten object, which is molten in the melt pool, evaporating; emitting light due to an irradiation of the energy beam onto a film of a surface of the object; and the build material that is molten by the energy beam before reaching the melt pool is captured in the non-melt pool area.

57. The processing system according to claim 55 or 56, wherein
the processing apparatus includes: an irradiation optical system that emits the energy beam; and a position change apparatus that is configured to change a positional relationship between the object and the irradiation optical system, and
the irradiation optical system includes a deflection optical system that is configured to move, on a surface of the object, an irradiation position of the energy beam on the surface of the object by deflecting the energy beam.

58. The processing system according to claim 57, wherein
the control apparatus controls the position change apparatus based on path information so that a build object is formed on the object along a target trajectory and controls the deflection optical system so that the irradiation position of the energy beam periodically moves on the surface of the object along a scanning direction intersecting the target trajectory.

59. The processing system according to any one of claims 54 to 58, wherein
the signal value is a luminance value of the image.

60. The processing system according to any one of claims 54 to 59, wherein
the control apparatus detects, as the melt pool area, an area including a pixel corresponding to the added result of the signal values larger than the threshold value, and detects, as the non-melt pool area, an area including a pixel corresponding to the added result of the signal values smaller than the luminance threshold value.

61. The processing system according to any one of claims 55 to 60, wherein
the imaging apparatus generates the plurality of images as time series data.

62. The processing system according to any one of claims 55 to 61, wherein
the imaging apparatus generates the plurality of images by successively imaging the melt pool.

63. A processing system comprising:
a processing apparatus that is configured to process an object by irradiating the object with an energy beam to form a melt pool on the object and supplying a build material to the melt pool;
an imaging apparatus that is configured to perform a multiple exposure of an area including the melt pool; and
a control apparatus that is configured to detect at least one of a melt pool area in an image generated by the multiple exposure and a non-melt pool area in which at least one of emitted light and reflected light other than the melt pool is captured by comparing a result of the multiple exposure by the imaging apparatus and a predetermined threshold value.

64. The processing system according to claim 63, wherein at least one of: a spatter generated by a molten object, which is molten in the melt pool, scattering; a fume generated by a molten object, which is molten in the melt pool, evaporating; emitting light due to an irradiation of the energy beam onto a film of a surface of the object; and the build material that is molten by the energy beam before reaching the melt pool is captured in the non-melt pool area.

65. The processing system according to claim 63 or 64, wherein
the processing apparatus includes: an irradiation optical system that emits the energy beam; and a position change apparatus that is configured to change a positional relationship between the object and the irradiation optical system, and
the irradiation optical system includes a deflection optical system that is configured to move, on a surface of the object, an irradiation position of the energy beam on the surface of the object by deflecting the energy beam.

66. The processing system according to claim 65, wherein
the control apparatus controls the position change apparatus based on path information so that a build object is formed on the object along a target trajectory and controls the deflection optical system so that the irradiation position of the energy beam periodically moves on the surface of the object along a scanning direction intersecting the target trajectory.

67. The processing system according to any one of claims 63 to 66, wherein
the result of the multiple exposure includes a luminance value of the image.

68. The processing system according to any one of claims 63 to 67, wherein
the control apparatus detects, as the melt pool area, an area including a pixel corresponding to the result of the multiple exposure larger than the threshold value, and detects, as the non-melt pool area, an area including a pixel corresponding to the result of the multiple exposure smaller than the luminance threshold value.

69. A processing system comprising:
a processing apparatus that is configured to process an object by irradiating the object with an energy beam to form a melt pool on the object and supplying a build material to the melt pool;
an imaging apparatus that is configured to generate a melt pool image by imaging the melt pool;
a control apparatus that is configured to generate melt pool image information based on the melt pool image generated by the imaging apparatus, and control the processing apparatus based on the melt pool image information so that a size of a melt pool area is a target size; and
a recording apparatus that is configured to record information related to the target size of the melt pool in association with a wobble condition of the energy beam,
wherein
the control apparatus controls the processing apparatus based on the target size of the melt pool acquired from the recording apparatus.

70. The processing system according to claim 69, wherein
the processing apparatus includes: an irradiation optical system that emits the energy beam; and a position change apparatus that is configured to change a positional relationship between the object and the irradiation optical system, and
the irradiation optical system includes a deflection optical system that is configured to move, on a surface of the object, an irradiation position of the energy beam on the surface of the object by deflecting the energy beam.

71. The processing system according to claim 70, wherein
the control apparatus controls the position change apparatus based on path information so that a build object is formed on the object along a target trajectory and controls the deflection optical system so that the irradiation position of the energy beam periodically moves on the surface of the object along a scanning direction intersecting the target trajectory.

72. A processing system comprising:
a processing apparatus that is configured to process an object by irradiating the object with an energy beam to form a melt pool on the object and supplying a build material to the melt pool;
an imaging apparatus that is configured to generate a melt pool image by imaging the melt pool; and
a control apparatus,
wherein
the control apparatus is configured to acquire, based on the melt pool image generated by the imaging apparatus, shape information related to the melt pool that is successively formed at different positions by the energy beam, and controls the processing apparatus based on the shape information.

73. The processing system according to claim 72, wherein
the processing apparatus includes: an irradiation optical system that emits the energy beam; and a position change apparatus that is configured to change a positional relationship between the object and the irradiation optical system, and
the irradiation optical system includes a deflection optical system that is configured to move, on a surface of the object, an irradiation position of the energy beam on the surface of the object by deflecting the energy beam.

74. The processing system according to claim 73, wherein
the control apparatus controls the position change apparatus based on path information so that a build object is formed on the object along a target trajectory and controls the deflection optical system so that the irradiation position of the energy beam periodically moves on the surface of the object along a scanning direction intersecting the target trajectory.

75. A processing system comprising:
a processing apparatus that is configured to process an object by irradiating the object with an energy beam to form a melt pool on the object and supplying a build material to the melt pool;
an imaging apparatus that is configured to generate a melt pool image by imaging the melt pool; and
a control apparatus,
wherein
the control apparatus is configured to acquire, based on the melt pool image generated by the imaging apparatus, center position information of the melt pool that is successively formed at different positions by the energy beam, and controls the processing apparatus based on the center position information.

76. The processing system according to claim 75, wherein
the processing apparatus includes: an irradiation optical system that emits the energy beam; and a position change apparatus that is configured to change a positional relationship between the object and the irradiation optical system, and
the irradiation optical system includes a deflection optical system that is configured to move, on a surface of the object, an irradiation position of the energy beam on the surface of the object by deflecting the energy beam.

77. The processing system according to claim 76, wherein
the control apparatus controls the position change apparatus based on path information so that a build object is formed on the object along a target trajectory and controls the deflection optical system so that the irradiation position of the energy beam periodically moves on the surface of the object along a scanning direction intersecting the target trajectory.

78. The processing system according to claim 3, 22, 34, 48, 58, 64, 70, 73, or 76, wherein
the path information includes a line width information,
the control apparatus controls the deflection optical system so that the irradiation position of the energy beam periodically moves inside a width of a line that is built based on the line width information.

79. The processing system according to any one of claims 2 to 4, 21 to 23, 33 to 35, 47 to 48, 57 to 58, 65 to 66, 70 to 71, 73 to 74, and 76 to 78, wherein
the control apparatus controls the deflection optical system so as to periodically move the irradiation position of the energy beam inside a target width indicating a width of a build object along a direction intersecting the target trajectory.

80. The processing system according to claim 78, wherein
the imaging apparatus is configured to image the melt pool so that the melt pool, which is formed by the energy beam periodically moving inside the width of the line, is included in an imaging range.

81. The processing system according to claim 79, wherein
the imaging apparatus is configured to image the melt pool so that the melt pool, which is formed by the energy beam periodically moving inside the target width, is included in an imaging range.

82. The processing system according to any one of claims 1 to 31, 46 to 54, and 69 to 71, wherein
the melt pool image information is generated based on a plurality of melt pool images generated by imaging the melt pool formed at different positions in an imaging range of the imaging apparatus.

83. The processing system according to any one of claims 21 to 23, 33 to 35, 47 to 48, 57 to 58, 65 to 66, 70 to 71, 73 to 74, and 76 to 81, wherein
the control apparatus controls the deflection optical system to perform a wobbling operation for periodically moving the energy beam.

84. The processing system according to any one of claims 21 to 23, 33 to 35, 47 to 48, 57 to 58, 65 to 66, 70 to 71, 73 to 74, 76 to 81, and 83, wherein
the deflection optical system includes a Galvano mirror.

85. The processing system according to any one of claims 1 to 31, 46 to 54, 69 to 71, and 82, wherein
the melt pool image information includes information related to the number of pixels of an image indicating the melt pool.

86. The processing system according to any one of claims 1 to 31 and 43, wherein
the plurality of melt pool images are images generated by imaging a plurality of melt pools whose positions are different from each other.

87. The processing system according to any one of claims 55 to 62, wherein
the plurality of images are images generated by imaging a plurality of melt pools whose positions are different from each other.

88. The processing system according to any one of claims 1 to 87, wherein
the melt pool is movable in a plane intersecting an irradiation direction of the energy beam.

89. The processing system according to any one of claims 1 to 88, wherein
the melt pool is allowed to move back and forth on an axis intersecting an irradiation direction of the energy beam.

90. The processing system according to any one of claims 1 to 19 and 32 to 54, wherein
the processing condition is a condition related to a movement of an irradiation position of the energy beam.

91. The processing system according to any one of claims 1 to 19, 32 to 54, and 90, wherein
the processing condition includes at least one of a speed, a cycle, and a stroke of a movement of an irradiation position of the energy beam.

92. A processing system comprising:
a processing apparatus that is configured to process an object by irradiating the object with an energy beam to form a melt pool on the object and supplying a build material to the melt pool;
an imaging apparatus that is configured to generate a melt pool image by imaging the melt pool; and
a control apparatus that is configured to generate melt pool image information based on the melt pool image generated by the imaging apparatus, and control the processing apparatus based on the melt pool image information so that a size of a melt pool area is a target size,
wherein
the melt pool image information is generated based on the melt pool image generated by a multiple exposure by the imaging apparatus, and
the control apparatus changes, based on a processing condition of the object by the processing apparatus, a condition of the multiple exposure by the imaging apparatus.

93. A processing system comprising:
a processing apparatus that includes: a processing head that is configured to process an object by irradiating the object with an energy beam to form a melt pool on the object and supplying a build material to the melt pool; and a position change apparatus that is configured to change an irradiation position of the energy beam relative to the processing head;
an imaging apparatus that is attached to the processing head and that is configured to generate a melt pool image by imaging the melt pool formed by the processing apparatus; and
a control apparatus that is configured to generate melt pool image information based on the melt pool image generated by the imaging apparatus, and control the processing apparatus based on the melt pool image information so that a size of the melt pool area is a target size,
wherein
the melt pool image information is generated based on a multiple exposure by the imaging apparatus.

94. A processing system comprising:
a processing apparatus that is configured to irradiate an object with an energy beam to form a melt pool on the object;
an imaging apparatus that is configured to generate a melt pool image by imaging the melt pool; and
a control apparatus that is configured to generate melt pool image information based on the melt pool image generated by the imaging apparatus, and control the processing apparatus based on the melt pool image information,
wherein
the melt pool image information is generated based on a plurality of melt pool images imaged by the imaging apparatus, and
the control apparatus changes, based on a processing condition of the object by the processing apparatus, an imaging condition for the imaging apparatus imaging the melt pool.

95. A processing system comprising:
a processing apparatus that includes: a processing head that is configured to process an object by irradiating the object with an energy beam to form a melt pool on the object; and a position change apparatus that is configured to change an irradiation position of the energy beam relative to the processing head;
an imaging apparatus that is attached to the processing head and that is configured to generate a melt pool image by imaging the melt pool formed by the processing apparatus; and
a control apparatus that is configured to generate melt pool image information based on the melt pool image generated by the imaging apparatus, and control the processing apparatus based on the melt pool image information.

96. A processing system comprising:
a processing apparatus that is configured to process an object by irradiating the object with an energy beam to form a melt pool on the object;
an imaging apparatus that is configured to generate a melt pool image by imaging the melt pool; and
a control apparatus that is configured to control the processing apparatus based on a compared result of a signal value of the melt pool image and a predetermined threshold value,
wherein
the control apparatus changes the predetermined threshold value based on a processing condition of the object by the processing apparatus.

97. A processing system comprising:
a processing apparatus that is configured to process an object by irradiating the object with an energy beam to form a melt pool on the object;
an imaging apparatus that is configured to generate a melt pool image by imaging the melt pool; and
a control apparatus that is configured to generate melt pool image information based on the melt pool image generated by the imaging apparatus, and control the processing apparatus based on the melt pool image information so that a size of the melt pool area is a target size,
wherein
the control apparatus changes the target size based on a processing condition of the object by the processing apparatus.

98. A processing system comprising:
a processing apparatus that is configured to process an object by irradiating the object with an energy beam to form a melt pool on the object;
an imaging apparatus that is configured to generate a plurality of images by imaging an area including the melt pool a plurality of number of times; and
a control apparatus that is configured to detect at least one of a melt pool area in the image and a non-melt pool area in which at least one of emitted light and reflected light other than the melt pool is captured based on an added result of signal values of the plurality of images by a unit of pixel.

99. A processing system comprising:
a processing apparatus that is configured to process an object by irradiating the object with an energy beam to form a melt pool on the object;
an imaging apparatus that is configured to perform a multiple exposure of an area including the melt pool; and
a control apparatus that is configured to detect at least one of a melt pool area in an image generated by the multiple exposure and a non-melt pool area in which at least one of emitted light and reflected light other than the melt pool is captured based on a compared result of a result of the multiple exposure by the imaging apparatus and a predetermined threshold value.

100. A processing system comprising:
a processing apparatus that is configured to process an object by irradiating the object with an energy beam to form a melt pool on the object;
an imaging apparatus that is configured to generate a melt pool image by imaging the melt pool;
a control apparatus that is configured to generate melt pool image information based on the melt pool image generated by the imaging apparatus, and control the processing apparatus based on the melt pool image information; and
a recording apparatus that is configured to record information related to a target size of the melt pool in association with a wobble condition of the energy beam,
wherein
the control apparatus controls the processing apparatus based on the target size of the melt pool acquired from the recording apparatus.

101. A processing system comprising:
a processing apparatus that is configured to process an object by irradiating the object with an energy beam to form a melt pool on the object;
an imaging apparatus that is configured to generate a melt pool image by imaging the melt pool; and
a control apparatus,
wherein
the control apparatus is configured to acquire, based on the melt pool image generated by the imaging apparatus, shape information related to the melt pool that is successively formed at different positions by the energy beam, and controls the processing apparatus based on the shape information.

102. A processing system comprising:
a processing apparatus that is configured to process an object by irradiating the object with an energy beam to form a melt pool on the object;
an imaging apparatus that is configured to generate a melt pool image by imaging the melt pool; and
a control apparatus,
wherein
the control apparatus is configured to acquire, based on the melt pool image generated by the imaging apparatus, center position information of the melt pool that is successively formed at different positions by the energy beam, and controls the processing apparatus based on the center position information.

103. A processing system comprising:
a processing apparatus that is configured to process an object by irradiating the object with an energy beam to form a melt pool on the object;
an imaging apparatus that is configured to generate a melt pool image by imaging the melt pool; and
a control apparatus that is configured to generate melt pool image information based on the melt pool image generated by the imaging apparatus, and control the processing apparatus based on the melt pool image information,
wherein
the melt pool image information is generated based on the melt pool image generated by a multiple exposure by the imaging apparatus, and
the control apparatus changes, based on a processing condition of the object by the processing apparatus, a condition of the multiple exposure by the imaging apparatus.

104. A processing system comprising:
a processing apparatus that includes: a processing head that is configured to process an object by irradiating the object with an energy beam to form a melt pool on the object; and a position change apparatus that is configured to change an irradiation position of the energy beam relative to the processing head;
an imaging apparatus that is attached to the processing head and that is configured to generate a melt pool image by imaging the melt pool formed by the processing apparatus; and
a control apparatus that is configured to generate melt pool image information based on the melt pool image generated by the imaging apparatus, and control the processing apparatus based on the melt pool image information,
wherein
the melt pool image information is generated based on a multiple exposure by the imaging apparatus.

105. A processing system comprising:
a processing apparatus that is configured to irradiate an object with an energy beam to form a melt pool on the object, and thereby form a build object on the object along a target trajectory;
an imaging apparatus that is configured to generate a melt pool image by imaging the melt pool; and
a control apparatus that is configured to control the processing apparatus based on the melt pool image generated by the imaging apparatus,
wherein
forming the build object on the object along the target trajectory includes moving an irradiation position of the energy beam on a surface of the object along a scanning direction intersecting the target trajectory,
the control apparatus controls the processing apparatus based on a plurality of melt pool images imaged by the imaging apparatus.

106. The processing system according to claim 105, wherein
the movement of the irradiation position along the scanning direction includes a periodical movement.

107. The processing system according to claim 105 or 106, wherein
forming the build object on the object along the target trajectory includes periodically moving the irradiation position of the energy beam on the surface of the object along the target trajectory.

108. A processing system comprising:
a processing apparatus that is configured to irradiate an object with an energy beam to form a melt pool on the object; and
an imaging apparatus that is configured to generate a melt pool image by imaging the melt pool,
wherein
the imaging apparatus is configured to image the melt pool existing on a first position at a first time and the melt pool existing on a second position different from the first position at a second time different from the first time.
